# EUROPEAN PATENT APPLICATION

(11) **EP 4 823 093 A1**
(43) Date of publication of application: **14.10.2026**
(21) Application number: 24901185.9
(22) Date of filing: 08.12.2024
(51) Int. Cl.: H04N 19/20, H04N 19/70, H04N 19/169, G06N 3/08, G06F 21/62

(54) **METHOD FOR DECODING IMAGE INFORMATION, METHOD FOR ENCODING IMAGE INFORMATION, AND METHOD FOR TRANSMITTING BITSTREAM OF IMAGE INFORMATION**

(30) Priority: 08.12.2023 KR 20230177668; 16.01.2024 US 202463621125 P
(71) Applicant: LG Electronics Inc., Yeongdeungpo-gu Seoul 07336 (KR)
(72) Inventor: KIM, Chulkeun, Seoul 06772 (KR); LIM, Jaehyun, Seoul 06772 (KR); TAN, Hendry, Seoul 06772 (KR)
(74) Representative: Jung, Minkyu
(86) International application number: PCT/KR2024/096639
(87) International publication number: WO 2025/121999

(57) **Abstract**

This method for decoding image information may comprise: acquiring image information including information related to personal information protection; acquiring, on the basis of the information related to personal information protection, personal information protection type information indicating a personal information protection method; determining, on the basis of the personal information protection type information, a personal information protection method including at least one of blurring, masking and replacement; acquiring, on the basis of the information related to personal information protection, information to be protected, which indicates personal information to be protected; and determining, on the basis of the information to be protected, protected personal information including at least one from among information capable of identifying a person, information capable of identifying a vehicle, and information capable of identifying a place.

## Description

### [Technical Field]

The present disclosure relates to a method of decoding image information, a method of encoding image information, and a method of transmitting a bitstream of image information.

### [Background Art]

In recent years, demand for high-resolution, high-quality images such as HD (High Definition) images and UHD (Ultra High Definition) images has been increasing in various fields. As image data becomes higher in resolution and quality, the amount of information or bits transmitted increases relative to conventional image data. The increase in the amount of information or bits transmitted leads to an increase in transmission costs and storage costs.

Accordingly, there is a need for high-efficiency image compression technology for effectively transmitting, storing, and reproducing high-resolution, high-quality image information.

### [Disclosure]

### [Technical Problem]

The present disclosure is intended to provide a method of decoding image information, a method of encoding image information, and a method and apparatus of transmitting a bitstream of image information, which are capable of protecting personal information included in a picture.

The present disclosure is intended to provide a method of decoding image information, a method of encoding image information, and a method and apparatus of transmitting a bitstream of image information, which are capable of protecting the copyright of a copyrighted work included in a picture.

### [Technical Solution]

According to an aspect of the present disclosure, a method of decoding image information may include: obtaining image information including privacy protection-related information; obtaining, based on the privacy protection-related information, privacy protection type information indicating a privacy protection method; determining, based on the privacy protection type information, a privacy protection method including at least one of blurring, masking, or replacing; obtaining, based on the privacy protection-related information, information on a subject to be protected indicating protected personal information; and determining, based on the information on the subject to be protected, protected personal information including at least one of information that can identify a person, information that can identify a vehicle, or information that can identify a location.

Obtaining the privacy protection type information based on the privacy protection-related information may include obtaining the privacy protection type information based on a bitwise AND of a value of the privacy protection-related information and a predetermined first bitmask. In addition, obtaining the information on the subject to be protected based on the privacy protection-related information may include obtaining the information on the subject to be protected based on a bitwise AND of the value of the privacy protection-related information and the first bitmask.

The privacy protection-related information may include a privacy protection flag. Obtaining the privacy protection type information based on the privacy protection-related information may include obtaining the privacy protection type information based on a value of the privacy protection flag. Obtaining the information on the subject to be protected based on the privacy protection-related information may include obtaining the information on the subject to be protected based on the value of the privacy protection flag.

Determining the privacy protection method based on the privacy protection type information may include determining the privacy protection method as at least one of blurring, masking, or replacing, based on a bitwise AND of a value of the privacy protection type information and a predetermined second bitmask.

Determining the protected personal information based on the information on the subject to be protected may include determining the protected personal information as at least one of the information that can identify a person, the information that can identify a vehicle, or the information that can identify a location, based on a bitwise AND of a value of the information on the subject to be protected and a predetermined third bitmask.

The method may further include: obtaining copyright information indicating copyright information relating to a picture; and obtaining license information indicating a permitted scope of use of the picture.

The permitted scope of use may include at least one of academic use, non-commercial use, commercial use, and free use.

According to an aspect of the present disclosure, an apparatus for decoding image information may include a memory and a processor electrically connected to the memory. The processor may: obtain image information including privacy protection-related information; obtain, based on the privacy protection-related information, privacy protection type information indicating a privacy protection method; determine, based on the privacy protection type information, a privacy protection method including at least one of blurring, masking, or replacing; obtain, based on the privacy protection-related information, information on a subject to be protected indicating protected personal information; and determine, based on the information on the subject to be protected, protected personal information including at least one of information that can identify a person, information that can identify a vehicle, or information that can identify a location.

According to an aspect of the present disclosure, a method of encoding image information may include: determining a privacy protection method including at least one of blurring, masking, or replacing; generating privacy protection type information indicating the privacy protection method based on the privacy protection method; determining protected personal information including at least one of information that can identify a person, information that can identify a vehicle, or information that can identify a location; generating, based on the protected personal information, information on a subject to be protected indicating the protected personal information; generating privacy protection-related information based on the privacy protection type information and the information on the subject to be protected; and encoding image information including the privacy protection-related information.

According to an aspect of the present disclosure, an apparatus for encoding image information may include a memory and a processor electrically connected to the memory. The processor may: determine a privacy protection method including at least one of blurring, masking, or replacing; generate privacy protection type information indicating the privacy protection method based on the privacy protection method; determine protected personal information including at least one of information that can identify a person, information that can identify a vehicle, or information that can identify a location; generate, based on the protected personal information, information on a subject to be protected indicating the protected personal information; generate privacy protection-related information based on the privacy protection type information and the information on the subject to be protected; and encode image information including the privacy protection type information, the information on the subject to be protected, and the privacy protection-related information.

According to an aspect of the present disclosure, a method of transmitting a bitstream of image information may include: encoding the image information including privacy protection type information, information on a subject to be protected, and privacy protection-related information; and transmitting data including the bitstream of the image information. Here, a privacy protection method including at least one of blurring, masking, or replacing may be determined, and the privacy protection type information indicating the privacy protection method may be generated based on the privacy protection method. Protected personal information including at least one of information that can identify a person, information that can identify a vehicle, or information that can identify a location may be determined, and the information on the subject to be protected indicating the protected personal information may be generated based on the protected personal information. The privacy protection-related information may be generated based on the privacy protection type information and the information on the subject to be protected.

According to an aspect of the present disclosure, an apparatus for transmitting a bitstream of image information may include a processor that encodes the image information including privacy protection type information, information on a subject to be protected, and privacy protection-related information, and a transmitter that transmits data including the bitstream of the image information. Here, a privacy protection method including at least one of blurring, masking, or replacing may be determined, and the privacy protection type information indicating the privacy protection method may be generated based on the privacy protection method. Protected personal information including at least one of information that can identify a person, information that can identify a vehicle, or information that can identify a location may be determined, and the information on the subject to be protected indicating the protected personal information may be generated based on the protected personal information. The privacy protection-related information may be generated based on the privacy protection type information and the information on the subject to be protected.

### [Advantageous Effects]

According to the present disclosure, there may be provided a method of decoding image information, a method of encoding image information, and a method and apparatus of transmitting a bitstream of image information, which are capable of protecting personal information included in a picture.

According to the present disclosure, there may be provided a method of decoding image information, a method of encoding image information, and a method and apparatus of transmitting a bitstream of image information, which are capable of protecting the copyright of a copyrighted work included in a picture.

The effects obtainable from the present disclosure are not limited to the effects mentioned above, and other effects not mentioned will be clearly understood by those of ordinary skill in the art to which the present disclosure belongs from the description below.

### [Description of Drawings]

FIG. 1 is a diagram schematically showing a VCM system to which embodiments of the present disclosure may be applied.
FIG. 2 is a diagram schematically showing a VCM pipeline structure to which embodiments of the present disclosure may be applied.
FIG. 3 is a diagram schematically showing an image/video encoder to which embodiments of the present disclosure may be applied.
FIG. 4 is a diagram schematically showing an image/video decoder to which embodiments of the present disclosure may be applied.
FIG. 5 is a flowchart schematically showing a feature/feature map encoding procedure to which embodiments of the present disclosure may be applied.
FIG. 6 is a flowchart schematically showing a feature/feature map decoding procedure to which embodiments of the present disclosure may be applied.
FIG. 7 is a diagram illustrating an example of a feature extraction method using a feature extraction network 700.
FIG. 8A is a diagram illustrating data distribution characteristics of a video source.
FIG. 8B is a diagram illustrating data distribution characteristics of a feature set.
FIG. 9 is a diagram illustrating transform and inverse transform processes to which embodiments of the present disclosure are applicable.
FIG. 10 is a diagram illustrating a quantization group according to an embodiment of the present disclosure.
FIG. 11 is a block diagram illustrating context-adaptive binary arithmetic coding (CABAC) for encoding one syntax element.
FIGS. 12 and 13 are diagrams illustrating an entropy encoding procedure.
FIGS. 14 and 15 are diagrams illustrating an entropy decoding procedure.
FIG. 16 is a diagram showing an example of a video coding for machines (VCM) layer architecture.
FIG. 17 is a diagram showing an example of a bitstream composed of encoded abstracted features and neural network abstraction layer (NNAL) information.
FIG. 18 illustrates an example of encoding optimization and encoded bitstream use involving privacy protection processing.
FIG. 19 illustrates an example of data attribute and privacy protection information definition.
FIG. 20 illustrates an example in which a region required for image analysis and a region containing personal information coexist.
FIG. 21 is a diagram illustrating a method of decoding image information according to an embodiment of the present disclosure.
FIG. 22 is a diagram illustrating a method of encoding image information according to an embodiment of the present disclosure.
FIG. 23 is a diagram showing an example of a content streaming system to which embodiments of the present disclosure may be applied.
FIG. 24 is a diagram showing another example of a content streaming system to which embodiments of the present disclosure may be applied.

### [Modes of the Invention]

Hereinafter, embodiments of the present disclosure will be described in detail by referring to the attached drawings for those of ordinary skill in the art to easily implement them. However, the present disclosure may be implemented in various different forms and is not limited to the embodiments described herein.

In describing embodiments of the present disclosure, detailed explanations of well-known configurations or functions are omitted when they are deemed to obscure the main point of the present disclosure. Additionally, parts irrelevant to the description of the present disclosure are omitted from the drawings, and similar reference numerals have been assigned to similar parts.

In the present disclosure, when a certain component is described as being "connected," "coupled," or "linked" to another component, this may include not only a direct connection but also an indirect connection where another component may exist in the middle. Additionally, when a certain component is described as "including" or "having" another component, this means that, unless explicitly stated otherwise, it does not exclude other components but may further include additional components.

In the present disclosure, the terms first, second, etc. are used solely for the purpose of distinguishing one component from another and do not limit the order or importance of the components unless explicitly stated otherwise. Accordingly, a first component in one embodiment may be referred to as a second component in another embodiment, and similarly, a second component in one embodiment may be referred to as a first component in another embodiment within the range of the present disclosure.

In the present disclosure, distinguishable components are described to clearly explain their respective characteristics and do not necessarily mean that the components are separate. In other words, a plurality of components may be integrated into a single hardware or software unit, or a single component may be distributed across multiple hardware or software units. Accordingly, without explicitly describing them, such integrated or distributed embodiments are also included in the range of the present disclosure.

In the present disclosure, the components described in various embodiments do not necessarily mean essential components, and some may be optional components. Accordingly, embodiments composed of a subset of the components described in one embodiment are also included in the range of the present disclosure. Additionally, embodiments that include additional components beyond those described in various embodiments are also included in the range of the present disclosure.

The present disclosure relates to the encoding and decoding of images, and the terms used herein may have the ordinary meanings commonly used in the field of technology to which this disclosure belongs unless the terms are newly defined in the present disclosure.

The present disclosure may be applied to a method disclosed in the Versatile Video Coding (VVC) standard and/or the Video Coding for Machines (VCM) standard. In addition, the present disclosure may be applied to a method disclosed in the essential video coding (EVC) standard, the AOMedia Video 1 (AV1) standard, the 2nd generation of audio video coding standard (AVS2) or the next-generation video/image coding standard (e.g., H.267 or H.268, etc.).

The present disclosure presents various embodiments related to video/image coding, and unless otherwise stated, the embodiments may be performed in combination with each other. In the present disclosure, "video" may refer to a set of images in sequence over time. "Image" may be information generated by artificial intelligence (AI). Input information used in a process in which AI performs a series of tasks, information generated in an information processing process and output information may be used as an image. In the present disclosure, "picture" generally refers to a unit representing a single image at a specific point in time and a slice/a tile is an encoding unit that constructs a part of a picture. One picture may be composed of at least one slice/tile. In addition, a slice/a tile may include at least one coding tree unit (CTU). The CTU may be partitioned into at least one CU. A tile is a rectangular area existing within a specific tile row and a specific tile column within a picture, and may be composed of a plurality of CTUs. A tile column may be defined as a rectangular area of CTUs, and may have the same height as the height of a picture and have a width specified by a syntax element signaled from a bitstream part such as a picture parameter set. A tile row may be defined as a rectangular area of CTUs, and may have the same width as the width of a picture and a height specified by a syntax element signaled from a bitstream part such as a picture parameter set. A tile scan is a predetermined sequential ordering method of CTUs that partition a picture. Here, CTUs may be sequentially ordered according to a CTU raster scan within a tile, and tiles within a picture may be sequentially ordered according to raster scan order of tiles in a picture. A slice may include an integer number of complete tiles or an integer number of sequential complete CTU rows within a tile of a picture. A slice may be included exclusively in a single NAL unit. One picture may be composed of at least one tile group. One tile group may include at least one tile. A brick may represent a rectangular area of CTU rows within a tile in a picture. A tile may include at least one brick. A brick may represent a rectangular area of CTU rows within a tile. One tile may be partitioned into a plurality of bricks, and each brick may include at least one CTU row belonging to a tile. A tile that is not partitioned into a plurality of bricks may also be treated as a brick.

In the present disclosure, "pixel" or "pel" may refer to the smallest unit that constitutes one picture (or image). Additionally, the term "sample" may be used as a corresponding term for a pixel. A sample may generally represent a pixel or the value of a pixel and may indicate only the pixel/pixel value of a luma component or only the pixel/pixel value of a chroma component.

In an embodiment, especially when applied to VCM, a pixel/a pixel value may represent the pixel/pixel value of a component generated through the independent information or combination, synthesis and analysis of each component when there is a picture composed of a set of components with different characteristics and meaning. For example, in RGB input, it may represent only the pixel/pixel value of R, may represent only the pixel/pixel value of G, or may represent only the pixel/pixel value of B. For example, it may represent only the pixel/pixel value of a luma component synthesized by using R, G and B components. For example, it may represent only the pixel/pixel value of information or an image extracted through the analysis of R, G and B components.

In the present disclosure, "unit" may refer to a basic unit of image processing. A unit may include at least one of a specific area of a picture or information related to the area. One unit may include one luma block and two chroma (e.g., Cb, Cr) blocks. Depending on the context, the term "unit" may be used interchangeably with "sample array," "block," "area," etc. In general, an M×N block may include a set (or array) of samples (or a sample array) or a set (or array) of transform coefficients, consisting of M columns and N rows. In an embodiment, in particular, when it is applied to VCM, a unit may represent a basic unit including information for performing a specific task.

In the present disclosure, the term "current block" may refer to one of "current coding block", "current coding unit", "encoding target block", "decoding target block", or "processing target block". When prediction is performed, "current block" may refer to "current prediction block" or "prediction target block". When transform (inverse transform)/quantization (dequantization) is performed, "current block" may refer to "current transform block" or "transform target block". When filtering is performed, "current block" may refer to "filtering target block".

In addition, in the present disclosure, "current block" may refer to "luma block of current block" unless it is explicitly stated as a chroma block. "Chroma block of current block" may be expressed by explicitly including an explicit description of a chroma block such as "chroma block" or "current chroma block".

In the present disclosure, "/" and "," may refer to "and/or". For example, "A/B" and "A, B" may refer to "A and/or B". Additionally, "A/B/C" and "A, B, C" may refer to "at least one of A, B, and/or C".

In the present disclosure, "or" may refer to "and/or". For example, "A or B" may mean 1) "A" only, 2) "B" only, or 3) "A and B." Alternatively, in the present disclosure, "or" may also mean "additionally or alternatively".

The present disclosure relates to video/image coding for machines (VCM).

VCM refers to a compression technology that encodes/decodes a part of a source image/video or information obtained from a source image/video for the purpose of machine vision. In VCM, an encoding/decoding target may be referred to as a feature. A feature may refer to information extracted from a source image/video based on a task purpose, a requirement, a neighboring environment, etc. A feature may have a different information form from a source image/video, and accordingly, a feature compression method and expression format may also be different from a video source.

VCM may be applied to various application fields. For example, in a surveillance system that recognizes and tracks objects or persons, VCM may be used to store or transmit object recognition information. In addition, in an intelligent transportation or smart traffic system, VCM may be used to transmit vehicle location information collected from GPS, sensing information collected from LIDAR, radar, etc. and various vehicle control information to other vehicles or infrastructure. In addition, in a smart city field, VCM may be used to perform the individual task of an interconnected sensor node or device.

The present disclosure provides various embodiments regarding feature/feature map coding. Unless otherwise specifically stated, embodiments of the present disclosure may be implemented individually or may be implemented in combination of at least two.

### Overview of VCM System

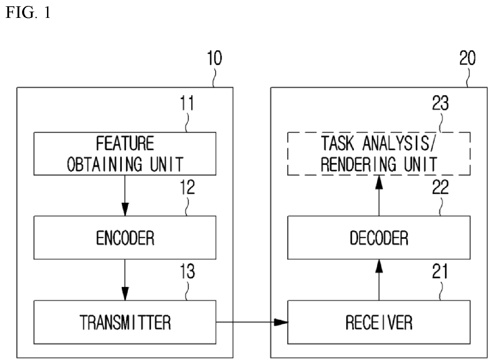

FIG. 1 is a diagram schematically showing a VCM system to which embodiments of the present disclosure may be applied.

Referring to FIG. 1, a VCM system may include an encoding apparatus 10 and a decoding apparatus 20.

An encoding apparatus 10 may compress/encode a feature/a feature map extracted from a source image/video to generate a bitstream, and transmit a generated bitstream to a decoding apparatus 20 through a storage medium or a network. An encoding apparatus 10 may also be referred to as a feature encoding apparatus. In a VCM system, a feature/a feature map may be generated in each hidden layer of a neural network. The size and number of channels of a generated feature map may vary depending on the type of a neural network or the location of a hidden layer. In the present disclosure, a feature map may be referred to as a feature set, and a feature or a feature map may be referred to as 'feature information'.

An encoding apparatus 10 may include a feature obtainer 11, an encoder 12 and a transmitter 13.

A feature obtainer 11 may obtain a feature/a feature map for a source image/video. According to an embodiment, a feature obtainer 11 may obtain a feature/a feature map from an external device, e.g., a feature extraction network. In this case, a feature obtainer 11 performs a feature reception interface function. Alternatively, a feature obtainer 11 may obtain a feature/a feature map by executing a neural network (e.g., CNN, DNN, etc.) by using a source image/video as an input. In this case, a feature obtainer 11 performs a feature extraction network function.

According to an embodiment, an encoding apparatus 10 may further include a source image generator (not shown) for obtaining a source image/video. A source image generator may be implemented by using an image sensor, a camera module, etc., and may obtain a source image/video through a process of capturing, synthesizing or generating an image/a video. In this case, a generated source image/video may be transmitted to a feature extraction network and used as input data for extracting a feature/a feature map.

An encoder 12 may encode a feature/a feature map obtained by a feature obtainer 11. An encoder 12 may perform a series of procedures such as prediction, transform, quantization, etc. to increase encoding efficiency. Encoded data (encoded feature/feature map information) may be output in the form of a bitstream. A bitstream including encoded feature/feature map information may be referred to as a VCM bitstream.

The transmitter 13 may obtain a feature/a feature map information or data output in the form of a bitstream, and may transmit the obtained information or data to a decoding apparatus 20 or another external object through a digital storage medium or a network in the form of a file or streaming. Here, the digital storage medium may include various storage medium such as USB, SD, CD, DVD, Blu-ray, HDD, SSD, etc. The transmitter 13 may include elements for generating a media file with a predetermined file format, or elements for transmitting data through a broadcasting/communication network. The transmitter 13 may be provided as a transmission device separate from the encoder 12, and in this case, the transmission device may include at least one processor for obtaining a feature/a feature map information or data output in the form of a bitstream, and a transmitter for transmitting it in the form of a file or streaming.

A decoding apparatus 20 may obtain feature/feature map information from an encoding apparatus 10 and reconstruct a feature/a feature map based on obtained information.

A decoding apparatus 20 may include a receiver 21 and a decoder 22.

A receiver 21 may receive a bitstream from an encoding apparatus 10 and obtain feature/feature map information from a received bitstream to transmit it to a decoder 22.

A decoder 22 may decode a feature/a feature map based on obtained feature/feature map information. A decoder 22 may perform a series of procedures such as dequantization, inverse transform, prediction, etc. corresponding to the operation of an encoder 14 to increase decoding efficiency.

According to an embodiment, a decoding apparatus 20 may further include a task analysis/rendering unit 23.

A task analysis/rendering unit 23 may perform task analysis based on a decoded feature/feature map. In addition, a task analysis/rendering unit 23 may render a decoded feature/feature map into a form suitable for performing a task. Based on a task analysis result and a rendered feature/feature map, various machine(-oriented) tasks may be performed.

Accordingly, a VCM system may encode/decode a feature extracted from a source image/video according to a user and/or machine request, a task purpose and a neighboring environment, and perform various machine(-oriented) tasks based on a decoded feature. A VCM system may also be implemented by extending/redesigning a video/image coding system, and may perform various encoding/decoding methods defined in the VCM standard.

### VCM Pipeline

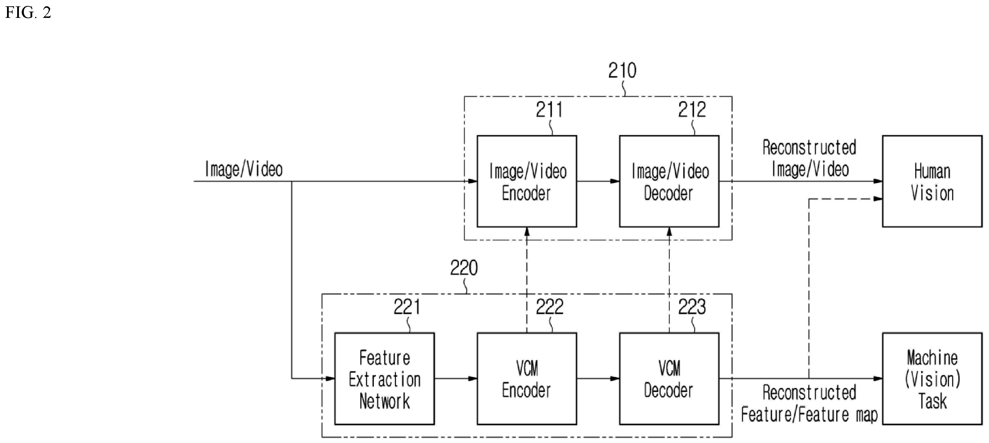

FIG. 2 is a diagram schematically showing a VCM pipeline structure to which embodiments of the present disclosure may be applied.

Referring to FIG. 2, a VCM pipeline 200 may include a first pipeline 210 for encoding/decoding an image/a video and a second pipeline 220 for encoding/decoding a feature/a feature map. In the present disclosure, a first pipeline 210 may be referred to as a video codec pipeline, and a second pipeline 220 may be referred to as a feature codec pipeline.

A first pipeline 210 may include a first stage 211 for encoding an input image/video and a second stage 212 for decoding an encoded image/video to generate a reconstructed image/video. A reconstructed image/video may be used for human viewing, i.e., human vision.

A second pipeline 220 may include a third stage 221 for extracting a feature/a feature map from an input image/video, a fourth stage 222 for encoding an extracted feature/feature map and a fifth stage 223 for decoding an encoded feature/feature map to generate a reconstructed feature/feature map. A reconstructed feature/feature map may be used for a machine (vision) task. Here, a machine (vision) task may refer to a task in which an image/a video is consumed by a machine. A machine (vision) task may be applied to a service scenario such as, for example, surveillance, intelligent transportation, smart city, intelligent industry, intelligent content, etc. According to an embodiment, a reconstructed feature/feature map may also be used for human vision.

According to an embodiment, a feature/a feature map encoded in a fourth stage 222 may be transmitted to a first stage 221 and used to encode an image/a video. In this case, an additional bitstream may be generated based on an encoded feature/feature map, and a generated additional bitstream may be transmitted to a second stage 222 and used to decode an image/a video.

According to an embodiment, a feature/a feature map decoded in a fifth stage 223 may be transmitted to a second stage 222 and used to decode an image/a video.

Although FIG. 2 shows a case in which a VCM pipeline 200 includes a first pipeline 210 and a second pipeline 220, this is just exemplary and the embodiments of the present disclosure are not limited thereto. For example, a VCM pipeline 200 may include only a second pipeline 220 or a second pipeline 220 may be extended to a plurality of feature codec pipelines.

Meanwhile, in a first pipeline 210, a first stage 211 may be performed by an image/video encoder, and a second stage 212 may be performed by an image/video decoder. In addition, in a second pipeline 220, a third stage 221 may be performed by a VCM encoder (or, a feature/feature map encoder), and a fourth stage 222 may be performed by a VCM decoder (or, a feature/feature map decoder). Hereinafter, an encoder/decoder structure is described in detail.

### Encoder

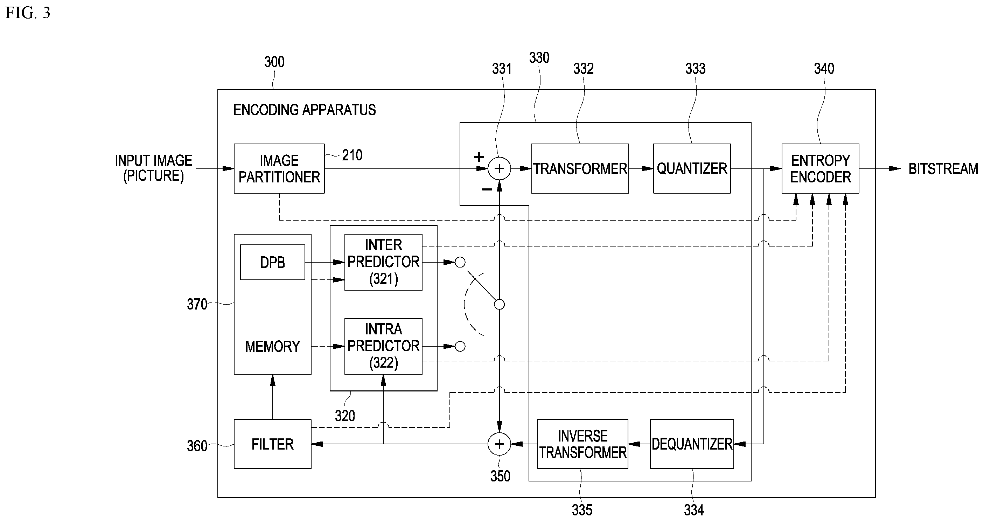

FIG. 3 is a diagram schematically showing an image/video encoder to which embodiments of the present disclosure may be applied.

Referring to FIG. 3, an image/video encoder 300 may include an image partitioner 310, a predictor 320, a residual processor 330, an entropy encoder 340, an adder 350, a filter 360 and a memory 370. A predictor 320 may include an inter predictor 321 and an intra predictor 322. A residual processor 330 may include a transformer 332, a quantizer 333, a dequantizer 334 and an inverse transformer 335. A residual processor 330 may further include a subtractor 331. An adder 350 may be referred to as a reconstructor or a reconstructed block generator. An image partitioner 310, a predictor 320, a residual processor 330, an entropy encoder 340, an adder 350 and a filter 360 described above may be configured by at least one hardware component (e.g., an encoder chipset or a processor) according to an embodiment. In addition, a memory 370 may include a decoded picture buffer (DPB) and may be configured by a digital storage medium. A hardware component described above may further include a memory 370 as an internal/external component.

An image partitioner 310 may partition an input image (or picture, frame) input to an image/video encoder 300 into at least one processing unit. As an example, a processing unit may be referred to as a coding unit (CU). A coding unit may be recursively partitioned from a coding tree unit (CTU) or a largest coding unit (LCU) according to a quad-tree binary-tree ternary-tree (QTBTTT) structure. For example, one coding unit may be partitioned into a plurality of coding units of deeper depth based on a quad-tree structure, a binary-tree structure and/or a ternary structure. In this case, for example, a quad-tree structure may be applied first and a binary tree structure and/or a ternary structure may be applied later. Alternatively, a binary tree structure may be applied first. An image/video coding procedure according to the present disclosure may be performed based on a final coding unit that is no longer partitioned. In this case, the maximum coding unit may be used as a final coding unit based on coding efficiency according to image characteristics, etc. or if necessary, a coding unit may be recursively partitioned into coding units of deeper depth and a coding unit of an optimal size may be used as a final coding unit. Here, a coding procedure may include a procedure such as prediction, transform, reconstruction, etc. described later. As another example, a processing unit may further include a prediction unit (PU) or a transform unit (TU). In this case, a prediction unit and a transform unit may be divided or partitioned from a final coding unit described above, respectively. A prediction unit may be a unit of sample prediction, and a transform unit may be a unit for deriving a transform coefficient and/or a unit for deriving a residual signal from a transform coefficient.

A unit may be used interchangeably with a term such as a block, an area, etc. in some cases. In general, a MxN block may represent a set of transform coefficients or samples consisting of M columns and N rows. A sample may generally represent a pixel or a pixel value, or may represent only the pixel/pixel value of a luma component, or may represent only the pixel/pixel value of a chroma component. A sample may be used as a term corresponding to a pixel or a pel.

An image/video encoder 300 may generate a residual signal (a residual block, a residual sample array) by subtracting a prediction signal (a predicted block, a prediction sample array) output from an inter predictor 321 or an intra predictor 322 from an input image signal (an original block, an original sample array), and a generated residual signal is transmitted to a transformer 332. In this case, as shown, a unit that subtracts a prediction signal (a prediction block, a prediction sample array) from an input image signal (an original block, an original sample array) within an image/video encoder 300 may be referred to as a subtractor 331. A predictor may perform prediction on a block to be processed (hereinafter, referred to as a current block) and generate a predicted block including prediction samples for a current block. A predictor may determine whether intra prediction or inter prediction is applied in a unit of a current block or a CU. A predictor may generate various information related to prediction such as prediction mode information, etc. and transmit it to an entropy encoder 340. Prediction-related information may be encoded by an entropy encoder 340 and may be output in the form of a bitstream.

An intra predictor 322 may predict a current block by referring to samples within a current picture. In this case, referenced samples may be located in the neighboring area of a current block or may be located farther away according to a prediction mode. In intra prediction, prediction modes may include a plurality of non-directional modes and a plurality of directional modes. A non-directional mode may include, for example, a DC mode and a planar mode. A directional mode may include, for example, 33 directional prediction modes or 65 directional prediction modes according to the granularity of a prediction direction. However, this is an example, and a greater or fewer number of directional prediction modes may be used according to a configuration. An intra predictor 322 may also determine a prediction mode applied to a current block by using a prediction mode applied to a neighboring block.

An inter predictor 321 may derive a predicted block for a current block based on a reference block (a reference sample array) specified by a motion vector on a reference picture. In this case, in order to reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on an inter prediction direction (L0 prediction, L1 prediction, Bi prediction, etc.). In inter prediction, neighboring block may include spatial neighboring block present within the current picture and temporal neighboring block present in the reference picture. A reference picture including a reference block and a reference picture including a temporal neighboring block may be the same or different. A temporal neighboring block may be referred to as a collocated reference block or a collocated CU (colCU), and a reference picture including a temporal neighboring block may be referred to as a collocated picture (colPic). For example, an inter predictor 321 may construct a motion information candidate list based on neighboring blocks and generate information indicating which candidate is used to derive the motion vector and/or reference picture index of a current block. Inter prediction may be performed based on various prediction modes, and for example, in a skip mode and a merge mode, an inter predictor 321 may use the motion information of a neighboring block as the motion information of a current block. In a skip mode, unlike a merge mode, a residual signal may not be transmitted. In a motion vector prediction (MVP) mode, the motion vector of a neighboring block may be used as a motion vector predictor, and the motion vector of a current block may be indicated by signaling a motion vector difference.

A predictor 320 may generate a prediction signal based on various prediction methods. For example, a predictor may apply intra prediction or inter prediction for prediction for one block, and may also apply both intra prediction and inter prediction simultaneously. It may be referred to as combined inter and intra prediction (CIIP). In addition, a predictor may be based on an intra block copy (IBC) prediction mode or a palette mode for prediction for a block. An IBC prediction mode or a palette mode may be used for content image/video coding, for example, such as screen content coding (SCC), etc. IBC basically performs prediction within the current picture, but since it derives a reference block within the current picture, it may operate similarly to inter prediction. In other words, IBC may use at least one of the inter prediction methods described in the present disclosure. A palette mode may be considered as an example of intra coding or intra prediction. When a palette mode is applied, a sample value within a picture may be signaled based on information related to a palette table and a palette index.

A prediction signal generated by a predictor 320 may be used to generate a reconstructed signal or to generate a residual signal. A transformer 332 may generate transform coefficients by applying a transform method to a residual signal. For example, a transform method may include at least one of Discrete Cosine Transform (DCT), Discrete Sine Transform (DST), Karhunen-Loeve Transform (KLT), Graph-Based Transform (GBT), or Conditionally Non-linear Transform (CNT). Here, GBT refers to a transform obtained from a graph when the relationship information between pixels is represented as a graph. CNT refers to a transform obtained based on a prediction signal generated by using all previously reconstructed pixels. In addition, a transform process may be applied to a pixel block of the same square size or to a non-square variable-sized block.

A quantizer 333 may quantize transform coefficients and transmit them to an entropy encoder 340, and an entropy encoder 340 may encode a quantized signal (information on quantized transform coefficients) and output it as a bitstream. Information on quantized transform coefficients may be referred to as residual information. A quantizer 333 may reorder block-shaped quantized transform coefficients in the form of a one-dimensional vector based on a coefficient scan order, and may generate information on quantized transform coefficients based on quantized transform coefficients in the form of a one-dimensional vector. An entropy encoder 340 may perform various encoding methods such as exponential Golomb, context-adaptive variable length coding (CAVLC), context-adaptive binary arithmetic coding (CABAC), etc. An entropy encoder 340 may encode not only quantized transform coefficients but also information necessary for video/image reconstruction (e.g., the value of syntax elements, etc.) together or separately. Encoded information (E.G., encoded video/image information) may be transmitted or stored in the form of a bitstream in a network abstraction layer (NAL) unit. Image/video information may further include information on various parameter sets such as an adaptation parameter set (APS), a picture parameter set (PPS), a sequence parameter set (SPS) or a video parameter set (VPS), etc. In addition, video/image information may further include general constraint information. In addition, image/video information may further include a method for generating and using encoded information, a purpose thereof, etc. In the present disclosure, information and/or syntax elements transmitted/signaled from an image/video encoder to an image/video decoder may be included in image/video information. Image/video information may be encoded through an encoding procedure described above and included in a bitstream. A bitstream may be transmitted through a network or stored in a digital storage medium. Here, the network may include a broadcast network and/or a communication network, etc., and the digital storage medium may include various storage media such as USB, SD, CD, DVD, Blu-ray, HDD, SSD, etc. A transmitter (not shown) for transmitting and/or a storage unit (not shown) for storing a signal output from an entropy encoder 340 may be constructed as an internal/external element of an image/video encoder 300 or a transmitter may be included in an entropy encoder 340.

The quantized transform coefficients output from a quantizer 333 may be used to generate a prediction signal. For example, a residual signal (a residual block or residual samples) may be reconstructed by applying dequantization and inverse transform to quantized transform coefficients through a dequantizer 334 and an inverse transformer 335. An adder 350 may generate a reconstructed signal (a reconstructed picture, a reconstructed block, a reconstructed sample array) by adding a reconstructed residual signal to a prediction signal output from an inter predictor 321 or an intra predictor 322. When there is no residual for a processing target block, such as when a skip mode is applied, a predicted block may be used as a reconstructed block. An adder 350 may be referred to as a reconstructor or a reconstructed block generator. A generated reconstructed signal may be used for intra prediction of the next processing target block within a current picture and, as described later, may also be used for inter prediction of the next picture through filtering.

Meanwhile, luma mapping with chroma scaling may be applied in a picture encoding and/or reconstruction process.

A filter 360 may apply filtering to a reconstructed signal to enhance subjective/objective image quality. For example, a filter 360 may apply various filtering methods to a reconstructed picture to generate a modified reconstructed picture, and may store a modified reconstructed picture in a memory 370, specifically in the DPB of a memory 370. Various filtering methods may include, for example, deblocking filtering, a sample adaptive offset, an adaptive loop filter, a bilateral filter, etc. A filter 360 may generate various filtering-related information and transmit it to an entropy encoder 340. The filtering-related information may be encoded by an entropy encoder 340 and output in the form of a bitstream.

A modified reconstructed picture transmitted to a memory 370 may be used as a reference picture in an inter predictor 321. Through this, it may avoid prediction mismatch on an encoder side and a decoder side and may improve encoding efficiency.

The DPB of a memory 370 may store a modified reconstructed picture for use as a reference picture in an inter predictor 321. A memory 370 may store the motion information of a block where motion information within a current picture is derived (or, encoded) and/or the motion information of blocks within an already reconstructed picture. The stored motion information may be transmitted to an inter predictor 321 for use as motion information of a spatial neighboring block or a temporal neighboring block. A memory 370 may store the reconstructed samples of reconstructed blocks in a current picture and transmit stored reconstructed samples to an intra predictor 322.

Meanwhile, a VCM encoder (or a feature/feature map encoder) may have a structure identical/similar to an image/video encoder 300 basically described by referring to FIG. 3 in that it performs a series of procedures such as prediction, transform, quantization, etc. to encode a feature/a feature map. However, a VCM encoder is different from an image/video encoder 300 in that it targets a feature/a feature map for encoding, and accordingly, it may be different in the name of each unit (or, component) (e.g., an image partitioner 310, etc.) and its specific operation details from an image/video encoder 300. The specific operation details of a VCM encoder will be described in detail later.

### Decoder

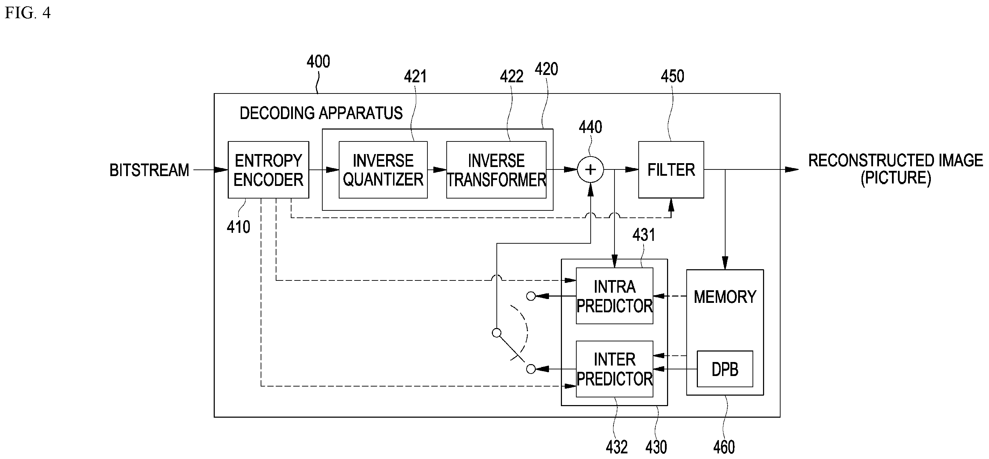

FIG. 4 is a diagram schematically showing an image/video decoder to which embodiments of the present disclosure may be applied.

Referring to FIG. 4, an image/video decoder 400 may include an entropy decoder 410, a residual processor 420, a predictor 430, an adder 440, a filter 450 and a memoery 460. A predictor 430 may include an inter predictor 431 and an intra predictor 432. A residual processor 420 may include a dequantizer 421 and an inverse transformer 422. An entropy decoder 410, a residual processor 420, a predictor 430, an adder 440 and a filter 450 described above may be configured by one hardware component (e.g., a decoder chipset or a processor) according to an embodiment. In addition, a memory 460 may include a decoded picture buffer (DPB) and may be configured by a digital storage medium. A hardware component may further include a memory 460 as an internal/external component.

When a bitstream including video/image information is input, an image/video decoder 400 may reconstruct an image/a video in response to a process in which image/video information is processed in an image/video encoder 300 of FIG. 3. For example, an image/video decoder 400 may derive units/blocks based on block partition-related information obtained from a bitstream. An image/video decoder 400 may perform decoding by using a processing unit applied in an image/video encoder. Accordingly, the processing unit of decoding may be, for example, a coding unit, and a coding unit may be partitioned according to a quad tree structure, a binary tree structure and/or a ternary tree structure from a coding tree unit or a largest coding unit. At least one transform unit may be derived from a coding unit. And, a reconstructed image signal decoded and output through an image/video decoder 400 may be played back through a playback device.

An image/video decoder 400 may receive a signal output from an encoder in FIG. 3 in the form of a bitstream, and a received signal may be decoded through an entropy decoder 410. For example, an entropy decoder 410 may parse a bitstream to derive information necessary for image reconstruction (or picture reconstruction) (e.g., video/image information). The video/image information may further include information on various parameter sets such as an adaptation parameter set (APS), a picture parameter set (PPS), a sequence parameter set (SPS), a video parameter set (VPS), etc. In addition, the video/image information may further include general constraint information. In addition, the image/video information may include the generation method, use method, purpose, etc. of decoded information. An image/video decoder 400 may decode a picture further based on information on a parameter set and/or general constraint information. The signaled/received information and/or syntax elements may be decoded through a decoding procedure and obtained from a bitstream. For example, an entropy decoder 410 may decode information in a bitstream based on a coding method such as exponential Golomb encoding, CAVLC, or CABAC, etc. and may output the values of a syntax element necessary for image reconstruction and quantized values of a transform coefficient related to a residual. More specifically, a CABAC entropy decoding method may receive a bin corresponding to each syntax element in a bitstream, determine a context model by using the information of a decoding target syntax element, the decoding information of neighboring and decoding target blocks or the information of a symbol/a bin decoded in a previous step, and predict the probability of bin occurrence according to a determined context model and perform arithmetic decoding of a bin to generate a symbol corresponding to the value of each syntax element. In this case, a CABAC entropy decoding method may update a context model by using the information of a decoded symbol/bin for the context model of the next symbol/bin after determining a context model. Among the information decoded by an entropy decoder 410, prediction-related information may be provided to a predictor (an inter predictor 432 and an intra predictor 431), and a residual value which is entropy decoded by an entropy decoder 410, i.e., quantized transform coefficients and related parameter information, may be input to a residual processor 420. A residual processor 420 may derive a residual signal (a residual block, residual samples, a residual sample array). In addition, among the information decoded by an entropy decoder 410, filtering-related information may be provided to a filter 450. Meanwhile, a receiver (not shown) that receives a signal output from an image/video encoder may be additionally constructed as an internal/external element of an image/video decoder 400 or a receiver may be a component of an entropy decoder 410. Meanwhile, an image/video decoder according to the present disclosure may also be referred to as an image/video decoding apparatus, and an image/video decoder may be divided into an information decoder (an image/video information decoder) and/or a sample decoder (an image/video sample decoder) . In this case, an information decoder may include an entropy decoder 410, and a sample decoder may include at least one of a dequantizer 321, an inverse transformer 322, an adder 440, a filter 450, a memory 460, an inter predictor 432 and an intra predictor 431.

A dequantizer 421 may dequantize quantized transform coefficients and output transform coefficients. A dequantizer 421 may reorder quantized transform coefficients in the form of a two-dimensional block. In this case, reordering may be performed based on the coefficient scan order performed in an image/video encoder. A dequantizer 321 may perform dequantization on quantized transform coefficients by using a quantization parameter (i.e., quantization step size information), and may obtain transform coefficients.

An inverse transformer 422 may perform an inverse transform on transform coefficients to obtain a residual signal (a residual block, a residual sample array).

A predictor 430 may perform prediction for a current block and generate a predicted block that includes prediction samples for a current block. A predictor may determine whether intra prediction or inter prediction is applied to a current block based on prediction-related information output from an entropy decoder 410 and may determine a specific intra/inter prediction mode (prediction method).

A predictor 420 may generate a prediction signal based on various prediction methods. For example, a predictor may apply not only intra prediction or inter prediction, but also intra prediction and inter prediction at the same time for prediction for one block. This may be called combined inter and intra prediction (CIIP). In addition, a predictor may be based on an intra block copy (IBC) prediction mode or a palette mode for prediction for a block. An IBC prediction mode or a palette mode may be used for content image/video coding of game such as screen content coding (SCC), etc. IBC basically performs prediction within a current picture, but it may be performed similarly to inter prediction in that it derives a reference block within a current picture. In other words, IBC may use at least one of the inter prediction techniques described in this document. A palette mode may be considered as an example of intra coding or intra prediction. When a palette mode is applied, information related to a palette table and a palette index may be included in image/video information and signaled.

An intra predictor 431 may predict a current block by referring to samples within a current picture. Referenced samples may be located in the neighborhood of a current block or may be located away from a current block according to a prediction mode. In intra prediction, prediction modes may include a plurality of non-directional modes and a plurality of directional modes. An intra predictor 431 may determine a prediction mode applied to a current block by using a prediction mode applied to a neighboring block.

An inter predictor 432 may derive a predicted block for a current block based on a reference block (a reference sample array) specified by a motion vector on a reference picture. In this case, to reduce the amount of motion information transmitted in the inter prediction mode, motion information may be predicted at the block, sub-block, or sample level based on the correlation of motion information between the neighboring block and the current block. Motion information may include a motion vector and a reference picture index. Motion information may further include information on the inter prediction direction (i.e., L0 prediction, L1 prediction, Bi prediction, etc.). In inter prediction, a neighboring block may include spatial neighboring block within the current picture and temporal neighboring block in the reference picture. For example, an inter predictor 432 may construct a motion information candidate list based on neighboring blocks and derive the motion vector and/or reference picture index of a current block based on received candidate selection information. Inter prediction may be performed based on various prediction modes, and prediction-related information may include information indicating an inter prediction mode for a current block.

An adder 440 may generate a reconstructed signal (a reconstructed picture, a reconstructed block, a reconstructed sample array) by adding an obtained residual signal to a prediction signal (a predicted block, a prediction sample array) output from a predictor (including an inter predictor 432 and/or an intra predictor 431). When there is no residual for a processing target block, such as when a skip mode is applied, a predicted block may be used as a reconstructed block.

An adder 440 may be referred to as a reconstructor or a reconstructed block generator. A generated reconstructed signal may be used for intra prediction of the next processing target block within a current picture, or as described later, may be output through filtering, or may be used for inter prediction of the next picture.

Meanwhile, luma mapping with chroma scaling may be applied in a picture decoding process.

A filter 450 may apply filtering to a reconstructed signal to enhance subjective/objective image quality. For example, a filter 450 may apply various filtering methods to a reconstructed picture to generate a modified reconstructed picture, and may transmit a modified reconstructed picture to a memory 460, specifically to the DPB of a memory 460. Various filtering methods may include, for example, deblocking filtering, a sample adaptive offset, an adaptive loop filter, a bilateral filter, etc.

A (modified) reconstructed picture stored in the DPB of a memory 460 may be used as a reference picture in an inter predictor 432. A memory 460 may store the motion information of a block where motion information within a current picture is derived (or decoded) and/or the motion information of blocks in an already reconstructed picture. The stored motion information may be transmitted to an inter predictor 432 to be used as motion information of a spatial neighboring block or a temporal neighboring block. A memory 460 may store the reconstructed samples of reconstructed blocks in a current picture and transmit them to an intra predictor 431.

Meanwhile, a VCM decoder (or, a feature/feature map decoder) may have a structure identical/similar to an image/video decoder 400 basically described above by referring to FIG. 4 in that it performs a series of procedures such as prediction, inverse transform, dequantization, etc. to decode a feature/a feature map. However, a VCM decoder is different from an image/video decoder 400 in that it targets a feature/a feature map for decoding, and accordingly, it may be different in the name of each unit (or, component) (e.g., DPB, etc.) and its specific operation details from an image/video decoder 400. The operation of a VCM decoder may correspond to the operation of a VCM encoder, and its specific operation details will be described in detail later.

### Feature/Feature Map Encoding Procedure

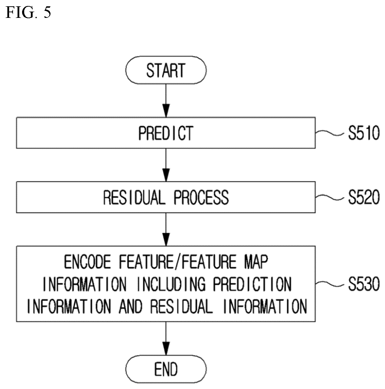

FIG. 5 is a flowchart schematically showing a feature/feature map encoding procedure to which embodiments of the present disclosure may be applied.

Referring to FIG. 5, a feature/feature map encoding procedure may include a prediction procedure S510, a residual processing procedure S520 and an information encoding procedure S530.

A prediction procedure S510 may be performed by a predictor 320 described above by referring to FIG. 3.

Specifically, an intra predictor 322 may predict a current block (i.e., a set of feature elements to be currently encoded) by referring to feature elements in a current feature/feature map. Intra prediction may be performed based on the spatial similarity of feature elements configuring a feature/a feature map. For example, feature elements included in the same region of interest (RoI) within an image/a video may be estimated to have similar data distribution characteristics. Accordingly, an intra predictor 322 may predict a current block by referring to pre-reconstructed feature elements within a region of interest including a current block. In this case, referenced feature elements may be located adjacent to a current block or may be located apart from a current block according to a prediction mode. Intra prediction modes for feature/feature map encoding may include a plurality of non-directional prediction modes and a plurality of directional prediction modes. The non-directional prediction modes may include, for example, prediction modes corresponding to the DC mode and planar mode of an image/video encoding procedure. In addition, directional modes may include, for example, prediction modes corresponding to 33 directional modes or 65 directional modes of an image/video encoding procedure. However, this is just an example, and the type and number of intra prediction modes may be configured/changed in various ways according to an embodiment

An inter predictor 321 may predict a current block based on a reference block (i.e., a set of referenced feature elements) specified by motion information on a reference feature/feature map. Inter prediction may be performed based on the temporal similarity of feature elements configuring a feature/a feature map. For example, temporally continuous features may have similar data distribution characteristics. Accordingly, an inter predictor 321 may predict a current block by referring to pre-reconstructed feature elements of a current feature and a temporally adjacent feature. In this case, motion information for specifying referenced feature elements may include a motion vector and a reference feature/feature map index. Motion information may further include information related to an inter prediction direction (e.g., L0 prediction, L1 prediction, Bi prediction, etc.). For inter prediction, a neighboring block may include a spatial neighboring block existing in a current feature/feature map and a temporal neighboring block existing in a reference feature/feature map. A reference feature/feature map including a reference block and a reference feature/feature map including a temporal neighboring block may be the same or different. A temporal neighboring block may be referred to as a collocated reference block, etc., and a reference feature/feature map including a temporal neighboring block may be referred to as a collocated feature/feature map. An inter predictor 321 may configure a motion information candidate list based on neighboring blocks and generate information indicating which candidate is used to derive the motion vector and/or reference feature/feature map index of a current block. Inter prediction may be performed based on various prediction modes, and for example, for a skip mode and a merge mode, an inter predictor 321 may use the motion information of a neighboring block as the motion information of a current block. For a skip mode, unlike a merge mode, a residual signal may not be transmitted. For a motion vector prediction (MVP) mode, the motion vector of a neighboring block may be used as a motion vector predictor, and the motion vector of a current block may be indicated by signaling a motion vector difference. A predictor 320 may generate a prediction signal based on various prediction methods in addition to intra prediction and inter prediction described above.

A prediction signal generated by a predictor 320 may be used to generate a residual signal (a residual block, residual feature elements) S520. A residual processing procedure S520 may be performed by a residual processor 330 described above by referring to FIG. 3. And, (quantized) transform coefficients may be generated through a transform and/or quantization procedure for a residual signal, and an entropy encoder 340 may encode information related to (quantized) transform coefficients as residual information in a bitstream S530. In addition, an entropy encoder 340 may encode information necessary for feature/feature map reconstruction, e.g., prediction information (e.g., prediction mode information, motion information, etc.) in addition to residual information in a bitstream.

Meanwhile, a feature/feature map encoding procedure may further include a procedure for generating a reconstructed feature/feature map for a current feature/feature map and a procedure (optional) for applying in-loop filtering to a reconstructed feature/feature map as well as a procedure S530 for encoding information for feature/feature map reconstruction (e.g., prediction information, residual information, partitioning information, etc.) and outputting it in the form of a bitstream.

A VCM encoder may derive (modified) residual feature(s) from quantized transform coefficient(s) through dequantization and inverse transform, and may generate a reconstructed feature/feature map based on prediction feature(s) and (modified) residual feature(s) which are the output of S510. A reconstructed feature/feature map generated in this way may be the same as a reconstructed feature/feature map generated by a VCM decoder. When an in-loop filtering procedure is performed on a reconstructed feature/feature map, a modified reconstructed feature/feature map may be generated through an in-loop filtering procedure on a reconstructed feature/feature map. A modified reconstructed feature/feature map may be stored in a decoded feature buffer (DFB) or a memory and then, used as a reference feature/feature map in the prediction procedure of a feature/feature map. In addition, (in-loop) filtering-related information (parameter) may be encoded and output in the form of a bitstream. Through an in-loop filtering procedure, noise that may occur during feature/feature map coding may be removed, and feature/feature map-based task performance may be improved. In addition, an in-loop filtering procedure may be performed both on an encoder side and a decoder side to guarantee the identity of prediction result, improve the reliability of feature/feature map coding and reduce the amount of data transmission for feature/feature map coding.

### Feature/Feature Map Decoding Procedure

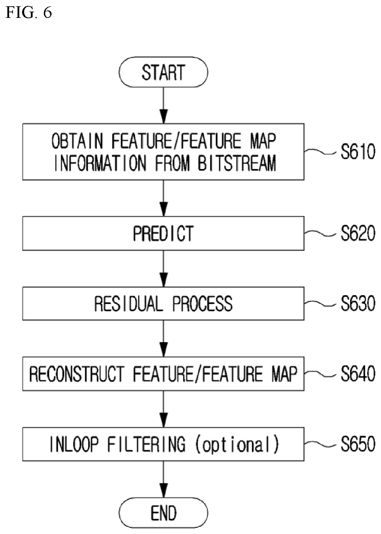

FIG. 6 is a flowchart schematically showing a feature/feature map decoding procedure to which embodiments of the present disclosure may be applied.

Referring to FIG. 6, a feature/feature map decoding procedure may include an image/video information acquisition procedure S610, a feature/feature map reconstruction procedure S620 to S640 and an in-loop filtering procedure S650 for a reconstructed feature/feature map. A feature/feature map reconstruction procedure may be performed based on a prediction signal and a residual signal obtained through the process of inter/intra prediction S620, residual processing S630 and dequantization and inverse transform for a quantized transform coefficient described in the present disclosure. A modified reconstructed feature/feature map may be generated through an in-loop filtering procedure for a reconstructed feature/feature map, and a modified reconstructed feature/feature map may be output as a decoded feature/feature map. A decoded feature/feature map may be stored in a decoded feature buffer (DFB) or a memory and then, used as a reference feature/feature map in an inter prediction procedure when decoding a feature/a feature map. In some cases, the above-described in-loop filtering procedure may be omitted. In this case, a reconstructed feature/feature map may be output as a decoded feature/feature map as it is, and may be stored in a decoded feature buffer (DFB) or a memory and then, used as a reference feature/feature map in an inter prediction procedure when decoding a feature/a feature map.

### Feature Extraction and Data Distribution Characteristic

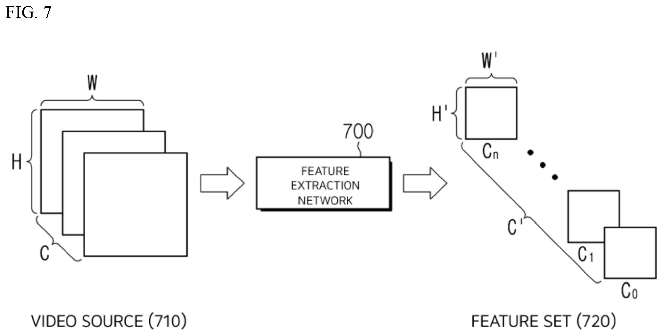

FIG. 7 is a diagram illustrating an example of a feature extraction method using a feature extraction network 700.

Referring to FIG. 7, the feature extraction network 700 may receive a video source (Image/Video, 710) and perform a feature extraction operation to output a feature set 720 of the video source 710. The feature set 720 may include a plurality of features (C0, C1, ..., Cn) extracted from the video source 710 and may be represented as a feature map. Each of the features (C0, C1, ..., Cn) may include a plurality of characteristic elements and may have different data distribution characteristics.

In FIG. 7, W, H, and C may respectively represent the width, height, and number of channels of the video source 710. Here, the number of channels C of the video source 710 may be determined based on the image format of the video source 710. For example, when the video source 710 has an RGB image format, the number of channels C of the video source 710 may be 3.

In addition, W', H', and C' may respectively represent the width, height, and number of channels of the feature set 720. The number of channels C' of the feature set 720 may be equal to the total number (n+1) of the features (C0, C1, ..., Cn) extracted from the video source 710. In one example, the number of channels C' of the feature set 720 may be greater than the number of channels C of the video source 710.

The properties (W', H', C') of the feature set 720 may vary depending on the properties (W, H, C) of the video source 710. For example, as the number of channels C of the video source 710 increases, the number of channels C' of the feature set 720 may also increase. In addition, the properties (W', H', C') of the feature set 720 may vary depending on the type and property of the feature extraction network 700. For example, when the feature extraction network 700 is implemented as an artificial neural network (e.g., CNN, DNN, etc.), the properties (W', H', C') of the feature set 720 may vary depending on the position of the layer that outputs each feature (C0, C1, ..., Cn).

The video source 710 and the feature set 720 may have different data distribution characteristics. For example, the video source 710 may generally consist of one channel (grayscale image) or three channels (RGB image). The pixels included in the video source 710 may have the same integer value range across all channels and may have non-negative values. In addition, each pixel value may be evenly distributed within a predetermined integer value range. In contrast, the feature set 720 may consist of various numbers of channels (e.g., 32, 64, 128, 256, 512, etc.) depending on the type (e.g., CNN, DNN, etc.) and layer position of the feature extraction network 700. Feature elements included in the feature set 720 may have different ranges of real values for each channel and may also have negative values. In addition, each feature element value may be densely distributed in a specific region within a predetermined real value range.

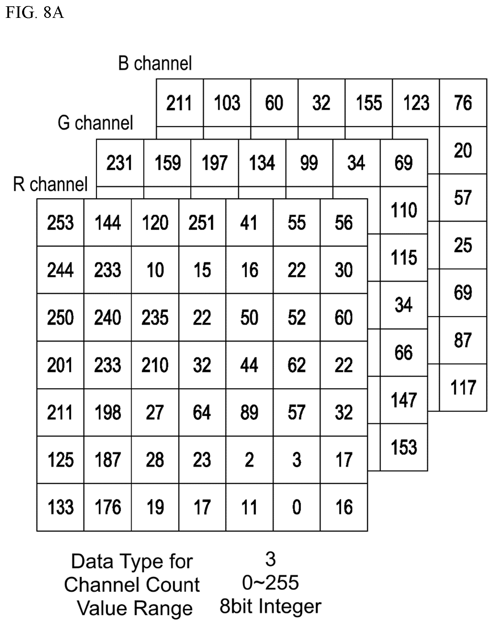

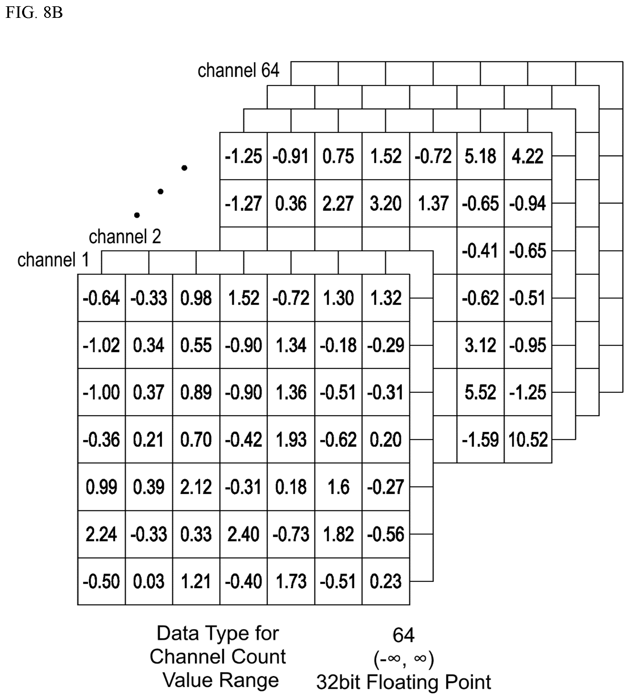

FIG. 8A is a diagram illustrating data distribution characteristics of a video source, and FIG. 8B is a diagram illustrating data distribution characteristics of a feature set.

Referring to FIG. 8A, the video source may consist of a total of three channels-R, G, and B channels (R channel, G channel, B channel)-and each pixel value may have an integer value range from 0 to 255. In this case, the data type of the video source may be represented as an 8-bit integer type.

In contrast, referring to FIG. 8B, the feature set may consist of 64 channels (features), and each feature element value may have a real value range from -∞ to +∞. In this case, the data type of the feature set may be represented as a 32-bit float type.

The feature set may have a feature element value of a float type and may have different data distribution characteristics for each channel (or feature). An example of the data distribution characteristics for each channel of the feature set is shown in Table 1.

**[Table 1]**

| Channel | Average(µ) | Standard derivation(σ) | Max | Min |
|---|---|---|---|---|
| C₀ | 10 | 20 | 90 | 60 |
| C₂ | 30 | 10 | 70.5 | -70.2 |
| ... | | | | |
| Cₙ | 100 | 5 | 115.8 | 80.2 |

Referring to Table 1, the feature set may consist of a total of n+1 channels (C₀, C₁, ..., Cₙ). The mean value (µ), standard deviation (σ), maximum value (Max), and minimum value (Min) of feature elements may differ for each channel (C₀, C₁, ..., Cₙ). For example, the mean value (µ) of the feature elements included in channel 0 (C₀) may be 10, the standard deviation (σ) may be 20, the maximum value (Max) may be 90, and the minimum value (Min) may be 60. In addition, the mean value (µ) of the feature elements included in channel 1 (C₁) may be 30, the standard deviation (σ) may be 10, the maximum value (Max) may be 70.5, and the minimum value (Min) may be -70.2. Furthermore, the mean value (µ) of the feature elements included in channel n (Cₙ) may be 100, the standard deviation (σ) may be 5, the maximum value (Max) may be 115.8, and the minimum value (Min) may be 80.2.

Quantization of a feature/feature map may be performed based on different data distribution characteristics for each channel, as described above. Feature/feature map data of a float type may be converted into an integer type through quantization.

Meanwhile, due to spatiotemporal similarity between consecutive frames, feature sets and/or channels that are consecutively extracted from a video source may have identical/similar data distribution characteristics. An example of data distribution characteristics of consecutive feature sets is shown in Table 2.

**[Table 2]**

| Feture set | Average(µ) | Standard derivation(σ) | Max | Min |
|---|---|---|---|---|
| f_{F0} | 50 | 10 | 110.5 | 10.7 |
| f_{F1} | 52 | 11 | 120.5 | 11.5 |
| f_{F2} | 53 | 10 | 115 | 5 |

In Table 2, f_{F0} denotes a first feature set extracted from frame 0 (F0), f_{F1} denotes a second feature set extracted from frame 1 (F1), and fF2 denotes a third feature set extracted from frame 2 (F2).

Referring to Table 2, the consecutive first to third feature sets (f_{F0}, f_{F1}, f_{F2}) may have identical/similar mean values (µ), standard deviations (σ), maximum values (Max), and minimum values (Min).

In addition, due to spatiotemporal similarity between consecutive frames, corresponding channels within feature sets consecutively extracted from a video source may have identical/similar data distribution characteristics. An example of the data distribution characteristics of corresponding channels of consecutive feature sets is shown in Table 3.

**[Table 3]**

| Feture set | Average(µ) | Standard derivation(σ) | Max | Min |
|---|---|---|---|---|
| f_{F0C0} | 40 | 10 | 110.5 | 10.7 |
| f_{F1C0} | 40 | 11 | 111.5 | 11.5 |

In Table 3, f_{F0C0} denotes the first channel within the first feature set extracted from frame 0 (F0), and f_{F1C0} denotes the first channel within the second feature set extracted from frame 1 (F1).

Referring to Table 3, the first channel (f_{F0C0}) of the first feature set and the second channel (f_{F0C1}) of the second feature set corresponding thereto may have identical/similar mean values (µ), standard deviations (σ), maximum values (Max), and minimum values (Min).

Prediction of a feature/feature map may be performed based on, for example, the similarity of data distribution characteristics among the above-described feature sets or channels.

### Transform/inverse-transform

As described above, an image/video encoder may derive a residual block on the basis of a predicted block and derive quantized transform coefficients by applying transform and quantization to the derived residual block. Similarly, a VCM encoder may derive a residual block on the basis of the predicted block (or feature elements) and derive quantized transform coefficients for features/feature maps by applying transform and quantization to the derived residual block. Information (residual information) on the quantized transform coefficients may be included in residual coding syntax, encoded, and then output in the form of a bitstream.

A decoder (an image/video decoder and a VCM decoder) may acquire the information (the residual information) on the quantized transform coefficients from the bitstream and derive the quantized transform coefficients by decoding the information. Also, the decoder may derive the residual block through an inverse quantization/inverse transform on the basis of the quantized transform coefficients. As described above, at least one of quantization/inverse-quantization and/or transform/inverse-transform may be omitted. When transform/inverse-transform is omitted, the transform coefficients may be referred to as "coefficients" or "residual coefficients" or may still be referred to as "transform coefficients" for consistency of expression. Whether to omit transform/inverse-transform may be signaled on the basis of a certain flag, for example, transform_skip_flag. Meanwhile, in VCM, whether to omit transform/inverse-transform may be determined per feature/feature map or per channel.

Transform/inverse-transform may be performed on the basis of transform kernel(s). For example, according to embodiments, a multiple transform selection (MTS) scheme may be applied. In this case, some of multiple transform kernel sets may be selected and applied to a current block. A transform kernel may be referred to by various terms such as transform matrix, transform type, and the like. For example, a transform kernel set may represent a combination of a vertical-direction transform kernel (vertical transform kernel) and a horizontal-direction transform kernel (horizontal transform kernel).

To indicate a transform kernel set for the current block or a feature/feature map, MTS index information, for example, mts_idx, may be signaled. An example of MTS index information is given in Table 4.

**[Table 4]**

| mts_idx[ x0 ][ y0 ] | 0 | 1 | 2 | 3 | 4 |
|---|---|---|---|---|---|
| trTypeHor | 0 | 1 | 2 | 1 | 2 |
| trTypeVer | 0 | 1 | 1 | 2 | 2 |

In Table 4, trTypeHor may represent a horizontal-direction transform kernel, and trTypeVer may represent a vertical-direction transform kernel. A trTypeHor/trTypeVer value of 0 may represent DCT2, a trTypeHor/trTypeVer value of 1 may represent DCT7, and a trTypeHor/trTypeVer value of 2 may represent DCT8. However, these are illustrative, and other values may be mapped to other DCT/DST or transform kernels on the basis of predefined rules.

In the present disclosure, MTS-based transform/inverse-transform may be applied as primary transform/inverse-transform, and secondary transform/inverse-transform may be further applied. In this case, a transform on an encoder side may be performed in order of primary transform and secondary transform, and a transform on a decoder side may be performed in order of secondary inverse-transform and primary inverse-transform. According to embodiment, a secondary transform may only be applied to coefficients of a top-left low-frequency region of a coefficient block to which a primary transform is applied. This secondary transform may be referred to as "low frequency non-separable transform (LFNST)." Also, according to an embodiment, the number of coefficients may be reduced as a result of performing the secondary transform. This secondary transform may be referred to as "reduced secondary transform (RST)."

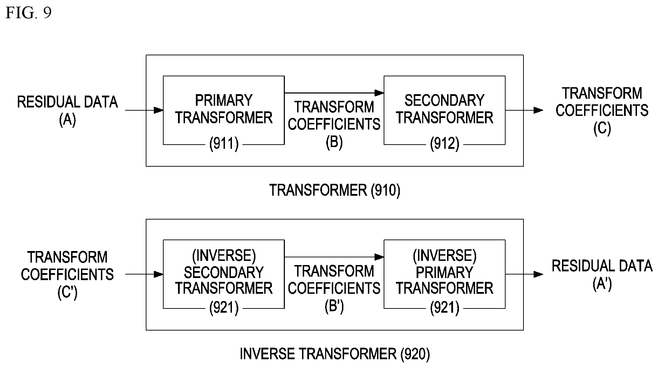

FIG. 9 is a diagram illustrating transform and inverse transform processes to which embodiments of the present disclosure are applicable. In FIG. 9, a transformer 910 may correspond to the transformer 332 of FIG. 3, and an inverse transformer 920 may correspond to the inverse transformer 335 of FIG. 3 or the inverse transformer 422 of FIG. 4.

Referring to FIG. 9, the transformer 910 may include a primary transformer 911 and a secondary transformer 912.

The primary transformer 911 may generate (primary) transform coefficients B by applying a primary transform to residual data A (or residual feature elements). In the present disclosure, the primary transform may be referred to as "core transform." The primary transform may be performed on the basis of an MTS scheme. When an existing MTS is applied, a transform from the spatial domain to the frequency domain is applied to a residual signal (or a residual block) on the basis of DCT type 2, DCT type 7, DCT type 8, etc., such that transform coefficients (or primary transform coefficients) may be generated. Here, DCT type 2, DCT type 7, DCT type 8, etc., may be referred to as "transform type," "transform kernel," or "transform core." However, these are illustrative, and the primary transform may also be applied to MTS kernels other than the foregoing MTS kernels.

The secondary transformer 912 may generate (secondary) transform coefficients C by applying a secondary transform to the (primary) transform coefficients B. The secondary transform is a non-separable transform, for example, the foregoing LFNST or RST. For example, when a 4×4 block is used, the non-separable secondary transform may be performed as follows.

A 4×4 input block X may be represented as in Equation 1 below. [Equation 1] $X = \left[\begin{matrix}{X}_{00} & {X}_{01} & {X}_{02} & {X}_{03} \\ {X}_{10} & {X}_{11} & {X}_{12} & {X}_{13} \\ {X}_{20} & {X}_{21} & {X}_{22} & {X}_{23} \\ {X}_{30} & {X}_{31} & {X}_{32} & {X}_{33}\end{matrix}\right]$

When the input block X is expressed in a vector form, a vector X may be represented as in Equation 2 below. [Equation 2] $\vec{X} = {\left[{X}_{00}, {X}_{01}, {X}_{02}, {X}_{03}, {X}_{10}, {X}_{11}, {X}_{12}, {X}_{13}, {X}_{20}, {X}_{21}, {X}_{22}, {X}_{23}, {X}_{30}, {X}_{31}, {X}_{32}, {X}_{33}\right]}^{T}$

In this case, the non-separable secondary transform may be calculated using Equation 3 below. [Equation 3] $\vec{F} = T ⋅ \vec{X}$

Here, a vector F is a transform coefficient vector, T is a 16×16 non-separable transform matrix, and · is multiplication of a matrix and a vector.

From the above equation, the 16×1 transform coefficient vector F may be derived, and the vector F may be reconfigured as a 4×4 block in a scan order (e.g., a horizontal, vertical, diagonal, or predetermined/prestored scan order).

Subsequently, an inverse transformer 820 may include a (inverse) secondary transformer 821 and a (inverse) primary transformer 822.

The (inverse) secondary transformer 921 may generate (primary) (inverse) transform coefficients B' by applying a (inverse) secondary transform to dequantized (secondary) transform coefficients C'. Here, the (inverse) secondary transform may correspond to an inverse process of the secondary transform performed by the transformer 910. The (inverse) secondary transform may be applied to the top-left corner of a coefficient block according to embodiment.

The (inverse) primary transformer 922 may generate residual samples A' by applying a (inverse) primary transform to the (primary) (inverse) transform coefficients B'.

### Quantization/dequantization

As described above, the quantizer 333 of the encoder 300 may derive quantized transform coefficients by applying quantization to transform coefficients, and the dequantizer 334 of the image/video encoder 300 or the dequantizer 421 of the image/video encoder 400 may derive transform coefficients by applying dequantization to quantized transform coefficients. Similarly, a VCM encoder may derive quantized transform coefficients by applying quantization to transform coefficients, and a dequantizer of a VCM encoder or a dequantizer of a VCM decoder may derive transform coefficients by applying dequantization to quantized transform coefficients. In general, a quantization rate may be changed in feature/feature map coding, and the changed quantization rate may be used for adjusting a compression rate. From an implementation perspective, complexity may be taken into consideration to use a quantization parameter (QP) instead of directly using the quantization rate. For example, QPs having integer values of 0 to 63 may be used, and each QP value may correspond to an actual quantization rate. QPs QPY for luma components (luma samples) and QPs QPC for chroma components (chroma samples) may be set differently.

During a quantization process, a transform coefficient C may be input and divided by a quantization rate Qstep, and a quantized transform coefficient C' may be obtained on the basis of the result. In this case, considering computational complexity, the quantization rate may be multiplied by a scale and thereby converted into an integer, and a shift operation of a value corresponding to a scale value may be performed. A quantization scale may be derived from the product of the quantization rate and the scale value. In other words, the quantization scale may be derived in accordance with a QP. The transform coefficient C and the quantization scale may be applied, and the quantized transform coefficient C' may be derived on the basis of the result.

During a dequantization process that is an inverse process of the quantization process, the quantized transform coefficient C' may be multiplied by the quantization rate Qstep, and a restored transform coefficient C'' may be obtained on the basis of the result. In this case, a level scale may be derived from the QP, and the level scale may be applied to the quantized transform coefficient C'. Based on the result, a restored transform coefficient C" may be derived. The restored transform coefficient C" may slightly differ from the initial transform coefficient due to loss in the transform and/or quantization process. Therefore, an encoder performs dequantization in the same manner as a decoder.

Meanwhile, an adaptive frequency weighting quantization technique for adjusting quantization strength in accordance with frequency may be applied. The adaptive frequency weighting quantization technique is a method of applying different quantization strengths to frequencies. According to the adaptive frequency weighting quantization technique, a predefined quantization scaling matrix may be used for applying different frequency-specific quantization strengths. In other words, the foregoing quantization/dequantization process may be performed on the additional basis of the quantization scaling matrix. For example, depending on a size of a current block and/or whether a prediction mode applied to the current block to generate a residual signal of the current block is inter prediction or intra prediction, different quantization scaling matrices may be used. A quantization scaling matrix may be referred to as "quantization matrix" or "scaling matrix." The quantization scaling matrix may be defined in advance. Also, for frequency-adaptive scaling, frequency-specific quantization scale information of the quantization scaling matrix may be configured/encoded by an encoder and signaled to a decoder. Frequency-specific quantization scale information may be referred to as "quantization scaling information." The frequency-specific quantization scale information may include scaling list data scaling_list_data. Based on the scaling list data, a (modified) quantization scaling matrix may be derived. Also, the frequency-specific quantization scale information may include present flag information indicating whether scaling list data exists. On the other hand, when the scaling list data is signaled at an upper level (e.g., a sequence level, a feature-set group level, etc.), information indicating whether the scaling list data is modifiable at a lower level (e.g., a feature set level, a channel level, etc.), etc., may be further included.

Feature quantization/dequantization may be performed on the basis of a certain quantization group. Specifically, a plurality of quantization sections may be set on the basis of data distribution characteristics of a feature set. The set quantization sections may have different data distribution ranges and may be defined as one quantization group. Also, a feature quantization/dequantization computation may be performed by converting data distribution of each channel in a feature set into any one data distribution range.

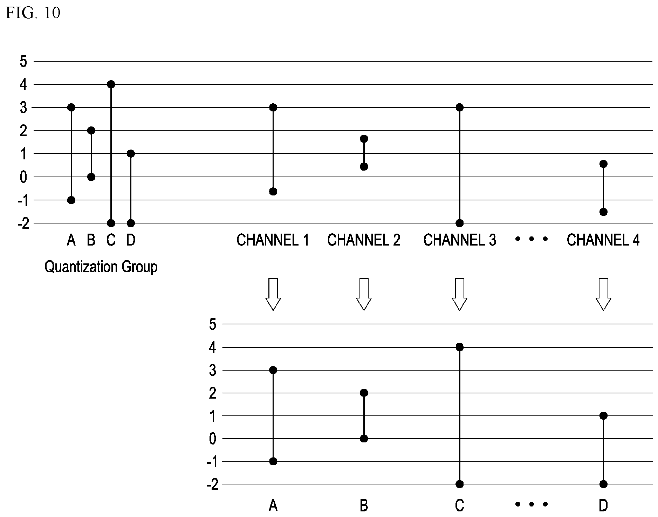

FIG. 10 is a diagram illustrating a quantization group according to an embodiment of the present disclosure.

Referring to FIG. 10, a quantization group may include 4 quantization sections A, B, C, and D having different data distribution ranges. Each of the quantization sections A, B, C, and D in the quantization group may be defined using minimum and maximum values and set on the basis of data distribution characteristics of a current feature/feature map. For example, the quantization sections A, B, C, and D may be set as [-1, 3], [0, 2], [-2, 4], and [-2, 1], respectively.

A VCM encoder may quantize each channel (or feature) in a feature set on the basis of the preset quantization sections A, B, C, and D without additionally calculating maximum and minimum values of feature elements. For example, a first channel (channel 1) may be quantized on the basis of the quantization section A with the most similar data distribution range. A second channel (channel 2) may be quantized on the basis of the quantization section B with the most similar data distribution range. A third channel (channel 3) may be quantized on the basis of the quantization section C with the most similar data distribution range. A fourth channel (channel 4) may be quantized on the basis of the quantization section D with the most similar data distribution range. In this case, the VCM encoder may encode/signal the number, minimum value, and maximum value of quantization sections as feature quantization-related information. Also, the VCM encoder may signal quantization section index information that represents a quantization section used for encoding a current channel (or feature), as feature quantization-related information. Accordingly, it is unnecessary to signal the number of quantization bits per channel and maximum and minimum values of feature elements, reducing the number of transmission bits and improving coding/signaling efficiency.

A VCM decoder may generate the same quantization group as that generated by the VCM encoder on the basis of the number of quantization sections and minimum and maximum values of each section received from the VCM encoder. Alternatively, the VCM decoder may generate a quantization group on the basis of data distribution characteristics of previously reconstructed feature sets. The VCM decoder may dequantize a current feature on the basis of a quantization section identified from the quantization section index information received from the VCM encoder.

An example of a feature quantization operation based on a quantization group is as in Equations 4 and 5. [Equation 4] ${F}_{norm} = \frac{{F}_{n} - min \left({F}_{n}\right)}{max \left({F}_{n}\right) - min \left({F}_{n}\right)}$ [Equation 5] ${F}_{{n}^{G}} = {F}_{{n}^{norm}} ⋅ \left(max\left({F}_{{G}_{m}}\right)-min\left({F}_{{G}_{m}}\right)\right) + min \left({F}_{{G}_{m}}\right)$

In Equation 4, Fₙ may be an n^{th} channel (n is an integer greater than or equal to 1) of a feature set Fₛₑₜ^{RxC}. Here, R may be a width of the feature set, and C may be a height of the feature set. Also, max(Fₙ) may be a maximum value of feature elements in the n^{th} channel, and min(Fₙ) may be a minimum value of the feature elements in the n^{th} channel.

Referring to Equation 4, the n^{th} channel Fₙ may be normalized on the basis maximum and minimum values of feature elements in a channel to have feature element values between 0 and 1.

In Equation 5, Fn^{norm} may be a normalized n^{th} channel of the feature set Fₛₑₜ^{RxC}. Here, R may be a width of the feature set, and C may be a height of the feature set. Also, max(F_{Gm}) may be a maximum value of a quantization section F_{Gm} applied to the n^{th} channel Fₙ, and min(F_{Gm}) may be a minimum value of the quantization section F_{Gm} applied to the n^{th} channel Fₙ.

Referring to Equation 5, the normalized n^{th} channel Fn^{norm} may be quantized on the basis of the maximum value max(F_{Gm}) and the minimum value min(F_{Gm}) of the quantization section F_{Gm} applied to the n^{th} channel Fₙ.

Meanwhile, for dequantization, quantization-related information may be encoded in a bitstream. According to embodiment, the quantization-related information may include global quantization information, activation function information, the number of quantization bits, and quantization section index information. The global quantization information may indicate whether the number of quantization bits will be set separately for each quantization section or set identically for all quantization sections. The activation function information may indicate a type of activation function applied to a current feature. For example, the activation function information may indicate whether the activation function applied to the current feature is a first activation function involving signaling both maximum and minimum values of each quantization section or a second activation function involving only signaling a maximum value of each quantization section. The number of quantization bits may be set separately for each quantization section on the basis of the foregoing global quantization information or set identically for all the quantization sections. When the number of quantization bits is set identically for all the quantization sections, the number of quantization bits may be signaled only once for all the quantization sections.

In addition, the quantization-related information may further include the number of quantization sections in a quantization group and minimum and maximum values of each quantization section. Here, minimum and maximum values of each quantization section may be adaptively signaled on the basis of the type of activation function. For example, when the activation function applied to the current feature is the first activation function (e.g., leaky rectified linear unit (ReLU)), both minimum and maximum values of each quantization section may be signaled. On the other hand, when the activation function applied to the current feature is the second activation function (e.g., ReLU), a minimum value of each quantization section may be estimated to be 0, and only a maximum value of each quantization section may be signaled.

### Entropy coding

As described above, some or all feature/feature map information may be encoded by the entropy encoder 340, and some or all feature/feature map information may be decoded by the entropy decoder 410. In this case, the feature/feature map information may be encoded/decoded per syntax element like image/video information. In the present disclosure, "information is encoded/decoded" may include "information is encoded/decoded in a way described in this paragraph."

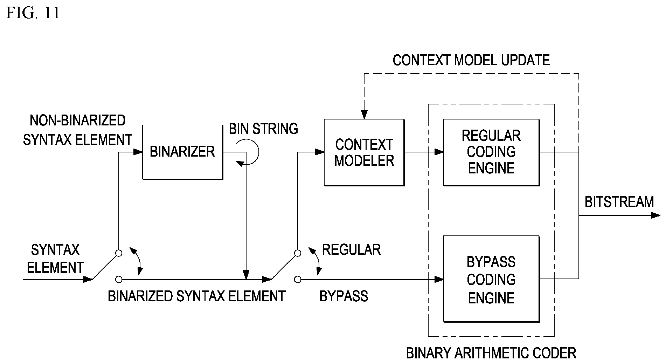

FIG. 11 is a block diagram illustrating context-adaptive binary arithmetic coding (CABAC) for encoding one syntax element.

Referring to FIG. 11, when an input signal is a syntax element rather than a binary value, a CABAC encoding process first involves converting the input signal into a binary value through binarization. When the input signal is already a binary value, the input signal may bypass binarization. Here, each binary number of 0 or 1 constituting a binary value may be referred to as "bin." For example, when a binary string (bin string) is 110 after binarization, each of 1, 1, and 0 may be a single bin. Bin(s) of one syntax element may represent a value of the syntax element.

The binarized bins may be input to a regular coding engine or a bypass coding engine. The regular coding engine may assign a context model for reflecting a probability value to a corresponding bin and may encode the corresponding bin on the basis of the assigned context model. The regular coding engine may encode each bin and then update a probability model for the bin. These coded bins may be referred to as "context-coded bins." The bypass coding engine may omit a procedure for estimating probabilities of the input bins and a procedure for updating probability models applied to the bins after coding. It is possible to increase a coding rate by coding the input bins using a uniform probability distribution (e.g., 50:50) instead of assigning context. These coded bins may be referred to as "bypass bins." A context model may be assigned and updated for each context-coded (regular-coded) bin, and context models may be indicated on the basis of ctxidx or ctxInc. ctxidx may be derived from ctxInc. As a specific example, a context index ctxidx indicating a context model for each of regular-coded bins may be derived as the sum of a context index increment ctxInc and a context index offset ctxIdxOffset. Here, ctxInc may be derived differently depending on each bin. ctxIdxOffset may be the lowest value of ctxIdx. ctxIdxOffset may generally be determined depending on a type of slice, and a context model for a single syntax element in a slice may be determined/derived from ctxInc.

It may be determined whether to perform encoding through the regular coding engine or the bypass coding engine during the entropy encoding procedure, and coding paths may be switched. As entropy decoding, the same process as entropy encoding may be performed in reverse order.

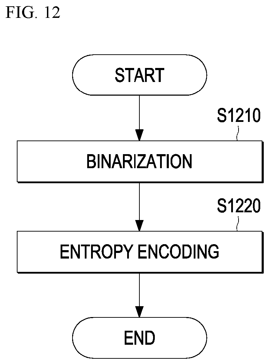

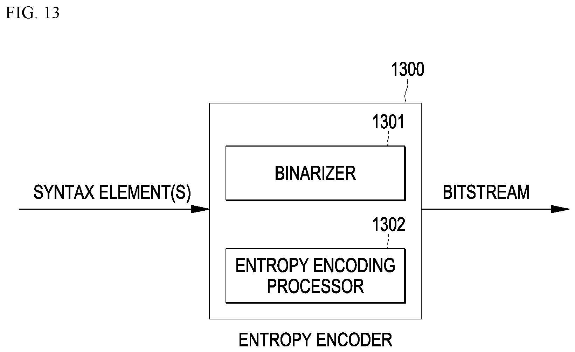

The foregoing entropy coding may be performed, for example, as shown in FIGS. 12 and 13.

FIGS. 12 and 13 are diagrams illustrating an entropy encoding procedure.

Referring to FIGS. 12 and 13 together, an encoder (entropy encoder) may perform an entropy coding procedure for feature/feature map information. The feature/feature map information may include prediction-related information (e.g., inter/intra prediction determination information, intra prediction mode information, inter prediction mode information, etc.), residual information, in-loop filtering-related information, etc., or may include various syntax elements related thereto. This entropy coding may be performed per syntax element. The entropy encoder may be the entropy encoder 340 of the image/video encoder 300 of FIG. 3 described above.

The encoder may binarize a target syntax element (S1310). Here, the binarization may be based on various binarization methods such as a truncated rice binarization process, a fixed-length binarization process, etc., and a binarization method for the target syntax element may be defined in advance. The binarization procedure may be performed by a binarizer 1301 in an entropy encoder 1300.

The encoder may perform entropy encoding on the target syntax element (S1220). The encoder may perform regular coding-based (context-based) encoding or bypass coding-based encoding on a bin string of the target syntax element on the basis of CABAC, context-adaptive variable length coding (CAVLC), etc., and the output may be included in a bitstream. The entropy coding procedure may be performed by an entropy encoding processor 1302 in the entropy encoder 1300. The output bitstream may be transmitted to a decoder via a (digital) storage medium or a network as described above.

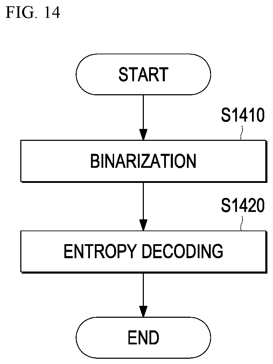

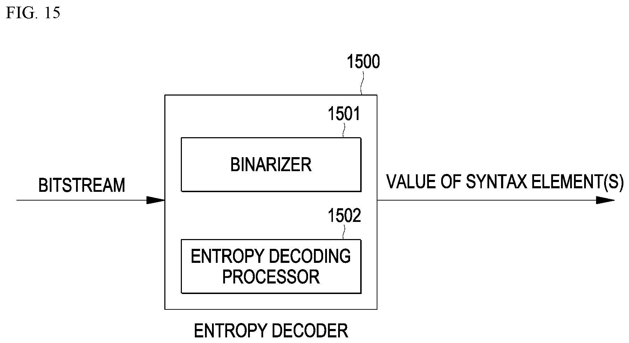

FIGS. 14 and 15 are diagrams illustrating an entropy decoding procedure.

Referring to FIGS. 14 and 15, a decoder (entropy decoder) may decode encoded feature/feature map information. The feature/feature map information may include prediction-related information (e.g., inter/intra prediction determination information, intra prediction mode information, inter prediction mode information, etc.), residual information, in-loop filtering-related information, etc., or may include various syntax elements related thereto. Entropy coding may be performed per syntax element. The entropy decoder may be the entropy decoder 410 of the image/video decoder 400 of FIG. 4 described above.

The decoder may binarize a target syntax element (S1410). Here, the binarization may be based on various binarization methods such as a truncated rice binarization process, a fixed-length binarization process, etc., and a binarization method for the target syntax element may be defined in advance. The decoder may derive available bin strings (bin string candidates) for available values of the target syntax element through the binarization procedure. The binarization procedure may be performed by a binarizer 1501 in an entropy decoder 1500.

The decoder may perform entropy decoding on the target syntax element (S1420). The decoder may sequentially decode and parse bins of the target syntax element from input bit(s) in a bitstream, comparing a derived bin string with available bin strings for the syntax element. When the derived bin string is identical to one of the available bin strings, a value corresponding to the bin string may be derived as a value of the syntax element. Otherwise, the next bit in the bitstream may be further parsed, and then the foregoing procedure may be performed again. This process makes it possible to signal specific information (a specific syntax element) in the bitstream using variable-length bits rather than a start bit and a stop bit of the specific information. In this way, a relatively small number of bits can be allocated to a low value, and overall coding efficiency can be improved.

The decoder may perform context-based decoding or bypass coding-based decoding on bins in the bin string from the bitstream on the basis of an entropy coding technique such as CABAC, CAVLC, or the like. The entropy decoding procedure may be performed by an entropy decoding processor 1502 in the entropy decoder 1500. As described above, the bitstream may include various information for feature/feature map decoding. The bitstream may be transmitted to a decoding apparatus via a (digital) storage medium or a network as described above.

In the present disclosure, a table (syntax table) including syntax elements may be used for indicating information signaling from an encoder to a decoder. The order of syntax elements of the table including syntax elements used in the present disclosure may represent a parsing order of syntax elements from a bitstream. An encoder may generate and encode the syntax table such that syntax elements may be parsed in the parsing order by a decoder, and a decoder may acquire values of the syntax elements by parsing and decoding the syntax elements of the syntax table in the parsing order from the bitstream.

### Coding layers and architecture

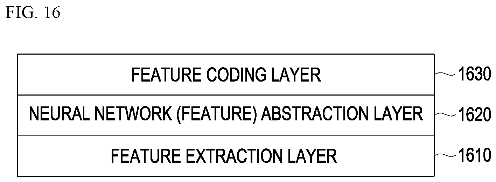

FIG. 16 is a diagram showing an example of a VCM layer architecture.

Referring to FIG. 16, a VCM layer architecture may be composed of a feature extraction layer 1610, a neural network (feature) abstraction layer 1620, and a feature coding layer 1630.

The feature extraction layer 1610 is a layer for extracting features from an input source, and may also include extraction results.

The feature coding layer 1630 is a layer for compressing the extracted features, and may also include compression results.

The neural network (feature) abstraction layer 1620 may abstract information (e.g., information on the extracted features/a feature map) generated by the feature extraction layer 1610 and transmit the abstracted information to the feature coding layer 1630. By abstracting the information, the neural network abstraction layer (NNAL) 1720 may conceal the inside of the feature extraction layer 1610 and provide a consistent feature interface function. Accordingly, even when a compression target changes due to a tool (e.g., CNN, DNN, etc.) change, etc., the feature coding layer 1630 may perform a consistent feature coding procedure. In the present disclosure, an NNAL may also be referred to as "feature abstraction layer."

An interface between the feature extraction layer 1610 and the NNAL 1620 and an interface between the feature coding layer 1630 and the NNAL 1620 may be defined in advance, and operations of the NNAL 1620 may be set to be changeable later.

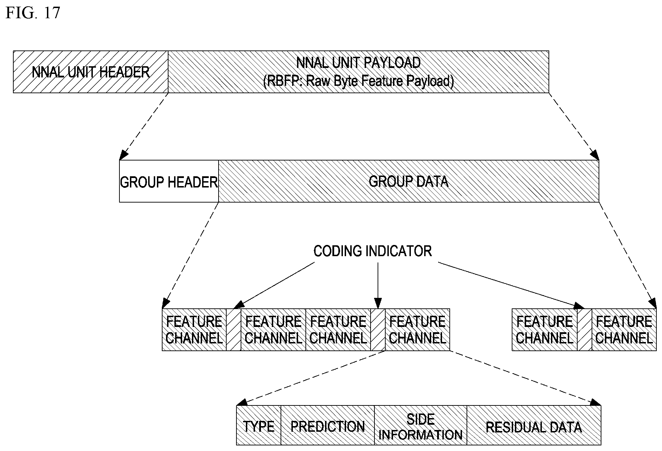

FIG. 17 is a diagram showing an example of a bitstream composed of encoded abstracted features and NNAL information.

A bitstream configured as shown in FIG. 17 may be referred to as "NNAL unit." An NNAL unit may be a single independent feature reconstruction unit. Input features for a single NNAL unit may be extracted from the same layer in a neural network. Accordingly, input features for a single NNAL unit may be forced to have the same characteristic. For example, the same feature extraction method may be applied to input features for a single NNAL unit.

An NNAL unit may include an NNAL unit header and an NNAL unit payload. The NNAL unit header may include all information required for utilizing an encoded feature in accordance with a task. The NNAL unit payload may include abstracted feature information. The NNAL unit payload may include a group header and group data. The group header may include constitution information about feature group data such as information on the temporal order, number, and common attributes of feature channels constituting the feature group. The feature channels may be encoded feature units. The group data may include the plurality of feature channels and coding indicators, and each of the feature channels may include type information, prediction information, side information, and residual information (data). In this case, the type information may indicate an encoding method, and the prediction information may indicate a prediction method. Also, the side information may indicate additional information (e.g., entropy coding, quantization-related information, etc.) required for decoding, and the residual information may include information on encoded feature elements (i.e., a set of feature value information).

### Embodiment

The embodiments described in the present disclosure relate to techniques associated with coding layers and architecture, and in particular, to methods of expressing encoding optimization methods applied according to the purpose of a user or machine and the appropriate use and attributes of an encoded bitstream, including privacy protection attributes (e.g., de-identification) for users and machines.

The need for privacy protection processing (e.g., de-identification) of images is as follows.

Privacy protection: Images for AI training and inferencing may contain sensitive information or personally identifiable information.

Legal compliance and ethical use: Many countries and regions have strict regulations on privacy protection. De-identification enables compliance with such laws.

Data sharing: De-identification enables safe data sharing without exposing sensitive information.

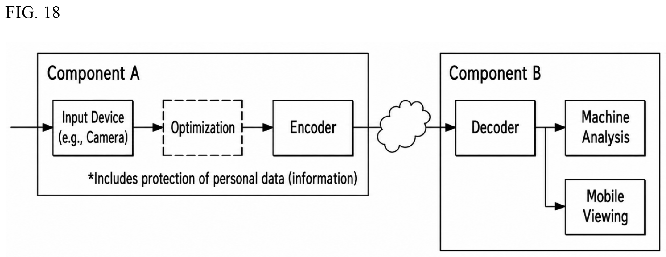

FIG. 18 illustrates an example of encoding optimization and encoded bitstream use involving privacy protection processing. In this example, unnecessary information may be removed or necessary information may be enhanced through optimization at the time of image acquisition. In certain cases, personal information may constitute unnecessary information. In such cases, personal information may be protected and removed through optimization. Since sensitive personal information is removed before the image is distributed and used, privacy protection and legal compliance are achievable, and ethical use and distribution are enabled. Although the need for privacy protection processing is thus clear, there is a problem in that information associated with privacy protection processing is not defined in an encoded bitstream. When such information is not defined, the following problems may arise.

### (1) Risk of improper use

Personally identifiable information may have been removed or modified for privacy protection purposes. When such images are used for personal identification purposes, problems due to erroneous recognition may occur.

### (2) Determination of the legality of using received video

When it is unknown whether received or collected data contains personal information and whether privacy protection has been applied, it is difficult to determine the legality of using, storing, and distributing such data.

### (3) Difficulty in management

When there is no information about data attributes in the bitstream itself, if a problem occurs in the management system, it may be difficult to identify and manage the attributes of the corresponding bitstream.

### First Embodiment

Since the introduction of the General Data Protection Regulation (GDPR) and other similar laws for privacy protection worldwide, storing and using data containing unauthorized personal information or personally identifiable information (PII) such as faces and vehicle license plates is legally problematic. To minimize legal issues, the attributes of the data being used-such as whether the data (e.g., video, image) contains personally identifiable information-must be defined, and when privacy protection measures have been applied to obscure personally identifiable information, information about the applied method must also be defined.

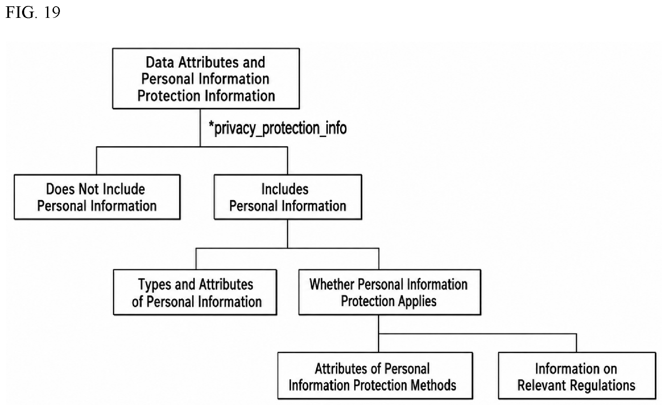

FIG. 19 illustrates an example of data attribute and privacy protection information definition. Data attributes and privacy protection may indicate whether personal information is included. When personal information is included, information indicating the type and attributes of the personal information may also be defined. In addition, information indicating whether privacy protection has been applied may be defined. When privacy protection has been applied, information about the applied method may be defined. This may be information about the applied method, or it may be attribute information of the data that has been changed as a result of applying privacy protection. For example, as a result of applying privacy protection, the attribute of data may change from data containing personally identifiable information to pseudonymized data, and the information defining the changed attribute is what is defined.

Tables 5 through 9 illustrate examples of methods for expressing data attributes and privacy protection information (FIG. 19) and define relevant information in privacy_protection_info.

**[Table 5]**

| | |
|---|---|
| privacy_protection_info(payloadSize ) { | **Descriptor** |
| **privacy_protection_cancel_flag** | u(1) |
| if(!privacy_protection_cancel_flag){ | u(1) |
| **privacy_protection_persistence_flag** | u(1) |
| **privacy_protection_type** | u(4) |
| **Protected_info_idc** | u(4) |
| } | |
| } | |

**[Table 6]**

| | |
|---|---|
| privacy_protection_info(payloadSize ) { | **Descriptor** |
| **privacy_protection_cancel_flag** | u(1) |
| if(!privacy_protection_cancel_flag){ | |
| **privacy_protection_persistence_flag** | u(1) |
| **prevent_human_perception_flag** | u(1) |
| **prevent_machine_preceotion_flag** | u(1) |
| **privacy_protection_type** | u(4) |
| **Protected_info_idc** | u(4) |
| } | |
| } | |

**[Table 7]**

| | |
|---|---|
| privacy_protection_info(payloadSize ) { | **Descriptor** |
| **privacy_protection_cancel_flag** | u(1) |
| if(!privacy_protection_cancel_flag){ | u(1) |
| **privacy_protection_persistence_flag** | u(1) |
| **privacy_protection_type** | u(4) |
| **compliant_regulation_info** | |
| **Protected_info_idc** | u(4) |
| } | |
| } | |

**[Table 8]**

| | |
|---|---|
| privacy_protection_info(payloadSize ) { | **Descriptor** |
| **privacy_protection_cancel_flag** | u(1) |
| if(!privacy_protection_cancel_flag){ | |
| **privacy_protection_persistence_flag** | u(1) |
| **prevent_human_perception_flag** | u(1) |
| **prevent_machine_preceotion_flag** | u(1) |
| **compliant_regulation_info** | |
| **privacy_protection_type** | u(4) |
| **Protected_info_idc** | u(4) |
| } | |
| } | |

**[Table 9]**

| | |
|---|---|
| privacy_protection_info(payloadSize ) { | **Descriptor** |
| **privacy_protection_cancel_flag** | u(1) |
| if(!privacy_protection_cancel_flag){ | |
| **privacy_protection_persistence_flag** | u(1) |
| **prevent_human_perception_flag** | u(1) |
| **prevent_machine_preceotion_flag** | u(1) |
| **compliant_regulation_info** | |
| **privacy_protection_type** | u(4) |
| **Protected_info_idc** | u(4) |
| } | |
| } | |

privacy_protection_info may also be defined to include only some of the information defined in FIG. 19. privacy_protection_info may be defined within an encoded video/image bitstream, and the definition position may be at multiple locations within the bitstream as needed. For example, it may also be defined in a Network Abstraction Layer (NAL) header, a sequence parameter set, a picture parameter set, supplemental enhancement information (SEI), and the like. The definition position is not limited to the locations exemplified here and may be any high-level parameter set.

Table 5 illustrates an example in which only whether privacy protection has been applied and the protection method are defined in privacy_protection_info.

privacy_protection_cancel_flag, when equal to 1, may indicate that the persistence of a previously applied privacy protection method is cancelled. When equal to 0, it may indicate that privacy_protection_persistence_flag and privacy_protection_type follow, and that the privacy protection method and scope identified by the following privacy_protection_persistence_flag and privacy_protection_type may be applied.

privacy_protection_persistence_flag may indicate the persistence of the privacy protection method indicated by privacy_protection_type. When equal to 0, it may indicate that the privacy protection method identified by privacy_protection_type may be applied to the current picture only. When equal to 1, it may indicate that the privacy protection method identified by privacy_protection_type may be applied to the current picture and all subsequent pictures.

privacy_protection type is information for expressing the attributes of the applied privacy protection.

**[Table 10]**

| **privacy_protection_type** | Description |
|---|---|
| 000 | Blurring: Obscuring personal information areas by making them fuzzy or indistinct. |
| 001 | Replacing: Modifying personal data into a different, non-identifiable form to prevent privacy infringement while maintaining data structure. |
| 010 | Masking: Concealing specific personal information fields or areas entirely. |
| 011 | Data Insertion & Transformation (e.g adversarial attack) |
| 100 | Anonymization: Transforming data in a way that renders individual identification impossible. |

**[Table 11]**

| bitMask | Interpretation |
|---|---|
| 0x01 | Blurring: Obscuring personal information areas by making them fuzzy or indistinct. |
| 0x02 | Replacing: Modifying personal data into a different, non-identifiable form to prevent privacy infringement while maintaining data structure. |
| 0x04 | Masking: Concealing specific personal information fields or areas entirely. |
| 0x08 | Data Insertion & Transformation (e.g adversarial attack) |
| 0x10 | Anonymization: Transforming data in a way that renders individual identification impossible. |

The example in Table 10 represents the applied method in lookup table format. In the example of Table 10, the value of privacy_protection_type may be used to identify whether the applied method is blurring, masking, replacing, or the like.

Table 11 represents the method information defined in Table 10 as a result of a bitwise AND of privacy_protection type and a bitmask. Table 12 illustrates an example thereof, and the values of privacy_protection_type may be defined differently from those in Table 10.

**[Table 12]**

| |
|---|
| blurring_Flag = ((privacy_protection_type& 0x01 ) > 0 ) ? 1 : 0 |
| replacing_Flag = ((privacy_protection_type & 0x02 ) > 0 ) ? 1 : 0 |
| masking_Flag = ((privacy_protection_type & 0x04 ) > 0 ) ? 1 : 0 |
| adversarial_attack_Flag = ((privacy_protection_type & 0x08 ) > 0 ) ? 1 : 0 |
| anonymization_Flag = ((privacy_protection_type & 0x10 ) > 0 ) ? 1 : 0 |

In this case, it is possible to express a plurality of attributes. blurring_Flag, replacing_Flag, masking_Flag, adversarial_attack_Flag, and anonymization_Flag are information indicating whether the privacy protection methods of blurring, replacing, masking, adversarial attack, and anonymization attributes, respectively, have been applied, where a value of 1 means that the corresponding method has been applied and a value of 0 means that the corresponding method has not been applied.

The example in Table 13 expresses attribute information of data that has been changed due to the applied privacy protection. In some cases, attribute information of data changed as a result of applying privacy protection may be needed rather than information about the applied privacy protection method itself.

**[Table 13]**

| **privacy_protection_type** | Description |
|---|---|
| 00 | Pseudonymized data: Indicates that the data type has been converted into pseudonymized information for privacy protection. |
| 01 | Anonymized data: Indicates that the data type has been converted into de-identified (anonymized) information for privacy protection. |
| 10 | PII-removed data: Data from which Personally Identifiable Information (PII) has been removed. |
| 11 | Identified data: Indicates that personal identifiable information may be present. |

**[Table 14]**

| bitMask | Interpretation |
|---|---|
| 0x01 | Pseudonymized data: Indicates that the data type has been converted into pseudonymized information for privacy protection. |
| 0x02 | Anonymized data: Indicates that the data type has been converted into de-identified (anonymized) information for privacy protection. |
| 0x04 | PII-removed data: Data from which Personally Identifiable Information (PII) has been removed. |
| 0x08 | Identified data: Indicates that personal identifiable information may be present. |

Table 13 illustrates examples of expressing cases where the privacy attribute of data has been pseudonymized, de-identified, or removed as a result of applying privacy protection.

Table 14 represents the method information defined in Table 13 as a result of a bitwise AND of privacy_protection type and a bitmask. Table 15 illustrates an example thereof, and the values of privacy_protection type may be defined differently from those in Table 13.

**[Table 15]**

| |
|---|
| Pseudonymized_data_Flag = ((privacy_protection_type& 0x01 ) > 0 ) ? 1 : 0 |
| anonymized_data_Flag = ((privacy_protection_type & 0x02 ) > 0 ) ? 1 : 0 |
| Removed_PII_flag = ((privacy_protection_type & 0x04 ) > 0 ) ? 1 : 0 |
| Identified_data_flag = ((privacy_protection_type & 0x08 ) > 0 ) ? 1 : 0 |

Pseudonymized_data_Flag, anonymized_data_Flag, Removed_PII_flag, and Identified_data_flag are information indicating whether the privacy attribute of the data has been changed to pseudonymized data, anonymized data, data with PII removed, or identified data, respectively, as a result of applying a privacy protection method. A value of 1 means that the data has been changed to the corresponding attribute, and a value of 0 means that the data has not been changed to the corresponding attribute.

The privacy protection methods defined in Tables 10, 11, 13, 14, 16, and 17 are examples, and other methods may also be defmed.

Protected_info_idc represents information for identifying the type of protected information.

**[Table 16]**

| **Protected_info_idc** | Description |
|---|---|
| 00 | Protects information such as faces that can identify a person. |
| 01 | Protects information such as license plates that can identify means of transportation like vehicles. |
| 10 | Protects information such as business names, or text and images on signs from which a location can be inferred. |
| 11 | Information such as text and images on products or objects from which an item can be inferred. |

In Table 16, a Protected_info_idc value of 00 means that information such as faces that can identify a person has been protected. A Protected_info_idc value of 01 means that information such as license plates that can identify a vehicle or other means of transportation has been protected. A Protected_info_idc value of 10 means that information such as the text or images on signs or storefronts from which a location can be inferred has been protected. A Protected_info_idc value of 11 means that information such as the text or images on products or objects from which a specific object can be inferred has been protected. It is self-evident that additional types of information to be protected may be further defined.

**[Table 17]**

| bitMask | Interpretation |
|---|---|
| 0x01 | Protects information such as faces that can identify a person. |
| 0x02 | Protects information such as license plates that can identify means of transportation like vehicles. |
| 0x04 | Protects information such as business names, or text and images on signs from which a location can be inferred. |
| 0x08 | Information such as text and images on products or objects from which an item can be inferred. |

Table 17 illustrates an example of a method for identifying a plurality of types of protected information through a bitmask. In this case, the values of Protected_info_idc may be defined differently from those in Table 16.

In Table 18, Protected_personal_identifiable_data_Flag, Protected_vehicle_identifiable_data_Flag, Protected_location_identifiable_data_Flag, and Protected_object_identifiable_data_Flag indicate that information such as faces that can identify a person has been protected, that information such as license plates that can identify a vehicle or other means of transportation has been protected, that information such as the text or images on signs or storefronts from which a location can be inferred has been protected, and that information such as the text or images on products or objects from which a specific object can be inferred has been protected, respectively. A value of 1 means that protection has been applied to the corresponding information, and a value of 0 means that protection has not been applied to the corresponding information.

**[Table 18]**

| |
|---|
| Protected_personal_identifiable_data_Flag = ((Protected_info_idc& 0x01 ) > 0 ) ? 1 : 0 |
| Protected_vehicle_identifiable_data_Flag = ((Protected_info_idc & 0x02 ) > 0 ) ? 1 : 0 |
| Protected_location_identifiable_data_Flag = ((Protected_info_idc & 0x04 ) > 0 ) ? 1 : 0 |
| Protected_object_identifiable_data_Flag = ((Protected_info_idc & 0x08 ) > 0 ) ? 1 : 0 |

Table 6 above illustrates an example in which privacy_protection_info defines not only whether privacy protection has been applied and the protection method as defined in Table 5, but also the purpose and target of privacy protection.

prevent_human_perception_flag, when equal to 1, indicates that the purpose of the applied privacy protection method is to prevent identification of personal information by humans. When equal to 0, it indicates that the purpose of the applied privacy protection method is not to prevent identification of personal information by humans.

prevent_machine_perception flag, when equal to 1, indicates that the purpose of the applied privacy protection method is to prevent identification of personal information by machines or AI. When equal to 0, it indicates that the purpose of the applied privacy protection method is not to prevent identification of personal information by machines or AI.

Tables 7 and 8 above illustrate examples in which compliant_regulation_info, which is information indicating what regulations are intended to be satisfied through privacy protection, is defined in Tables 5 and 6, respectively.

compliant_regulation_info represents information indicating what regulations are intended to be satisfied through privacy protection. Tables 7 and 8 above illustrate examples in which compliant_regulation_info, which is information indicating what regulations are intended to be satisfied through privacy protection, is defined in Tables 5 and 6, respectively.

In the example of Table 19, the regulations intended to be satisfied are defined in lookup table format according to the value of compliant_regulation_info.

**[Table 19]**

| **compliant_regulation_info** | Description |
|---|---|
| 000 | Satisfies GDPR (General Data Protection Regulation), Target Region: EU |
| 001 | Satisfies CCPA (California Consumer Privacy Act), Target Region: California |
| 010 | Satisfies PIPEDA (Personal Information Protection and Electronic Documents Act), Target Region: Canada |
| 011 | Satisfies Personal Information Security Specification, Target Region: China |

In this case, the value of compliant_regulation_info defines information for one target regulation.

Table 20 represents the target regulations defined in Table 19 as a result of a bitwise AND of compliant_regulation_info and a bitmask.

**[Table 20]**

| bitMask | Interpretation |
|---|---|
| 0x01 | Satisfies GDPR (General Data Protection Regulation), Target Region: EU |
| 0x02 | Satisfies CCPA (California Consumer Privacy Act), Target Region: California |
| 0x04 | Satisfies PIPEDA (Personal Information Protection and Electronic Documents Act), Target Region: Canada |
| 0x08 | Satisfies Personal Information Security Specification, Target Region: China |

In this case, compliant_regulation_info may express a plurality of target regulations. Table 21 illustrates an example thereof. compliant_GDPR_Flag, compliant_CCPA_Flag, compliant_PIPEDA_Flag, and compliant_PIPL_Flag are information indicating whether the regulation satisfied (or intended to be satisfied) by applying a privacy protection method is the GDPR, CCPA, PIPEDA, or PIPL, respectively. A value of 1 means that the corresponding regulation is satisfied, and a value of 0 means that the corresponding regulation is not satisfied.

**[Table 21]**

| |
|---|
| compliant_GDPR_Flag = ((compliant_regulation_info & 0x01 ) > 0 ) ? 1 : 0 |
| compliant_CCPA_Flag = ((compliant_regulation_info & 0x02 ) > 0 ) ? 1 : 0 |
| compliant_PIPEDA_Flag = ((compliant_regulation_info & 0x04 ) > 0 ) ? 1 : 0 |
| compliant_PIPL_Flag = ((compliant_regulation_info & 0x08 ) > 0 ) ? 1 : 0 |

The regulations defined in Tables 19 and 20 are examples, and it is self-evident that other regulations may also be defined.

### Second Embodiment

The first embodiment illustrated an example in which information on the application and purpose of privacy protection was defined independently.

The second embodiment defines the application and purpose of privacy protection as one of the optimization methods, as in the example of Table 29 below. That is, a privacy protection-related optimization type is defined in optimization type.

Tables 22 through 24 illustrate examples of methods for expressing optimization purpose, attributes, and scope of application.

**[Table 22]**

| | |
|---|---|
| encoder_optimization _info(payloadSize ) { | **Descriptor** |
| **optimization_cancel_flag** | u(1) |
| if(!optimization_cancel_flag){ | |
| **optimization_persistence_flag** | u(1) |
| **optimization_for_human_viewing_flag** | u(1) |
| **optimization_for_machine_analysis_flag** | u(1) |
| **optimization_type** | u(16) |
| } | |
| } | |

**[Table 23]**

| | |
|---|---|
| encoder_optimization_info(payloadSize ) { | **Descriptor** |
| **optimization_cancel_flag** | u(1) |
| if(!optimization_cancel_flag){ | |
| **optimization_persistence_flag** | u(1) |
| **optimization_for_human_viewing_flag** | u(1) |
| if(optimization_for_human_viewing_flag){ | |
| **optimization_for_machine_analysis_flag** | u(1) |
| } | |
| **optimization_type** | **u**(16) |
| } | |
| } | |

**[Table 24]**

| | |
|---|---|
| encoder_optimization_info(payloadSize ) { | **Descriptor** |
| **optimization_cancel_flag** | u(1) |
| if(!optimization_cancel_flag){ | |
| **optimization_persistence_flag** | u(1) |
| **optimization_for_machine_analysis_flag** | u(1) |
| if(optimization_for_machine_analysis_flag){ | |
| **optimization_for_human_viewing_flag** | u(1) |
| } | |
| **optimization_type** | u( 16) |
| } | |
| } | |

optimization cancelflag, when equal to 1, may indicate that the persistence of a previously applied optimization is cancelled. When equal to 0, it may indicate that optimization_persistence_flag, optimization for_machine_analysis_flag, and optimization_type follow, and that the optimization and scope of application identified by the following optimization_persistence_flag, optimization for_machine_analysis_flag, and optimization_type may be applied.

optimization_persistence_flag may indicate the persistence of the optimization indicated by optimization type. When equal to 0, it may indicate that the optimization identified by optimization_type may be applied to the current picture only. When equal to 1, it may indicate that the optimization identified by optimization_type may be applied to the current picture and all subsequent pictures.

optimization for_machine_analysis_flag, when equal to 1, may indicate that the purpose of the optimization and the encoded bitstream are intended for machine analysis (suitable for performing machine tasks). When equal to 0, the optimization purpose and the encoded bitstream may or may not be intended for machine analysis (if the value is '1', it indicates that it is for machine analysis; if the value is '0', it may or may not be for machine analysis).

optimization_for_human_viewing_flag, when equal to 1, may indicate that the purpose of the optimization and the encoded bitstream are intended for human viewing (suitable for human viewing). When equal to 0, the optimization purpose and the encoded bitstream may or may not be intended for human viewing (if the value is '1', it indicates that it is for human viewing; if the value is '0', it may or may not be for human viewing).

The effect of optimization may unintentionally affect encoding quality. For example, optimization may be performed for machine analysis, but a quality improvement for human viewing may also appear. In this case, optimization_for_machine_analysis_flag may be set to 1 and optimization_for_human_viewing_flag may be set to 0 to clearly define the intended purpose. As another example, optimization may be performed for human viewing, but a quality improvement for machine analysis may also appear. In this case, optimization_for_machine_analysis_flag may be set to 0 and optimization_for_human viewing_flag may be set to 1.

There may be restrictions on the definition of values for optimization for human viewing_flag and optimization_for_machine_analysis_flag. For example, when the purpose of optimization is limited to human viewing and machine analysis, optimization_for_human viewing_flag and optimization_for_machine_analysis_flag may not both have a value of '0' simultaneously.

In this case, if the value of the preceding flag among optimization for human viewing_flag and optimization_for_machine_analysis_flag is '0', the value of the following flag is '1', and it is not necessary to encode that value in the bitstream; the decoder or the receiving side may process the value as '1'. Tables 23 and 24 above illustrate examples thereof.

optimization type indicates the attributes of the optimization method.

**[Table 25]**

| Value | Interpretation |
|---|---|
| optimization_type = = 0 | May be used as determined by the application |
| optimization type > 0 && ( optimization_type & 0x01) = = 0 | No object-based optimization |
| ( optimization type & 0x01 ) != 0 | With object-based optimization |
| optimization type > 0 && ( optimization_type & 0x02 ) = = 0 | No temporal resampling optimization |
| ( optimization_type & 0x02 ) != 0 | With temporal resampling optimization |
| optimization_type > 0 && ( optimization_type & 0x04 ) = = 0 | No spatial resampling optimization |
| ( optimization_type & 0x04) != 0 | With spatial resampling optimization |
| optimization_type > 0 && ( optimization_type & 0x08 ) = = 0 | No temporal quality optimization |
| ( optimization_type & 0x08 ) != 0 | With temporal quality optimization |
| optimization_type > 0 && ( optimization type & 0x10) = = 0 | No spatial quality optimization |
| ( optimization_type & 0x10) != 0 | With spatial quality optimization; the pictures for which this SEI message persists have been pre-processed or encoded to reduce unnecessary information or improve the quality of necessary information.(e.g to reduce the amount of noise and remove speckles at the picture-level) |
| ( optimization type & 0x20 ) = 0 | No optimization for personal information protection |
| ( optimization_type & 0x20) != 0 | With personal information protection optimization; the pictures for which this SEI message persists have been pre-processed or encoded to protect personal information. (e.g. removal or replacing of personal identifiable information, pseudonymization, anonymization) |

**[Table 26]**

| bitMask | Interpretation |
|---|---|
| 0x01 | Object-based optimization; the pictures for which this SE1 message persists have been pre-processed or encoded so that detected objects in the pictures are optimized with respect to other parts of the pictures for the indicated optimization purposes |
| 0x02 | Temporal resampling optimization |
| 0x04 | Spatial resampling optimization |
| 0x08 | Temporal quality optimization |
| 0x10 | Spatial quality optimization; the pictures for which this SEI message persists have been pre-processed or encoded to reduce unnecessary information or improve the quality of necessary information.(c.g to reduce the amount of noise and remove speckles at the picture-level) |
| 0x20 | personal information protection optimization; the pictures for which this SEI message persists have been pre-processed or encoded to protect personal information. (e.g. removal or replacing of personal identifiable information, pscudonymization, anonymization) |

The optimization attributes defined in Tables 25 and 26 may be identified. The optimization attributes defined in Tables 25 and 26 are one example, and new optimization attributes may be defined using the corresponding structure. It goes without saying that optimization attributes and methods may be identified by including only an arbitrary subset of, rather than all of, the optimization attributes defined in Tables 25 and 26, or may be configured to include other optimization attributes and methods not defined in Tables 25 and 26. Tables 25 and 26 may perform the same function but represent examples expressed in different ways.

Table 26 is another example of expressing a plurality of optimization methods through a bitmask for optimization_type, and Tables 27 and 28 illustrate examples thereof.

**[Table 27]**

| |
|---|
| **optimizationForPIIProtectionFlag = ((optimization_type & 0X20 ) > 0 ) ? 1 : 0** |

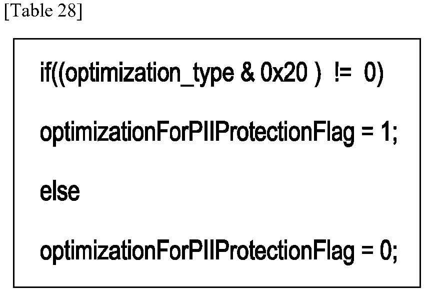

optimizationForPIIProtectionFlag is information indicating whether personal information protection optimization is included in the applied optimization method. A value of 1 means that personal information protection optimization is included among the applied optimization methods, and a value of 0 means that it is not included.

Table 29 illustrates an example of additionally expressing supplementary information required according to optimization attributes.

**[Table 29]**

| | |
|---|---|
| encoder_optimization_info(payloadSize ) { | **Descriptor** |
| **optimization_cancel_flag** | u(1) |
| if(!optimization_cancel_flag){ | |
| **optimization_persistence_flag** | u(1) |
| **optimization_for_human_viewing_flag** | u(1) |
| **optimization_for_machine_analysis_flag** | u(1) |
| **optimization_type** | u(16) |
| if(optimizationForPTTProtectionFlag) | |
| { | |
| **compliant_regulation_info** | **u**(3) |
| **privacy_protection_type** | **u**(4) |
| Protected_info_idc | **u**(4) |
| } | |
| } | |
| } | |

compliant_regulation_info represents information indicating what regulations are intended to be satisfied through privacy protection. In the example of Table 30, the regulations intended to be satisfied are defined in lookup table format according to the value of compliant_regulation_info.

**[Table 30]**

| **compliant_regulation_info** | Description |
|---|---|
| 000 | Satisfies GDPR (General Data Protection Regulation), Target Region: EU |
| 001 | Satisfies CCPA (California Consumer Privacy Act), Target Region: California |
| 010 | Satisfies PIPEDA (Personal Information Protection and Electronic Documents Act), Target Region: Canada |
| 011 | Satisfies Personal Information Security Specification, Target Region: China |

In this case, the value of compliant_regulation_info defines information for one target regulation. Table 31 represents the target regulations defined in Table 30 as a result of a bitwise AND of compliant_regulation_info and a bitmask.

**[Table 31]**

| bitMask | Interpretation |
|---|---|
| 0x01 | Satisfies GDPR (General Data Protection Regulation), Target Region: EU |
| 0x02 | Satisfies CCPA (California Consumer Privacy Act), Target Region: California |
| 0x04 | Satisfies PIPEDA (Personal Information Protection and Electronic Documents Act), Target Region: Canada |
| 0x08 | Satisfies Personal Information Security Specification, Target Region: China |

In this case, compliant_regulation_info may express a plurality of target regulations. Table 32 illustrates an example thereof. compliant_GDPR_Flag, compliant_CCPA_Flag, compliant_PIPEDA_Flag, and compliant_PIPL_Flag are information indicating whether the regulation satisfied (or intended to be satisfied) by applying a privacy protection method is the GDPR, CCPA, PIPEDA, or PIPL, respectively. A value of 1 means that the corresponding regulation is satisfied, and a value of 0 means that the corresponding regulation is not satisfied.

**[Table 32]**

| |
|---|
| compliant_GDPR_Flag = ((compliant_regulation_info & 0x01 ) > 0 ) ? 1 : 0 |
| compliant_CCPA_Flag = ((compliant_regulation_info & 0x02 ) > 0 ) ? 1 : 0 |
| compliant_PIPEDA_Flag = ((compliant_regulation_info & 0x04 ) > 0 ) ? 1 : 0 |
| compliant_PIPL_Flag = ((compliant_regulation_info & 0x08 ) > 0 ) ? 1 : 0 |

The regulations defined in Tables 30 and 31 are examples, and it is self-evident that other regulations may also be defined.

privacy_protection type is information for expressing the attributes of the applied privacy protection. The example in Table 33 represents the applied method in lookup table format.

**[Table 33]**

| **privacy_protection_type** | Description |
|---|---|
| 000 | Blurring: Makes information in personal information areas blurry. |
| 001 | Replacing: Changes the form of personal information so it is identified as different from the original (transformed into a form without privacy infringement issues). |
| 010 | Masking: Covers personal information areas. |
| 011 | Information Insertion and Transformation (e.g., adversarial attack) |
| 100 | Anonymization: Transformed so that individual identification is impossible. |

In the example of Table 33, the value of privacy_protection type may be used to identify whether the applied method is blurring, masking, replacing, or the like.

**[Table 34]**

| bitMask | Interpretation |
|---|---|
| 0x01 | Blurring: Makes information in personal information arcas blurry. |
| 0x02 | Replacing: Changes the form of personal information so it is identified as different from the original (transformed into a form without privacy infringement issues). |
| 0x04 | Masking: Covers personal information arcas. |
| 0x08 | Information Insertion and Transformation (c.g., adversarial attack) |
| 0x10 | Anonymization: Transformed so that individual identification is impossible. |

Table 34 represents the method information defined in Table 33 as a result of a bitwise AND of privacy_protection type and a bitmask, and Table 35 below illustrates an example thereof.

**[Table 35]**

| |
|---|
| blurring_Flag = ((privacy_protection_type& 0x01 ) > 0 ) ? 1 : 0 |
| replacing_Flag = ((privacy_protection_type & 0x02 ) > 0 ) ? 1 : 0 |
| masking_Flag = ((privacy_protection_type & 0x04 ) > 0 ) ? 1 : 0 |
| adversarial_attack_Flag = ((privacy_protection_type & 0x08 ) > 0 ) ? 1 : 0 |
| anonymization_Flag = ((privacy_protection_type & 0x10 ) > 0 ) ? 1 : 0 |

In this case, it is possible to express a plurality of attributes. blurring_Flag, replacing_Flag, masking_Flag, adversarial_attack_Flag, and anonymization_Flag are information indicating whether the privacy protection methods of blurring, replacing, masking, adversarial attack, and anonymization attributes, respectively, have been applied, where a value of 1 means that the corresponding method has been applied and a value of 0 means that the corresponding method has not been applied.

The example in Table 36 expresses attribute information of data that has been changed due to the applied privacy protection.

**[Table 36]**

| **privacy_protection_type** | Description |
|---|---|
| 00 | Pseudonymized data: Indicates that the data type has been converted into pseudonymized information for privacy protection. |
| 01 | Anonymized data: Indicates that the data type has been converted into anonymized information for privacy protection. |
| 10 | Data from which PII (Personally Identifiable Information) has been removed. |
| 11 | Identified data: Indicates that personal identifiable information may be present. |

In some cases, information on the change in privacy attributes of data as a result of applying privacy protection may be needed rather than information about the applied privacy protection method itself. Table 36 illustrates examples of expressing cases where the privacy attribute of data has been pseudonymized, de-identified, or removed as a result of applying privacy protection.

**[Table 37]**

| bitMask | Interpretation |
|---|---|
| 0x01 | Pseudonymized data: Indicates that the data type has been converted into pseudonymized information for privacy protection. |
| 0x02 | Anonymized data: Indicates that the data type has been converted into anonymized information for privacy protection. |
| 0x04 | Data from which PII (Personally Identifiable Information) has been removed. |
| 0x08 | Identified data: Indicates that personal identifiable information may be present. |

Table 37 represents the method information defined in Table 36 as a result of a bitwise AND of privacy_protection type and a bitmask, and Table 38 below illustrates an example thereof.

**[Table 38]**

| |
|---|
| Pseudonymized_data_Flag = ((privacy_protection_type& 0x01 ) > 0 ) ? 1 : 0 |
| anonymized_data_Flag = ((privacy_protection_type & 0x02 ) > 0 ) ? 1 : 0 |
| Removed_PII_flag = ((privacy_protection_type & 0x04 ) > 0 ) ? 1 : 0 |
| Identified_data_flag = ((privacy_protection_type & 0x08 ) > 0 ) ? 1 : 0 |

Pseudonymized_data_Flag, anonymized_data_Flag, Removed_PII_flag, and Identified data_flag are information indicating whether the privacy attribute of the data has been changed to pseudonymized data, anonymized data, data with PII removed, or identified data, respectively, as a result of applying a privacy protection method. A value of 1 means that the data has been changed to the corresponding attribute, and a value of 0 means that the data has not been changed to the corresponding attribute.

The privacy protection methods defined in Tables 33, 34, 36, and 37 are examples, and other methods may also be defmed.

Protected_info_idc represents information for identifying the type of protected information.

**[Table 39]**

| **Protected_info_idc** | Description |
|---|---|
| 00 | Protects information such as faces that allow for the identification of a person. |
| 01 | Protects information such as license plates that allow for the identification of means of transportation like vehicles. |
| 10 | Protects information such as business names, or characters and drawings on signs from which a location can be inferred. |
| 11 | Information such as characters and drawings of products or objects from which an item can be inferred. |

In Table 39, a Protected_info_idc value of 00 means that information such as faces that can identify a person has been protected. A Protected_info_idc value of 01 means that information such as license plates that can identify a vehicle or other means of transportation has been protected. A Protected_info_idc value of 10 means that information such as the text or images on signs or storefronts from which a location can be inferred has been protected. A Protected_info_idc value of 11 means that information such as the text or images on products or objects from which a specific object can be inferred has been protected. It is self-evident that additional types of information to be protected may be further defined.

**[Table 40]**

| bitMask | Interpretation |
|---|---|
| 0x01 | Protects information such as faces that allow for the identification of a person. |
| 0x02 | Protects information such as license plates that allow for the identification of means of transportation like vehicles. |
| 0x04 | Protects information such as business names, or characters and drawings on signs from which a location can be inferred. |
| 0x08 | Information such as characters and drawings of products or objects from which an item can be inferred. |

Table 40 illustrates an example of a method for identifying a plurality of types of protected information through a bitmask. In this case, the values of Protected_info_idc may be defined differently from those in Table 39.

In Table 41, Protected_personal_identifiable_data_Flag, Protected_vehicle_identifiable_data_Flag, Protected_location_identifiabledata_Flag, and Protected object_identifiable_data_Flag indicate that information such as faces that can identify a person has been protected, that information such as license plates that can identify a vehicle or other means of transportation has been protected, that information such as the text or images on signs or storefronts from which a location can be inferred has been protected, and that information such as the text or images on products or objects from which a specific object can be inferred has been protected, respectively. A value of 1 means that protection has been applied to the corresponding information, and a value of 0 means that protection has not been applied to the corresponding information.

**[Table 41]**

| |
|---|
| Protected_personal_identifiable_data_Flag = ((Protected_info_idc& 0x01 ) > 0 ) ? 1 : 0 |
| Protected_vehicle_identifiable_data_Flag = ((Protected_info_idc & 0x02 ) > 0 ) ? 1 : 0 |
| Protected_location_identifiable_data_Flag = ((Protected_info_idc & 0x04 ) > 0 ) ? 1 : 0 |
| Protected_object_identifiable_data_Flag = ((Protected_info_idc & 0x08 ) > 0 ) ? 1 : 0 |

### Third Embodiment

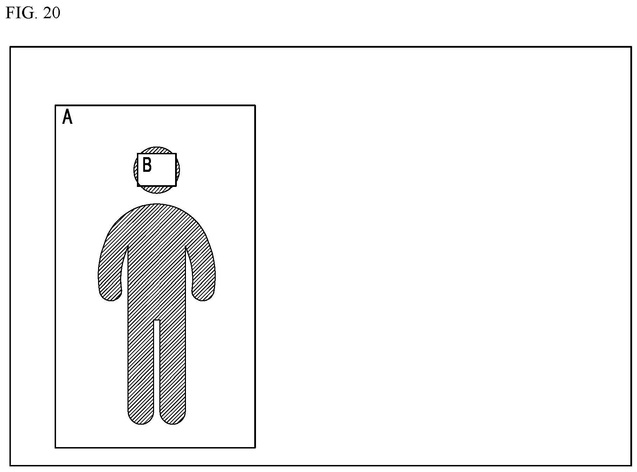

FIG. 20 illustrates an example in which a region required for image analysis and a region containing personal information coexist.

In the example of FIG. 20, region A is required for detecting a person. There exists an SEI that defines information about regions required for a specific purpose. Similarly, information about regions that are unnecessary for a specific purpose or that require caution when used for a specific purpose may also be needed. For example, personally identifiable information may be present in a defined required region or in other regions, and modification or removal optimization may be applied to such a region for privacy protection purposes. An SEI that defines information about the corresponding region may also be needed to prevent improper use. For example, in the case of region B in FIG. 20, the region corresponds to a human face and contains personally identifiable information. In this case, the personally identifiable information in region B may be removed or modified, and information about the corresponding region may be defined.

Tables 42, 43, 44, and 45 illustrate examples of methods for expressing regions for image analysis and privacy protection regions.

**[Table 42]**

| | | |
|---|---|---|
| annotated_regions( payloadSize ) { | C | **Descriptor** |
| **ar_cancel_flag** | 5 | u(1) |
| if(!ar_cancel_flag ) { | | |
| **ar_not_optimized_for_viewing_flag** | 5 | u(1) |
| **ar_not_optimized_for_machine_analysis_flag** | 5 | u(1) |
| **ar_true_motion_flag** | 5 | u(1 ) |
| **ar_occluded_object_flag** | 5 | u(1) |
| **ar_partial_object_flag_present_flag** | 5 | u(1) |
| **ar_privacy_protection_region_present_flag** | 5 | u(1) |
| **ar_object_label_present_flag** | 5 | u(1) |
| **ar_object_confidence_info_present_flag** | 5 | u(1) |
| if( ar_object_confidence_info_present_flag ) | | |
| **ar_object_confidence_length_minus1** | 5 | u(4) |
| if( ar_object_label_present_flag ) { | | |
| **ar_object_label_language_present_flag** | 5 | u(1) |
| if( ar_object_label_language_present_flag ) { | | |
| while( !byte_aligned( ) ) | | |
| **ar_bit_equal_to_zero** /* equal to 0 */ | 5 | f(1) |
| **ar_object_label_language** | 5 | st(v) |
| } | | |
| **ar_num_label_updates** | 5 | ue(v) |
| for( i = 0; i < ar_num_label_updates; i++ ) { | | |
| **ar_label_idx**[ i ] | 5 | ue(v) |
| **ar_label_cancel_flag** | 5 | u(1) |
| LabelAssigned[ ar_label_idx[ i ] ] = !ar_label_cancel_flag | | |
| if(!ar_label_cancel_flag ) { | | |
| while( !byte_aligned( ) ) | | |
| **ar_bit_equal_to_zero** /* equal to 0 */ | 5 | f(1) |
| **ar_label[** ar_label_idx [ i ] ] | 5 | st(v) |
| } | | |
| } | | |
| } | | |
| **ar_num_object_updates** | 5 | ue(v) |
| for( i = 0; i <= ar_num_object_updates; i++ ) { | | |
| **ar_object_idx**[ i ] | 5 | ue(v) |
| **ar_object_cancel_flag** | 5 | u(1) |
| ObjectTracked[ ar_object_idx[ i ] ] = !ar_object_cancel_flag | | |
| if( !ar_object_cancel_flag ) { | | |
| if( ar_object_label_present_flag ) { | | |
| **ar_object_label_update_flag** | 5 | u(1) |
| if( ar_object_label_update_flag ) | | |
| **ar_object_label**_**idx**[ ar_object_idx[ i ]] | 5 | ue(v) |
| } | | |
| **ar_bounding_box_update_flag** | 5 | u(1) |
| if(ar_bounding_box_update_flag ) { | | |
| **ar_bounding_box_cancel_flag** | 5 | u(1) |
| ObjectBoundingBoxAvail[ ar_object_idx[ i ] ] = | | |
| !ar_bounding_box_cancel_flag | | |
| if( !ar_bounding_box_canecl_flag ) { | | |
| **ar_bounding_box_top**[ ar_object_idx[ i ]] | 5 | u(16) |
| **ar_hounding_box_left**[ ar_object_idx[ i ] ] | 5 | u(16) |
| **ar_bounding_box_width**[ ar_object_idx[ i ]] | 5 | u(16) |
| **ar_bounding_box_height**[ ar_object_idx[ i ] ] | 5 | u(16) |
| if(ar_privacy_protection_region_present_flag) | | |
| **ar_privacy_protection_region_flag**[ ar_object_idx[ i ]] | 5 | u(1) |
| if( ar_partial_object_flag_present_flag ) | | |
| **ar_partial_object_flag**[ ar_object_idx[ i ] ] | 5 | u(1) |
| if( ar_object_confidence_info_present_flag ) | | |
| **ar_object_confidence**[ ar_object_idx[ i ]] | 5 | u(v) |
| } | | |
| } | | |
| } | | |
| } | | |
| } | | |
| } | | |

**[Table 43]**

| | | |
|---|---|---|
| annotated_regions( payloadSize ) { | C | **Descriptor** |
| **ar_cancel_flag** | 5 | u(1) |
| if( !ar_cancel_flag ) { | | |
| **ar_not_optimized_for_viewing_flag** | 5 | u(1) |
| **ar_not_optimized_for_machine_analysis_flag** | 5 | u(1) |
| **ar_true_motion_flag** | 5 | u(1) |
| **ar_occluded_object_flag** | 5 | u(1) |
| **ar_partial_object_flag_present_flag** | 5 | u(1) |
| **ar_privacy_protection_region_present_flag** | 5 | u(1) |
| **ar_object_label_present_flag** | 5 | u(1) |
| **ar_object_confidence_info_present_flag** | 5 | u(1) |
| if( ar_object_confidence_info_present_flag) | | |
| **ar_object_confidence_length_minus1** | 5 | u(4) |
| if( ar_object_label_present_flag ) { | | |
| **ar_object_label_language_present_flag** | 5 | u(1) |
| if( ar_object_label_language_present_flag ) { | | |
| while( !byte_aligned( ) ) | | |
| **ar_bit_equal_to_zero** /* equal to 0 */ | 5 | f(1) |
| **ar_object_label_language** | 5 | st(v) |
| } | | |
| **ar_num_label_updates** | 5 | ue(v) |
| for( i = 0; i < ar_num_label_updates; i++ ) { | | |
| **ar_label_idx**[ i ] | 5 | ue(v) |
| **ar_label_cancel_flag** | 5 | u(1) |
| LabelAssigned[ ar_label_idx[ i ] ] = !ar_label_cancel_flag | | |
| if( !ar_label_cancel_flag ) { | | |
| while( !byte_aligned( ) ) | | |
| **ar_bit_equal_to_zero** /* equal to 0 */ | 5 | f(1) |
| **ar_label[ ar_label_idx**[ i ] ] | 5 | st(v) |
| } | | |
| } | | |
| } | | |
| **ar_num_object_updates** | 5 | ue(v) |
| for( i = 0; i <= ar_num_object_updates; i++ ) { | | |
| **ar_object_idx**[ i ] | 5 | ue(v) |
| **ar_object_cancel_flag** | 5 | u(1) |
| ObjectTracked[ ar_object_idx[ i ] ] = !ar_object_cancel_flag | | |
| if( !ar_object_cancel_flag ) { | | |
| if( ar_object_label_present_flag ) { | | |
| **ar_object_label_update_flag** | 5 | u(1) |
| if( ar_object_label_update_flag ) | | |
| **ar_object_label_idx**[ ar_object_idx[ i ] ] | 5 | ue(v) |
| } | | |
| **ar_bounding_box_update_flag** | 5 | u(1) |
| if( ar_bounding_box_update_flag ) { | | |
| **ar_bounding_box_cancel_flag** | 5 | u(1) |
| ObjectBoundingBoxAvail[ ar_object_idx[ i ] ] = | | |
| !ar_bounding_box_cancel_flag | | |
| if( !ar_bounding_box_cancel_flag ) { | | |
| **ar_bounding_box_top[** ar_object_idx[ i ] ] | 5 | u(16) |
| **ar_bounding_box_left**[ ar_object_idx[ i ] ] | 5 | u(16) |
| **ar_bounding_box_width**[ ar_object_idx[ i ] ] | 5 | u(16) |
| **ar_bounding_box_height**[ ar_object_idx[ i ] ] | 5 | u(16) |
| if(ar_privacy_protection_region_present_flag) | | |
| **ar_privacy_protection**_**region_flag**[ ar_object_idx[ i ] ] | 5 | u(1) |
| if( ar_partial_object_flag_present_flag && | | |
| !ar_privacy_protection_region_flag[ ar_object_idx[ i ] ] ) | | |
| **ar_partial_object_flag**[ ar_object_idx[ i ] ] | 5 | u(1) |
| if( ar_object_confidence_info_present_flag && | | |
| !ar_privacy_protection_region_flag[ ar_object_idx[ i ] ]) | | |
| **ar_object_confidence**[ ar_object_idx[ i ] ] | 5 | u(v) |
| } | | |
| } | | |
| } | | |
| } | | |
| } | | |
| } | | |

Tables 42 and 43 independently define, for each defined region, information as to whether privacy protection has been applied to that region. For example, information (e.g., size, location, etc.) about region A and region B is defined separately.

**[Table 44]**

| | | |
|---|---|---|
| annotated_regions( payloadSize ) { | C | **Descriptor** |
| **ar_cancel_flag** | 5 | u(1) |
| if( !ar_cancel_flag ) { | | |
| **ar_ot_optimized_for_viewing_flag** | 5 | u(1) |
| **ar_not_optimized_for_machine_analysis_flag** | 5 | u(1) |
| **ar_true_motion_flag** | 5 | u(1) |
| **ar_occluded_object_flag** | 5 | u(1) |
| **ar_partial_object_flag_present_flag** | 5 | u(1) |
| **ar_privacy_protection_region_present_flag** | 5 | u(1) |
| **ar_object_label_present_flag** | 5 | u(1) |
| **ar_object_confidence_info_present_flag** | 5 | u(1) |
| if( ar_object_confidence_info_present_flag ) | | |
| **ar_object_confidence_length_minus1** | 5 | u(4) |
| if( ar_object_label_present_flag ) { | | |
| **ar_object_label_language_present_flag** | 5 | u(1) |
| if( ar_object_label_language_present_flag ) { | | |
| while( !byte_aligned( ) ) | | |
| **ar_bit_equal_to_zero** /* equal to 0 */ | 5 | f(1) |
| **ar_object_label_language** | 5 | st(v) |
| } | | |
| **ar_num_label_updates** | 5 | ue(v) |
| for( i = 0; i < ar_num_label_updates; i++ ) { | | |
| **ar_label_idx[** i ] | 5 | uc(v) |
| **ar_label_cancel_flag** | 5 | u(1) |
| LabelAssigned[ ar_label_idx[ i ] ] = !ar_label_cancel_flag | | |
| if( !ar_label_cancel_flag ) { | | |
| while( !byte_aligned( ) ) | | |
| **ar_bit_equal_to_zero** /* equal to 0 */ | 5 | f(1) |
| **ar_label[ ar_label_idx**[ i ] ] | 5 | st(v) |
| } | | |
| } | | |
| } | | |
| **ar_num_object_updates** | 5 | ue(v) |
| for( i = 0; i <= ar_num_object_updates; i++ ) { | | |
| **ar_object_idx**[ i ] | 5 | ue(v) |
| **ar_object_cancel_flag** | 5 | u(1) |
| ObjectTracked[ ar_object_idx[ i ] ] = !ar_object_cancel_flag | | |
| if( !ar_object_cancel_flag) { | | |
| if( ar_object_label_present_flag ) { | | |
| **ar_object_label_update_flag** | 5 | u(1) |
| if( ar_object_label_update_flag ) | | |
| **ar_object_label_idx[** ar_object_idx[ i ] ] | 5 | ue(v) |
| } | | |
| **ar_bounding_box_update_flag** | *5* | u(1) |
| if( ar_bounding_box_update_flag ) { | | |
| **ar_bounding_box_cancel_flag** | 5 | u(1) |
| ObjectBoundingBoxAvail[ ar_object_idx[ i ] ] = | | |
| !ar_bounding_box_cancel_flag | | |
| if( ! ar_bounding_box_canecl_flag ) { | | |
| **ar_bounding_box_top**[ ar_object_idx[ i ] ] | 5 | u(16) |
| **ar_bounding_box_left**[ ar_object_idx[ i ] ] | 5 | u(16) |
| **ar_bounding_box_width**[ ar_object_idx[ i ] ] | 5 | u(16) |
| **ar_bounding_box_height[** ar_object_idx[ i ] ] | 5 | u(16) |
| if(ar_privacy_protection_region_present_flag) { | | |
| **ar_privacy_protection_region_flag**[ ar_object_idx[ i ] ] | 5 | u(1) |

| | | |
|---|---|---|
| if(!ar_privacy_protection_region_flag[ ar_object_idx[ i ] ]){ | | |
| **a r_** | 5 | u(1) |
| **include_privacy_on_region_flag**[ ar_object_idx[ i ] ]) | | |
| if(ar_ | | |
| include_privacy_protection_region_flag[ ar_object_idx[ i ] ])) | | |
| { | | |
| **num_protected_region_minus1** | 5 | ue(v) |
| for( j = 0; j <= num_protected_region_minus1; j++ ) { | | |
| **pii_region_top[**j] | 5 | u(16) |
| **pii_region_left** [j] | 5 | u(16) |
| **pii_region_width** [j] | 5 | u(16) |
| **pii_region_height** [j] | 5 | u(16) |
| **}** | | |
| **}** | | |
| **}** | | |
| **}** | | |
| | | |
| | | |
| if( ar_partial_object_flag_present_flag && | | |
| !ar_ privacy_protection_region_flag[ ar_object_idx[ i ] ] ) | | |
| **ar_partial_object_flag**[ ar_object_idx[ i ] ] | 5 | u(1) |
| if( ar_object_confidence_info_present_flag && | | |
| !ar_privacy_protection_region_flag[ ar_object_idx[ i ] ]) | | |
| **ar_object_confidence**[ ar_object_idx[ i ] ] | 5 | u(v) |
| } | | |
| } | | |
| } | | |
| } | | |
| } | | |
| } | | |

Table 44 illustrates an example of dependently expressing a case in which a privacy protection region or a personal information region is partially included within a defined annotated region.

**[Table 45]**

| | | |
|---|---|---|
| annotated_regions( payloadSize ) { | C | **Descriptor** |
| **ar_cancel_flag** | 5 | u(1) |
| if( !ar_cancel_flag ) { | | |
| **ar_not_optimized_for_viewing_flag** | 5 | u(1) |
| **ar_not_optimized_for_machine_analysis_flag** | 5 | u(1) |
| **ar_true_motion_flag** | 5 | u(1) |
| **ar_occluded_object_flag** | 5 | u(1) |
| **ar_partial_object_flag_present_flag** | 5 | u(1) |
| **ar_privacy_protection_region_present_flag** | 5 | u(1) |
| **ar_object_label_present_flag** | 5 | u(1) |
| **ar_object_confidence_info_present_flag** | 5 | u(1) |
| if( ar_object_confidence_info_present_flag ) | | |
| **ar_object_confidence_length_minus1** | 5 | u(4) |
| if( ar_object_label_present_flag ) { | | |
| **ar_object_label_language_present_flag** | 5 | u(1) |
| if( ar_object_label_language_present_flag ) { | | |
| while( !byte_aligned( ) ) | | |
| **ar_bit_equal_to_zero** /* equal to 0 */ | 5 | f(1) |
| **ar_object_label_language** | 5 | st(v) |
| | | |
| **ar_num_label_updates** | 5 | ue(v) |
| for( i = 0; i < ar_num_label_updates; i++ ) { | | |
| **ar_label_idx**[ i ] | 5 | ue(v) |
| **ar_label_cancel_flag** | 5 | u(1) |
| LabelAssigned[ ar_label_idx[ i ] ] = !ar_label_cancel_flag | | |
| if( !ar_label_cancel_flag ) { | | |
| while( !byte_aligned( ) ) | | |
| **ar_bit_equal_to_zero** /* equal to 0 */ | 5 | f(1) |
| **ar_label[ ar_label_idx**[ i ] ] | 5 | st(v) |
| } | | |
| } | | |
| } | | |
| **ar_num_object_updates** | 5 | ue(v) |
| for( i = 0; i <= ar_num_object_updates; i++ ) { | | |
| **ar_object_idx**[ i ] | 5 | ue(v) |
| **ar_object_cancel_flag** | 5 | u(1) |
| ObjectTracked[ ar_object_idx[ i ] ] = !ar_object_cancel_flag | | |
| if( !ar_object_cancel_flag ) { | | |
| if( ar_object_label_present_flag ) { | | |
| **ar_object_label_update_flag** | 5 | u(1) |
| if( ar_object_label_update_flag ) | | |
| **ar_object_label_idx[** ar_object_idx[ i ] ] | 5 | ue(v) |
| } | | |
| **ar_bounding_box_update_flag** | 5 | u(1) |
| if( ar_bounding_box_update_flag ) { | | |
| **ar_bounding_box_cancel_flag** | 5 | u(1) |
| ObjectBoundingBoxAvail[ ar_object_idx[ i ] ] = | | |
| ! ar_bounding_box_cancel_flag | | |
| if( !ar_bounding_box_cancel_flag ) { | | |
| **ar_bounding_box_top**[ ar_object_idx[ i ] ] | 5 | u(16) |
| **ar_bounding_box_left**[ ar_object_idx[ i ] ] | 5 | u(16) |
| **ar_bounding_box_width**[ ar_object_idx[ i ] ] | 5 | u(16) |
| **ar_bounding_box_height**[ ar_object_idx[ i ] ] | 5 | u(16) |
| if(ar_privacy_protection_region_present_flag){ | | |
| **ar_** | 5 | u(1) |
| **include_privacy_protection_region_flag**[ ar_object_idx[ i ] ]) | | |
| if(ar_ | | |
| include_privacy_protection_region_flag[ ar_object_idx[ i ] ])) | | |
| **{** | | |
| **num_protected**_**region_minus1** | 5 | ue(v) |
| for( j = 0; j < num_protected_region_minus1; j++ ) { | | |
| **pii_region_top**[j] | 5 | u(16) |
| **pii_region_left** [j] | 5 | u(16) |
| **pii**_**region_width** [j] | 5 | u(16) |
| **pii_region_height** [j] | 5 | a(16) |
| **}** | | |
| **}** | | |
| **}** | | |
| if( ar_partial_object_flag_present_flag && | | |
| !ar_ privacy_protection_region_flag[ ar_object_idx[ i ] ] ) | | |
| **ar_partial_object_flag**[ ar_object_idx[ i ] ] | 5 | u(l) |
| if( ar_object_confidence_info_present_flag && | | |
| !ar_ privacy_protection_region_flag[ ar_object_idx[ i ] ]) | | |
| **ar_object_confidence**[ ar_object_idx[ i ] ] | 5 | u(v) |
| } | | |
| } | | |
| } | | |
| } | | |
| } | | |
| } | | |

In Table 45, when num_protected_region_minus1 is 0, the region defined by ar_bounding_box_top[ar_object_idx[i]], ar_bounding_box_left[ar_object_idx[i]], ar_bounding_box_width[ar_object_idx[i]], and ar_bounding_box_height[ar_object_idx[i]] may be entirely a privacy protection processing region or a region containing personal information.

The information defined in Tables 42, 43, 44, and 45 may be reorganized through a subset or combination thereof.

The annotated regions SEI message conveys parameters for identifying annotated regions using bounding boxes indicating the size and location of identified objects. Use of this SEI message requires the definition of the following variables.

Cropped picture width and height in units of luma samples, denoted as CroppedWidth and CroppedHeight, respectively.

Chroma subsampling width and height, denoted as SubWidthC and SubHeightC, respectively.

Conformance cropping window left offset, ConfWinLeftOffset.

Conformance cropping window top offset, ConfWinTopOffset.

The following describes examples of semantics for Tables 42, 43, 44, and 45.

ar_cancel_flag _flag equal to 1 indicates that the annotated regions SEI message cancels the persistence of a previous annotated regions SEI message. Here, the previous annotated regions SEI is associated with one or more layers to which the annotated regions SEI message applies. ar_cancel_flag equal to 0 indicates that annotated region information follows.

When ar_cancel_flag is equal to 1 or a new CVS of the current layer begins, the variables LabelAssigned[i], ObjectTracked[i], and ObjectBoundingBoxAvail are set equal to 0 for i in the range of 0 to 255, inclusive.

ar_not_optimized_for_viewing_flag equal to 1 indicates that the decoded picture to which the annotated regions SEI message applies is not optimized for human viewing but is optimized for some other purpose such as algorithmic object classification performance. ar_not_optimized_for_viewing_flag equal to 0 indicates that the decoded picture to which the annotated regions SEI message applies may or may not be optimized for human viewing.

ar_not_optimized_for_machine_analysis_flag equal to 1 indicates that the decoded picture to which the annotated regions SEI message applies is not optimized for machine analysis. ar_not_optimized_for_machine_analysis_flag equal to 0 indicates that the decoded pictures to which the annotated regions SEI message applies may or may not be optimized for machine analysis.

ar_true_motion_flag equal to 1 indicates that motion information in the coded picture to which the annotated regions SEI message applies has been selected for the purpose of accurately representing object motion for the objects in the annotated regions. ar_true_motion_flag equal to 0 indicates that motion information in the coded picture to which the annotated regions SEI message applies may or may not have been selected for the purpose of accurately representing object motion for the objects in the annotated regions.

ar_occluded_object_flag equal to 1 specifies that each of the syntax elements ar_bounding_box_top[ar_object_idx[i]], ar_bounding_box_left[ar_object_idx[i]], ar_bounding_box_width[ar_object_idx[i]], and ar_bounding_box_height[ar_object_idx[i]] indicates the size and location of an object, or a part of an object, that may be invisible or only partially visible within the cropped decoded picture. ar_occluded_object_flag equal to 0 specifies that the syntax elements ar_bounding_box_top[ar_object_idx[i]], ar_bounding_box_left[ar_object_idx[i]], ar_bounding_box_width[ar_object_idx[i]], and ar_bounding_box_height[ar_object_idx[i]] indicate the size and location of an object that is wholly visible within the cropped decoded picture. It is a requirement of bitstream conformance that the value of ar_occluded_object_flag shall be identical for all annotated_regions( ) syntax structures in a CVS.

ar_partial_object_flag_present_flag equal to 1 indicates that ar_partial_object_flag[ar_object_idx[i]] syntax elements are present. ar_partial_object_flag_present_flag equal to 0 indicates that ar_partial_object_flag[ar_object_idx[i]] syntax elements are not present. It is a requirement of bitstream conformance that the value of ar_partial_object_flag_present_flag shall be identical for all annotated_regions( ) syntax structures in a CVS.

ar_object_label_present_flag equal to 1 indicates that label information corresponding to the objects of the annotated regions is present. ar_object_label_present_flag equal to 0 indicates that label information corresponding to the objects of the annotated regions is not present.

ar_privacy_protection_region_present_flag equal to 1 indicates that ar_privacy_protection_region_flag[ar_object_idx[i]] syntax elements are present. ar_privacy_protection_region_present_flag equal to 0 indicates that ar_privacy_protection_region_flag[ar_object_idx[i]] syntax elements are not present. It is a requirement of bitstream conformance that the value of ar_privacy_protection_region_present_flag shall be identical for all annotated_regions( ) syntax structures in a CVS.

ar_privacy_protection_region_flag[ar_object_idx[i]] equal to 1 specifies that the syntax elements ar_bounding_box_top[ar_object_idx[i]], ar_bounding_box_left[ar_object_idx[i]], ar_bounding_box_width[ar_object_idx[i]], and ar_bounding_box_height[ar_object_idx[i]] indicate the size and location of a privacy protection region within the decoded picture. ar_privacy_protection_region_flag[ar_object_idx[i]] equal to 0 specifies that the syntax elements ar_bounding_box_top[ar_object_idx[i]], ar_bounding_box_left[ar_object_idx[i]], ar_bounding_box_width[ar_object_idx[i]], and ar_bounding_box_height[ar_object_idx[i]] indicate the size and location of a privacy protection region that may or may not be present within the decoded picture. When not present, the value of ar_partial object_flag[ar_object_idx[i]] is inferred from the previous annotated regions SEI message (when present) in output order of the CVS.

ar_include_privacy_protection_region_flag[ar_object_idx[i]] equal to 1 indicates that the defined annotated region partially includes a region to which privacy protection has been applied, or partially includes personally identifiable information. ar_include_privacy_protection_region_flag[ar_object_idx[i]] equal to 0 indicates that the defined annotated region may not partially contain or include personal identification information, and privacy protection is applied to that region.

num_protected_region_minus1 indicates the total number of regions containing protected personally identifiable information or regions containing personally identifiable information, minus 1. The value of num_protected_region shall be in the range of 0 to 255, inclusive.

pii_region_top[j], pii_region_left[j], pii_region_width[j], and pii_region_height[j] specify the coordinates of the top-left corner and the width and height, respectively, of a privacy protection region or a region containing personally identifiable information within the region defined by ar_bounding_box_top[ar_object_idx[i]], ar_bounding_box_left[ar_object_idx[i]], ar_bounding_box_width[ar_object_idx[i]], and ar_bounding_box_height[ar_object_idx[i]].

ar_object_confidence_info_present_flag equal to 1 indicates that ar_object_confidence[ar_object_idx[i]] syntax elements are present.

ar_object_confidence_info_present_flag equal to 0 indicates that ar_object_confidence[ar_object_idx[i]] syntax elements are not present. It is a requirement of bitstream conformance that the value of ar_object_confidence_present_flag shall be identical for all annotated_regions( ) syntax structures in a CVS.

ar_object_confidence_length minus1 + 1 specifies the length of ar_object_confidence[ar_object_idx[i]] syntax elements in bits. It is a requirement of bitstream conformance that the value of ar_object_confidence_length minus1 shall be identical for all annotated_regions( ) syntax structures in a CVS.

ar_object_label _language_present_ flag equal to 1 indicates that the ar_object_label_language syntax element is present. ar_object_label_language_present_flag equal to 0 indicates that the ar_object_label_language syntax element is not present.

ar_bit_equal_to_zero shall be equal to 0.

ar_object_label_language contains a language tag specified in IETF RFC 5646 with a null termination byte of 0x00. The length of the ar_object_label_language syntax element shall be less than or equal to 255 bytes, excluding the null termination byte. When not present, the language of the labels is not specified.

ar_num_label_updates indicates the total number of labels associated with annotated regions to be signaled. The value of ar_num_label_updates shall be in the range of 0 to 255, inclusive.

ar_label_idx[i] indicates the index of the signaled label. The value of ar_label_idx[i] shall be in the range of 0 to 255, inclusive.

ar_label_cancel_flag_flag equal to 1 cancels the persistence scope of the ar_label_idx[i]-th label. ar_label_cancel_flag_flag equal to 0 indicates that the signaled value is assigned to the ar_label_idx[i]-th label.

ar_label[ar_label_idx[i]] specifies the content of the ar_label_idx[i]-th label. The length of the ar_label[ar_label_idx[i]] syntax element shall be less than or equal to 255 bytes, excluding the null termination byte.

ar_num_object_updates indicates the number of object updates to be signaled. ar_num_object_updates shall be in the range of 0 to 255, inclusive.

ar_object_idx[i] is the index of the object parameters to be signaled. ar_object_idx[i] shall be in the range of 0 to 255, inclusive.

ar_object_cancel_flag_flag equal to 1 cancels the persistence scope of the ar_object_idx[i]-th object. ar_object_cancel_flag_flag equal to 0 indicates that the parameters associated with the tracked ar_object_idx[i]-th object will be signaled.

ar_object_label _update_flag equal to 1 indicates that an object label will be signaled. ar_object_label_update_flag equal to 0 indicates that an object label will not be signaled.

ar_object_label_idx[ar_object_idx[i]] indicates the index of the label corresponding to the ar_object_idx[i]-th object. When ar_object_label_idx[ar_object_idx[i]] is not present, its value is inferred from the previous annotated regions SEI message (when present) in output order of the same CVS.

ar_bounding_box_update_flag equal to 1 indicates that object bounding box parameters will be signaled. ar_bounding_box_update_flag equal to 0 indicates that object bounding box parameters will not be signaled.

ar_bounding_box_cancel_flag equal to 1 cancels the persistence scope of ar_bounding_box_top[ar_object_idx[i]], ar_bounding_box_left[ar_object_idx[i]], ar_bounding_box_width[ar_object_idx[i]], ar_bounding_box_height[ar_object_idx[i]], ar_partial_object_flag[ar_object_idx[i]], and ar_object_confidence[ar_object_idx[i]]. ar_bounding_box_cancel_flag equal to 0 indicates that the syntax elements ar_bounding_box_top[ar_object_idx[i]], ar_bounding_box_left[ar_object_idx[i]], ar_bounding_box_width[ar_object_idx[i]], ar_bounding_box_height[ar_object_idx[i]], ar_partial_object_flag[ar_object_idx[i]], and ar_object_confidence[ar_object_idx[i]] will be signaled.

ar_bounding_box_top[ar_object_idx[i]], ar_bounding_box_left[ar_object_idx[i]], ar_bounding_box_width[ar_object_idx[i]], and ar_bounding_box_height[ar_object_idx[i]] specify the coordinates of the top-left corner and the width and height, respectively, of the bounding box of the ar_object_idx[i]-th object in the cropped decoded picture associated with the conformance cropping window specified by the active SPS.

The value of ar_bounding_box_1eft[ar_object_idx[i]] shall be in the range of 0 to CroppedWidth / SubWidthC - 1, inclusive.

The value of ar_bounding_box_top[ar_object_idx[i]] shall be in the range of 0 to CroppedHeight / SubHeightC - 1, inclusive.

The value of ar_bounding_box_width[ar_object_idx[i]] shall be in the range of 0 to CroppedWidth / SubWidthC - ar_bounding_box_left[ar_object_idx[i]], inclusive.

The value of ar_bounding_box_height[ar_object_idx[i]] shall be in the range of 0 to CroppedHeight / SubHeightC - ar_bounding_box_top[ar_object_idx[i]], inclusive.

The identified object rectangle contains luma samples with horizontal picture coordinates from SubWidthC * (ConfWinLeftOffset + ar_bounding_box_left[ar_object_idx[i]]) to SubWidthC * (ConfWinLeftOffset + ar_bounding_box_left[ar_object_idx[i]] + ar_bounding_box_width[ar_object_idx[i]]) - 1, inclusive, and with vertical picture coordinates from SubHeightC * (ConfWinTopOffset + ar_bounding_box_top[ar_object_idx[i]]) to SubHeightC * (ConfWinTopOffset + ar_bounding_box_top[ar_object_idx[i]] + ar_bounding_box_height[ar_object_idx[i]]) - 1, inclusive.

The values of ar_bounding_box_top[ar_object_idx[i]], ar_bounding_box_left[ar_object_idx[i]], ar_bounding_box_width[ar_object_idx[i]], and ar_bounding_box_height[ar_object_idx[i]] are maintained in output order within the CVS for each value of ar_object_idx[i]. When not present, the values of ar_bounding_box_top[ar_object_idx[i]], ar_bounding_box_left[ar_object_idx[i]], ar_bounding_box_width[ar_object_idx[i]], or ar_bounding_box_height[ar_object_idx[i]] are inferred from the previous annotated regions SEI message (when present) in output order of the CVS.

ar_partial_object_flag[ar_object_idx[i]] equal to 1 specifies

that the syntax elements ar_bounding_box_top[ar_object_idx[i]], ar_bounding_box_left[ar_object_idx[i]], ar_bounding_box_width[ar_object_idx[i]], and ar_bounding_box_height[ar_object_idx[i]] indicate the size and location of an object that may be only partially visible within the cropped decoded picture.

ar_partial_object_flag[ar_object_idx[i]] equal to 0 specifies that the syntax elements ar_bounding_box_top[ar_object_idx[i]], ar_bounding_box_left[ar_object_idx[i]], ar_boundingbox_width[ar_object_idx[i]], and ar_bounding_box_height[ar_object_idx[i]] indicate the size and location of an object that may be only partially visible or not visible within the cropped decoded picture. When not present, the value of ar_partial object_flag[ar_object_idx[i]] is inferred from the previous annotated regions SEI message (when present) in output order of the CVS.

ar_object_confidence[ar_object_idx[i]] indicates the confidence associated with the ar_object_idx[i]-th object in units of 2-(ar_object_confidence_length_minus1 + 1), such that a higher value of ar_object_confidence[ar_object_idx[i]] indicates higher confidence. The length of the ar_object_confidence[ar_object_idx[i]] syntax element may be ar_object_confidence length minus 1 + 1 bits. When not present, the value of ar_object_confidence[ar_object_idx[i]] is inferred from the previous annotated regions SEI message (when present) in output order of the CVS.

### Fourth Embodiment

Generative face video (GFV), which encodes/decodes human faces through a combination of neural network-based techniques and conventional video encoding/decoding techniques, has been proposed.

Table 46 illustrates an example of the syntax of the proposed GFV.

**[Table 46]**

| | |
|---|---|
| generative_face_video ( payloadSize ) { | **Descriptor** |
| **gfv_id** | ue(v) |
| **gfv_base_pic_flag** /*indicate if current decoded output picture is a base picture*/ | u(1) |
| if( gfv_base_pic_flag ) { /*specify TranslatorNN( )*/ | |
| **gfv_nn_base_flag** | u(1) |
| **gfv_nn_mode_idc** | ue(v) |
| if( gfv_nn_mode_idc = = 1 ) { | |
| while( !byte_aligned( ) ) | |
| **gfv_nn_reserved**_**zero_bit_a** | u(1) |
| **gfv_nn_tag_uri** | st(v) |
| **gfv_nn_uri** | st(v) |
| } | |
| } else /* current decoded output picture is a driving picture*/ | |
| **gfv_drive_pic_fusion_flag** /*indicate if DrivePicture is input to GenerativeNN( )*/ | ue(v) |
| **gfv_coordinate_present_flag** | u(1) |
| if( gfv_coordinate_present_flag ) { | |
| **gfv_coordinate_precision_factor_minus1** | ue(v) |
| **gfv_num_kp_minus1** | ue(v) |
| **gfv_kp_pred_flag** | u(1) |
| **gfv_coordinate_z_present_flag** | u(1) |
| if(gfv_coordinate_z_present_flag ) | |
| **gfv_coordinate_z_max_value_minus1** | ue(v) |
| for( i = 0; i <= num_kp_minus1; i++ ) { | |
| if(!gfv_kp_pred_flag) { | |
| **gfv_coordinate_x_abs**[ i ] | u(v) |
| if( gfv_coordinate_x_abs[ i ] ) | |
| **gfv_coordinate_x_sign_flag**[ i ] | u(1) |
| **gfv_coordinate_y_abs[ i ]** | u(v) |
| if( gfv_coordinate_y_abs[ i ] ) | |
| **gfv_coordinate_y_sign_flag[ i ]** | u(1) |
| if( gfv_coordinate_z_present_flag ) { | |
| **gfv_coordinate_z_abs**[ i ] | u(v) |
| if( gfv_coordinate_z_abs[ i ] ) | |
| **gfv_coordinate_z_sign_flag**[ i ] | u(1) |
| } | |
| } else { | |
| **gfv_coordinate_dx_abs**[ i ] | u(v) |
| if(gfv_coordinate_dx_abs[ i ] ) | |
| **gfv_coordinate_dx_sign_flag**[ i ] | u(1) |
| **gfv_coordinate_dy_abs**[ i ] | u(v) |
| if( gtv_coordinate_dy_abs[ i ] ) | |
| **gfv_coordinate_dy_sign_flag**[ i ] | u(1) |
| if( gfv_coordinate_z_present_flag ) { | |
| **gfv_coordinate_dz_abs**[ i ] | u(v) |
| if( gfv_coordinate_dz_abs[ i ] ) | |
| **gfv_coordinate_dz_sign_flag**[ i ] | u(1) |
| } | |
| } | |
| } | |
| } | |
| **gfv_matrix_present_flag** | u(1) |
| if(gfv_matrix_present_flag ) { | |
| **gfv_matrix_element_precision_factor_minus1** | ue(v) |
| **gfv_num_matrix_types_minus1** | uc(v) |
| for( i = 0; i <= num_matrix_types_minus1; i++ ) { | |
| **gfv_matrix_type_idx**[ i ] | ue(6) |
| if( gfv_matrix_type_idx[ i ] = = 0 \|\| gfv_matrix_type_idx[ i ] == 1 ) { | |
| if( gfv_coordinate_present_flag ) | |
| **gfv_num_matrices_equal_to_num_kps_flag**[ i ] | u(1) |
| if( !gfv_coordinate_present_flag \| \| !gfv_ num_matrix_equal_to_num_kps_flag[ i ] ) | |
| **gfv_num_matrices_info**[ i ] | ue(v) |
| }else if( gfv_matrix_type_idx[ i ] = = 2 ∥ grv_ matrix_type_idx[ i ] = = 3 ∥ gfv_matrix_type_idx[ i ] >= 7 ){ | |
| if( gfv_matrix_type_idx[ i ] >= 7 ) | |
| **gfv_num_matrices_minus1**[ i ] | ue(v) |
| **gfv_matrix_width_minus1**[ i ] | ue(v) |
| **gfv_matrix_height_minus1**[ i ] | ue(v) |
| }else if( gfv_ matrix_type_idx[ i ] >= 4 && gfv_matrix_type_idx[ i ] <= 6 && !gfv_ coordinate_present_flag ){ | |
| **gfv_matrix_for_3D_space_flag**[ i ] | u(1) |
| for( j = 0; j < numMatrices[ i ]; j++ ) | |
| for( k = 0; k < matrixHeight[ i ]; k++ ) | |
| for( m = 0; m <matrixWidth[ i ]; m++ ) { | |
| **gfv_matrix_element_int**[ i ][ j ][ k ][ m ] | ue(v) |
| **gfv_matrix_element_dec**[ i ][ j ][ k ][ m] | u (v) |
| if( gfv_matrix_element_int[ i][ j ][ k ][ m ] ∥ gfv_ matrix_element_dec[ i ][ j ][ k ][ m ] ) | |
| **gfv_matrix_element_sign_flag**[ i ][ j ][ k ][ m ] | u(1) |
| } | |
| | |
| } | |
| } | |
| } | |
| if( gfv_base_pic_flag && !gfv_key_present_flag) | |
| if( gfv_nn_mode_idc == 0 ) { | |
| while( !byte_aligned( ) ) | |
| **gfv_nn_reserved_zero_bit_b** | u(1) |
| for( i = 0; more_data_in_payload( ); i++ ) | |
| **gfv_nn_payload_byte**[ i ] | b(8) |
| } | |
| } | |

In the case of such generative video, there may be modifications to personally identifiable information. In addition, facial information may be intentionally modified depending on the base picture used as the foundation for face generation and the face generation network. Therefore, caution may be required in some cases when used for personal identification purposes, and it is necessary to define whether personally identifiable information has been transformed or whether the data is suitable for personal identification purposes, in order to prevent improper use.

Tables 47, 48, and 49 illustrate examples of defining whether personally identifiable information has been transformed or whether the data is suitable for personal identification purposes in the generative face video SEI message syntax.

**[Table 47]**

| | |
|---|---|
| generative_face_video ( payloadSize ) { | **Descriptor** |
| **gfv_id** | ue(v) |
| **gfv_base_pic_flag** /*indicate if current decoded output picture is a base picture*/ | u(1) |
| **gfv_not_optimized_for_personal_identification_flag** | u(1) |
| **not_optimized_for_machine_analysis_flag** | u(1) |
| if( gfv_base_pic_flag ) { /*specify TranslatorNN( )*/ | |
| **gfv_nn_base_flag** | u(1) |
| **gfv_nn_mode_idc** | ue(v) |
| if( gfv_nn_mode_idc == 1 ) { | |
| while( !byte_aligned( ) ) | |
| **gfv_nn_reserved_zero_bit_a** | u(1) |
| **gfv_nn_tag_uri** | st(v) |
| **gfv_nn_uri** | st(v) |
| } | |
| } else /* current decoded output picture is a driving picture*/ | |
| **gfv_drive_pic_fusion_flag** /*indicate if DrivePicture is input to GenerativeNN( )*/ | ue(v) |
| **gfv_coordinate_present_flag** | u(1) |
| if( gfv_coordinate_present_flag ) { | |
| **gfv_coordinate_precision_factor_minus1** | ue(v) |
| **gfv_num_kp_minus1** | ue(v) |
| **gfv_kp_pred_flag** | u(1) |
| **gfv_coordinate_z_present_flag** | u(1) |
| if(gfv_coordinate_z_present_flag ) | |
| **gfv_coordinate_z_max_value_minus1** | ue(v) |
| for( i = 0; i <= num_kp_minus1; i ∥ ) { | |
| if(!gfv_kp_pred_flag) { | |
| **gfv_coordinate_x_abs**[ i ] | u(v) |
| if( gfv_coordinate_x_abs[ i ] ) | |
| **gfv_coordinate_x_sign_flag**[ i ] | u(1) |
| **gfv_coordinate_y_abs**[ i ] | u(v) |
| if( gfv_coordinate_y_abs[ i ] ) | |
| **gfv_coordinate_y_sign_flag**[ i ] | u(1) |
| if( gfv_coordinate_z_present_flag ) { | |
| **gfv_coordinate_z_abs**[ i ] | u(v) |
| if( gfv_coordinate_z_abs[ i ] ) | |
| **gfv_coordinate_z_sign_flag**[ i ] | u(1) |
| } | |
| } else { | |
| **gfv_coordinate_dx_abs**[ i ] | u(v) |
| if(gfv_coordinate_dx_abs[ i ] ) | |
| **gfv_coordinate_dx_sign_flag**[ i ] | u(1) |
| **gfv_coordinate_dy_abs**[ i ] | u(v) |
| if( gfv_coordinate_dy_abs[ i ] ) | |
| **gfv_coordinate_dy_sign_flag**[ i ] | u(1) |
| if( gfv_coordinate_z_present_flag ) { | |
| **gfv_coordinate_dz_abs**[ i ] | u(v) |
| if( gfv_coordinate_dz_abs[ i ] ) | |
| **gfv_coordinate_dz_sign_flag**[ i ] | u(1) |
| } | |
| } | |
| } | |
| } | |
| **gfv_matrix_present_flag** | u(1) |
| if(gfv_matrix_present_flag ) { | |
| **gfv_matrix_element_precision_factor_minus1** | ue(v) |
| **gfv_num_matrix_types_minus1** | ue(v) |
| for( i = 0; i <= num_matrix_types_minus1; i++ ) { | |
| **gfv_matrix_type_idx**[ i ] | u(1) |
| gfv_matrix_pii_transformed_flag | |
| **gfv_matrix_transformed_flag[i**] | u(1) |
| if(gfv_matrix_transformed_flag[i] == 1){ | |
| **gfv_matrix_property**[i] | u(1) |
| } | |
| if( gfv_matrix_type_idx[ i ] == 0 ∥ gfv_matrix_type_idx[ i ] == 1 ) { | |
| if( gfv_coordinate_present_flag ) | |
| **gfv_num_matrices_equal_to_num_kps_flag**[ i ] | u(1) |
| if( !gfv_coordinate_present_flag ∥ !gfv_ num_matrix_equal_to_num_kps_flag[ i ] ) | |
| **gfy_num_matrices_info**[ i ] | ue(v) |
| }else if( gfv_matrix_type_idx[ i ] == 2 ∥ gfv_ matrix_type_idx[ i ] == 3 ∥ gfv_matrix_type_idx[ i ] >= 7 ){ | |
| if( gfv_matrix_type_idx[ i ] >= 7 ) | |
| **gfv_num_matrices_minus1**[ i ] | uc(v) |
| **gfv_matrix_width_minus1**[ i ] | ue(v) |
| **gfv_matrix_height_minus1**[ i ] | ue(v) |
| }else if( gfv_ matrix_type_idx[ i ] >= 4 && gfv_matrix_type_idx[ i ] <= 6 && !gfv_ coordinate_present_flag ){ | |
| **gfv_matrix_for_3D_space_flag**[ i ] | u(1) |
| for( j = 0; j < numMatrices[ i ]; j++ ) | |
| for( k = 0; k < matrixHeight[ i ]; k++ ) | |
| for( m = 0; m <matrixWidth[ i ]; m++ ) { | |
| **gfv_matrix_element_int**[ i ][ j ][ k ][ m ] | ue(v) |
| **gfv_matrix_element_dec**[ i ][ j ][ k ][ m ] | u(v) |
| if( gfv_matrix_element_int[ i][ j ][ k ][ m ] ∥ gfv_ matrix_element_dec[ i ][ j ][ k ][ m ] ) | |
| **gfv_matrix_element_sign_flag**[ i ][ j ][ k ][ m ] | u(1) |
| } | |
| | |
| } | |
| } | |
| } | |
| if( gfv_base_pic_flag && !gfv_key_present_flag) | |
| if( gfv_nn_mode_idc = = 0 ) { | |
| while( !byte_aligned( ) ) | |
| **gfv_nn_reserved_zero_bit_b** | u(1) |
| for( i = 0; more_data_in_payload( ); i++ ) | |
| **gfv_nn_payload_byte**[ i ] | b(8) |
| } | |
| } | |

**[Table 48]**

| | |
|---|---|
| generative_face_video ( payloadSize ) { | **Descriptor** |
| **gfv_id** | ue(v) |
| **gfv_base_pic_flag** /*indicate if current decoded output picture is a base picture*/ | u(1) |
| **gfv_not_optimized_for_personal_identification_flag** | u(1) |
| **not_optimized_for_machine_analysis_flag** | u(1) |
| if( gfv_base_pic_flag ) { /*specify TranslatorNN( )*/ | |
| **gfv_nn_base_flag** | u(1) |
| **gfv_nn_mode_idc** | ue(v) |
| if( gfv_nn_mode_idc == 1) { | |
| while( !byte_aligned( ) ) | |
| **gfv_nn_reserved_zero_bit_a** | u(1) |
| **gfv_nn_tag_uri** | st(v) |
| **gfv_nn_uri** | st(v) |
| } | |
| } else /* current decoded output picture is a driving picture*/ | |
| **gfv_drive_pic_fusion_flag** /*indicate if DrivePicture is input to GenerativeNN( )*/ | ue(v) |
| **gfv_coordinate_present_flag** | u(l) |
| if( gfv_coordinate_present_flag ) { | |
| **gfv_coordinate_precision_factor_minus1** | ue(v) |
| **gfv_num kp_minus1** | ue(v) |
| **gfv_kp_pred_flag** | u(1) |
| **gfv_coordinate_z_present_flag** | u(1) |
| if(gfv_coordinate_z_present_flag ) | |
| **gfv_coordinate_z_max_value_minus1** | ue(v) |
| for( i = 0; i <= num_kp_minus1; i++ ) { | |
| if(!gfv_kp_pred_flag) { | |
| **gfv_coordinate_x_abs[** i ] | u(v) |
| if( gfv_coordinate_x_abs[ i ] ) | |
| **gfv_coordinate_x_sign_flag[** i ] | u(1) |
| **gfv_coordinate**_**y**_**abs[** i ] | u(v) |
| if( gfv_coordinate_y_abs[ i ] ) | |
| **gfv_coordinate_y_sign_flag**[ i ] | u(1) |
| if( gfv_coordinate_z_present_flag ) { | |
| **gfv_coordinate_z_abs**[ i ] | u(v) |
| if( gfv_coordinate_z_abs[ i ] ) | |
| **gfv_coordinate_z_sign_flag**[ i ] | u(1) |
| } | |
| } else { | |
| **gfv_coordinate_dx_abs**[ i ] | u(v) |
| if(gfv_coordinate_dx_abs[ i ] ) | |
| **gfv_coordinate_dx_sign_flag**[ i ] | u(1) |
| **gfv_coordinate_dy_abs**[ i ] | u(v) |
| if( gfv_coordinate_dy_abs[ i ] ) | |
| **gfv_coordinate_dy_sign_flag**[ i ] | u(1) |
| if( gfv_coordinate_z_present_flag ) { | |
| **gfv_coordinate_dz_ab**s[ i ] | u(v) |
| if( gfv_coordinate_dz_abs[ i ] ) | |
| **gfv_coordinate_dz_sign_flag**[ i ] | u(1) |
| } | |
| } | |
| } | |
| } | |
| **gfv_matrix_present_flag** | u(1) |
| if(gfv_matrix_present_flag ) { | |
| **gfv_matrix_element_precision_factor_minus1** | ue(v) |
| **gfv_num_matrix_types_minus1** | ue(v) |
| for( i = 0; i <= num_matrix_types_minus1; i++ ) { | |
| **gfv_matrix_type_idx[** i ] | u(6) |
| **gfv_matrix_transformed_flag**[i] | U(1) |
| if( gfv_matrix_type_idx[ i ] = = 0 ∥ gfv_matrix_type_idx[ i ] == 1 ) { | |
| if( gfv_coordinate_present_flag ) | |
| **gfv_num_matrices_equal_to_num_kps_flag**[ i ] | u(1) |
| if( !gfv_coordinate_present_flag ∥ !gfv_num_matrix_equal_to_num_kps_flag[ i ] ) | |
| **gfv_num_matrices_info**[ i ] | ue(v) |
| }else if( gfv_matrix_type_idx[ i ] == 2 ∥ gfv_ matrix_type_idx[ i ] == 3 ∥ gfv_matrix_type_idx[ i] >= 7 ){ | |
| if( gfv_matrix_type_idx[ i ] >- 7 ) | |
| **gfv_num_matrices_minus1**[ i ] | ue(v) |
| **gfv_matrix_width_minus1**[ i ] | ue(v) |
| **gfv_matrix_height_minus1**[ i ] | ue(v) |
| }else if( gfv_matrix_type_idx[ i ] >= 4 && gfv_ matrix_type_idx[ i ] <= 6 && !gfv_coordinate_present_flag ){ | |
| **gfv_matrix_for_3D_space_flag**[ i ] | u(1) |
| for( j = 0; j < numMatrices[ i ]; j++ ) | |
| for( k = 0; k < matrixHeight[ i ]; k++ ) | |
| for( m = 0; m <matrixWidth[ i ]; m++) { | |
| **gfv_matrix_element_int**[ i ][ j ][ k ][ m ] | ue(v) |
| **gfv_matrix_element_dec**[ i ][ j ][ k ][ m] | u(v) |
| if( gfv_matrix_element_int[ i][ j ][ k ][ m ] ∥ gfv_= matrix_element_dec[ i ][ j ][ k ][ m ] ) | |
| **gfv_matrix_element_sign_flag**[ i ] [ j ][ k ][ m ] | u(1) |
| } | |
| | |
| } | |
| } | |
| } | |
| if( gfv_base_pic_flag && !gfv_key_present_flag) | |
| if( gfv_nn_mode_idc == 0 ) { | |
| while( !byte_aligned( ) ) | |
| **gfv_nn_reserved_zero_bit_b** | u(1) |
| for( i = 0; more_data_in_payload( ); i++ ) | |
| **gfv_nn_payload_byte**[ i ] | b(8) |
| } | |
| } | |

**[Table 49]**

| | |
|---|---|
| generative_face_video ( payloadSize ) { | **Descriptor** |
| **gfv_id** | ue(v) |
| **gfv_base_pic_flag** /*indicate if current decoded output picture is a base picture*/ | u(1) |
| **gfv_not_optimized_for_personal_identification_flag** | u(1) |
| **not_optimized_for_machine_analysis_flag** | u(1) |
| if( gfv_base_pic_flag ) { /*specify TranslatorNN( )*/ | |
| **gfv_nn_base_flag** | u(1) |
| **gfv_nn_mode_idc** | ue(v) |
| if( gfv_nn_mode_ide == 1 ) { | |
| while( !byte_aligned( ) ) | |
| **gfv_nn_reserved_zero_bit_a** | u(1) |
| **gfv_nn_tag_uri** | st(v) |
| **gfv_nn_uri** | st(v) |
| } | |
| } else /* current decoded output picture is a driving picture*/ | |
| **gfv_drive_pic_fusion_flag** /*indicate if DrivePicture is input to GenerativeNN( )*/ | ue(v) |
| **gfv_coordinate_present_flag** | u(1) |
| if( gfv_coordinate_present_flag ) { | |
| **gfv_coordinate_precision_factor_minus1** | ue(v) |
| **gfv_num_kp_minus1** | ue(v) |
| **gfv_kp_pred_flag** | u(1) |
| **gfv_coordinate_z_present_flag** | u(1) |
| if(gfv_coordinate_z_present_flag ) | |
| **gfv_coordinate_z_max_value_minus1** | uc(v) |
| for( i = 0; i <= num_kp_minus1; i++) { | |
| if(!gfv_kp_pred_flag) { | |
| **gfv_coordinate_x_abs**[ i ] | u(v) |
| if( gfv_coordinatc_x_abs[ i ] ) | |
| **gfv_coordinate_x_sign_flag**[ i ] | u(1) |
| **gfv_coordinate_y_abs**[ i ] | u(v) |
| if( gfv_coordinate_y_abs[ i ] ) | |
| **gfv_coordinate_y_sign_flag**[ i ] | u(1) |
| if( gfv_coordinate_z_present_flag ) { | |
| **gfv_coordinatc_z_abs[** i ] | u(v) |
| if( gfv_coordinate_z_abs[ i ] ) | |
| **gfv_coordinate_z_sign_flag[** i ] | u(1) |
| } | |
| } else { | |
| **gfv_coordinate_dx_abs[** i ] | u(v) |
| if(gfv_coordinate_dx_abs[ i ] ) | |
| **gfv_coordinate_dx_sign_flag[** i ] | u(1) |
| **gfv_coordinate_dy_abs[** i ] | u(v) |
| if( gfv_coordinate_dy_abs[ i ] ) | |
| **gfv_coordinate_dy_sign_flag[** i ] | u(1) |
| if( gfv_coordinate_z_present_flag ) { | |
| **gfv_coordinate_dz_abs[** i ] | u(v) |
| if( gfv_coordinate_dz_abs[ i ] ) | |
| **gfv_coordinate_dz_sign_flag[** i ] | u(1) |
| } | |
| } | |
| } | |
| } | |
| **gfv_matrix_present_flag** | u(1) |
| if(gfv_matrix_present_flag ) { | |
| **gfv_matrix_element_precision_factor_minus1** | ue(v) |
| **gfv_num_matrix_types_minus1** | ue(v) |
| for( i = 0; i <= num_matrix_types_minus1; i++ ) { | |
| **gfv_matrix_type_idx[** i ] | u(6) |
| **gfv_matrix_property**[i] | u(2) |
| if( gfv_matrix_type_idx[ i ] == 0 ∥ gfv_matrix_type_idx[ i ] == 1 ) { | |
| if( gfv_coordinate_present_flag ) | u(1) |
| **gfv_num_matrices_equal_to_num_kps_flag[** i ] | |
| if( !gfv_coordinate_present_flag ∥ !gfv_ num_matrix_equal_to_num_kps_flag[ i ] ) | |
| **gfv_num_matrices_info[** i ] | ue(v) |
| }else if( gfv_matrix_type_idx[ i ] == 2 ∥ gfv_ matrix_type_idx[ i ] == 3 ∥ gfv_matrix_type_idx[ i ] >= 7){ | |
| if( gfv_matrix_type_idx[ i ] >= 7 ) | |
| **gfv_num_matrices_minus1**[ i ] | uc(v) |
| **gfv_matrix_width_minus**1[ i ] | ue(v) |
| **gfv_matrix_height_minus1**[ i ] | ue(v) |
| }else if( gfv_matrix_type_idx[ i ] >= 4 && gfv_ matrix_type_idx[ i ] <= 6 && !gfv_coordinate_present_flag ){ | |
| **gfv_matrix_for_3D_space_flag**[ i ] | u(1) |
| for( j = 0; j < numMatrices[ i ]; j++ ) | |
| for( k = 0; k < matrixHeight[ i ]; k++ ) | |
| for( m = 0; m <matrixWidth[ i ]; m++ ) { | |
| **gfv_matrix_element_int**[ i ][ j ][ k ][ m ] | ue(v) |
| **gfv_matrix_element_dec**[ i ][ j ][ k ][ m ] | u(v) |
| if( gfv_matrix_element_int[ i][ j ][ k ][ m ] ∥ gfv_= matrix_element_dec[ i ][ j ][ k ][ m ] ) | |
| **gfv_matrix_element_sign_flag**[ i ][ j ][ k ][ m ] | u(1) |
| } | |
| | |
| } | |
| } | |
| } | |
| if( gfv_base_pic_flag && !gfv_key_present_flag) | |
| if( gfv_nn_mode_idc == 0 ) { | |
| while( !byte_aligned( ) ) | |
| **gfv_nn_reserved_zero_bit_b** | u(1) |
| for( i = 0; more_data_in_payload( ); i++ ) | |
| **gfv_nn_payload_byte**[ i ] | b(8) |
| } | |
| } | |

not_optimized_for_machine_analysis_flag equal to 1 indicates that the generated/decoded result may not be optimized (suitable) for machine analysis purposes. Not being suitable means that the machine analysis result may differ from the intended result or may not be accurate. For example, when the shape or color of an object is changed or some information is removed, the result of object recognition may be inaccurate. When equal to 0, it indicates that the generated/decoded result may not be unsuitable for machine analysis purposes. This syntax may be applied not only to GFV but also to other generated/decoded results.

gfv_not_optimized_for_personal_identification_flag equal to 1 indicates that the result generated/decoded through GFV may not be optimized (suitable) for personal identification purposes. When equal to 0, it indicates that the result generated/decoded through GFV may not be unsuitable for personal identification purposes.

gfv_matrix_transformed_flag equal to 1 indicates that the attributes of the information represented by the matrix (e.g., mouth, eyes, hair, etc.) have been transformed (e.g., enhanced, removed, replaced, etc.) differently from the attributes of the input data (e.g., base picture). When equal to 0, it indicates that the attributes of the information represented by the matrix (e.g., mouth, eyes, hair, etc.) are identical to the attributes of the input data (e.g., base picture).

gfv _matrix_property is information indicating the attribute of information of each matrix.

Table 47 illustrates an example of defining gfv_matrix_property when gfv_matrix_transformed_flag is equal to 1. In this case, gfv_matrix_property may be defined as follows.

The attributes defined by gfv_matrix_property may include transformation, removal, enhancement, and the like of information for achieving the purpose of the matrix. When equal to 0, it indicates that the attributes of the information represented by the matrix (e.g., mouth, eyes, hair, etc.) have been transformed differently from the attributes of the input data (e.g., base picture). When equal to 1, it indicates that the attributes of the information represented by the matrix (e.g., mouth, eyes, hair, etc.) have been transformed or partially removed for the purpose of protecting personally identifiable information in the input data (e.g., base picture). The items enumerated above are examples, and information indicating additional attributes of the matrix may further be defined. gfv_matrix_property[i] indicates the attribute of the matrix represented by gfv_matrix_type_idx[i].

Table 48 illustrates an example of defining gfv_matrix_transformed_flag independently.

Table 49 illustrates an example of defining gfv_matrix_property independently. In this case, the definition of gfv_matrix_property may be as follows.

gfv_matrix_property is information indicating the attributes of information of each matrix. The attributes defined by gfv_matrix_property may include transformation, removal, enhancement, and the like. As an example, when equal to 0, it indicates that the attributes of the information represented by the matrix (e.g., mouth, eyes, hair, etc.) are identical to those of the input data (e.g., base picture). When equal to 1, it indicates that the attributes of the information represented by the matrix (e.g., mouth, eyes, hair, etc.) have been transformed differently from the attributes of the input data (e.g., base picture). When equal to 2, it indicates that the attributes of the information represented by the matrix (e.g., mouth, eyes, hair, etc.) have been transformed or partially removed for the purpose of protecting personally identifiable information in the input data (e.g., base picture). The items enumerated above are examples, and information indicating additional attributes of the matrix may further be defined. gfv_matrix_property[i] indicates the attribute of the matrix represented by gfv_matrix_type_idx[i].

gfv_matrix_transformed_flag equal to 1 indicates that the attributes of the information represented by the matrix (e.g., mouth, eyes, hair, etc.) have been transformed (e.g., enhanced, removed, replaced, etc.) differently from the attributes of the input data (e.g., base picture). When equal to 0, it indicates that the attributes of the information represented by the matrix are identical to those of the input data.

The examples above illustrate use cases of gfv_matrix_transformed_flag and gfv_matrix_property as defined, and other forms of use are also possible. For example, the two pieces of information may be defined together without separate conditions.

The generative face video (GFV) SEI message specifies facial parameters and a face parameter translator neural network, denoted TranslatorNN( ), and a face picture generator neural network, denoted GenerativeNN( ). Here, TranslatorNN( ) may be used to convert facial parameters of various formats signaled by SEI messages into parameters of a fixed format. GenerativeNN( ) may be used to generate output pictures using the format of facial parameters and previously decoded output pictures.

NOTE 1 - Facial parameters may be determined from a source picture prior to encoding. Such source pictures may be referred to as driving pictures.

NOTE 2 - The previously decoded output picture input to GenerativeNN( ) may be a base picture (a decoded output picture providing a reference texture from which a face picture may be generated), and optionally, a picture that may be fused by GenerativeNN( ) to enhance background texture and facial details. When the current picture is not a base picture, the GFV SEI message may be used to generate a face picture based on a previously decoded base picture, facial parameters conveyed by the GFV SEI message, and optionally the currently decoded picture for fusion purposes.

Use of this SEI message requires the definition of the following variables.

Input picture width and height in units of luma samples, denoted as CroppedWidth and CroppedHeight, respectively.

Luma sample array baseCroppedYPic and chroma sample arrays baseCroppedCbPic and baseCroppedCrPic for the decoded output picture corresponding to the source base picture, denoted as BasePicture.

Luma sample array driveCroppedYPic and chroma sample arrays driveCroppedCbPic and driveCroppedCrPic for the decoded output picture corresponding to the source driving picture, denoted as DrivePicture.

Bit depth BitDepthY for the luma sample array of the input picture.

Bit depth BitDepthC for the chroma sample arrays (when present) of the input picture.

Chroma format indicator, denoted as ChromaFormatIdc.

The variables SubWidthC and SubHeightC are derived from ChromaFormatIdc.

gfv_id contains an identification number that may be used to identify facial feature information and to specify a neural network that may be used as GenerativeNN( ). The value of gfv_id shall be in the range of 0 to 232 - 2, inclusive. Values of gfv_id in the range of 256 to 511 and in the range of 231 to 232 - 2 are reserved for future use by ITU-T | ISO/IEC. A decoder shall ignore a GFV SEI message that contains a gfv_id in the range of 256 to 511 or in the range of 231 to 232 - 2.

NOTE - For example, when more than one face is present in an output picture, different values of gfv_id in different GFV SEI messages may be used to identify different faces.

gfv_base_pic_flag equal to 1 indicates that the currently decoded output picture corresponds to a base picture. gfv_base_pic_flag equal to 0 indicates that the currently decoded output picture does not correspond to a base picture.

The following constraints apply to the value of gfv_base_pic_flag.

When a GFV SEI message is the first GFV SEI message in decoding order having a particular gfv_id value within the current CLVS, the value of gfv_base_pic_flag shall be equal to 1.

When a GFV SEI message that has a particular gfv_id value has gfv_base_pic_flag equal to 0, this SEI message pertains to the current decoded picture and all subsequent decoded pictures of the current layer, in output order, until the end of the current CLVS or up to but excluding the decoded picture that follows the current decoded picture in output order within the current CLVS and is associated with a subsequent GFV SEI message, in decoding order, having gfv_base_pic_flag equal to 0 and that particular gfv_id value within the current CLVS, whichever is earlier.

gfv_nn_base_flag, gfv_nn_mode_idc, gfv_nn_reserved_zero_bit_a, gfv_nn_tag_uri, gfv_nn_uri, and gfv_nn_payload_byte[i] specify the neural network that may be used as TranslatorNN( ). gfv_nn_base_flag, gfv_nn_mode_idc, gfv_nn_reserved_zero_bit_a, gfv_nn _tag_uri, gfv_nn_uri, and gfv_nn_payload_byte[i] have the same syntax and semantics as nnpfc_base_flag, nnpfc_mode_ide, nnpfc_reserved_zero_bit_a, nnpfc _tag_uri, nnpfc_uri, and nnpfc_payload_byte[i], respectively.

When present, gfv_drive_pic_fusion _flag equal to 1 indicates that the currently decoded picture may be input to GenerativeNN( ). The currently decoded picture corresponds to a driving picture that may be used for fusion. gfv_drive_pic_fusion _flag equal to 0 indicates that the currently decoded picture shall not be input to GenerativeNN( ).

NOTE 3 - For example, a value of gfv_drive_pic_fusion_flag equal to 1 may be used to indicate that the currently decoded picture may enhance facial details or handle background changes.

NOTE 4 - Fusion outputs a picture using three inputs: the base picture, the features from the keypoints and/or matrices conveyed in the GFV SEI message, and the currently decoded picture.

NOTE 5 - When the currently decoded picture corresponds to a driving picture, it shall be marked as not intended for output.

not_optimized_for_machine_analysis_flag equal to 1 indicates that the generated/decoded result may not be optimized (suitable) for machine analysis purposes. Not being suitable means that the machine analysis result may differ from the intended result or may not be accurate. not_optimized_for_machine_analysis_flag equal to 0 indicates that the generated/decoded result may be suitable (not unsuitable) for machine analysis purposes. This syntax may be applied not only to GFV but also to other generated/decoded results.

gfv_not_optimized_for_personal_identification _flag equal to 1 indicates that the result generated/decoded through GFV may not be optimized (suitable) for personal identification purposes. gfv_not_optimized_for_personal_identification_flag equal to 0 indicates that the result generated/decoded through GFV may be suitable (not unsuitable) for personal identification purposes.

gfv_matrix_property indicates information about the attributes of each matrix. The attributes defined by gfv_matrix_property include transformation, removal, enhancement, and the like. For example, when equal to 0, it indicates that the attributes of the information represented by the matrix (e.g., mouth, eyes, hair, etc.) are identical to those of the input data (e.g., base picture). When equal to 1, it indicates that the attributes of the information represented by the matrix have been transformed differently from those of the input data. When equal to 2, it indicates that the attributes of the information represented by the matrix (e.g., mouth, eyes, hair, etc.) have been transformed or partially removed for the purpose of protecting personally identifiable information. Information defining the attributes of the matrix may be further specified.

When gfv_matrix_transformed_flag is set equal to 1, the semantics of gfv_matrix_property defined under this condition may be specified as follows.

gfv_matrix_property indicates information about the attributes of each matrix. The attributes defined by gfv_matrix_property include transformation, removal, enhancement, and the like. For example, when equal to 0, it indicates that the attributes of the information represented by the matrix have been transformed differently from those of the input data. When equal to 1, it indicates that the attributes of the information represented by the matrix (e.g., mouth, eyes, hair, etc.) have been transformed or partially removed for the purpose of protecting personally identifiable information. Information defining the attributes of the matrix may be further specified.

gfv_matrix_transformed_flag equal to 1 indicates that the attributes of the information represented by the matrix (e.g., mouth, eyes, hair, etc.) have been transformed (e.g., enhanced, removed, replaced, etc.) differently from the attributes of the input data (e.g., base picture). gfv_matrix_transformed_flag equal to 0 indicates that the attributes of the information represented by the matrix are identical to those of the input data.

gfv_coordinate_present_ flag equal to 1 indicates that coordinate information of keypoints is present. gfv_coordinate_present_flag equal to 0 indicates that coordinate information of keypoints is not present.

It is a requirement of bitstream conformance that when gfv_matrix_type_idx[i] is equal to 0 or 1 for all i in the range of 0 to gfv_num_num_matrix_types_minus1, inclusive, the value of gfv_coordinate_present_flag shall be equal to 1.

gfv_coordinate_precision_factor_minus1 plus 1 indicates the length in bits of gfv_coordinate_x_abs[i], gfv_coordinate_y_abs[i], and gfv_coordinate_z_abs[i].

gfv_num_kps_minus1 plus 1 indicates the number of keypoints. The value of gfv_num_kp_minus1 shall be in the range of 0 to 210 - 1, inclusive.

gfv_kp_pred_flag equal to 1 indicates that the syntax elements gfv_coordinate_dx_abs[i], gfv_coordinate_dy_abs[i], and gfv_coordinate_dz_abs[i] are present and that the syntax elements gfv_coordinate_dx_sign_flag[i], gfv_coordinate_dy_sign_flag[i], and gfv_coordinate_dz_sign_flag[i] may be present. gfv_kp_pred _flag equal to 0 indicates that gfv_coordinate_x_abs[i], gfv_coordinate_y_abs[i], and gfv_coordinate_z_abs[i] are present and that the syntax elements gfv_coordinate_x_sign_flag[i], gfv_coordinate_y_sign_flag[i], and gfv_coordinate_z_sign_flag[i] may be present.

gfv_coordinate_z_present_flag equal to 1 indicates that z-axis coordinate information of keypoints is present. gfv_coordinate_z_present_flag equal to 0 indicates that z-axis coordinate information of keypoints is not present.

gfv_coordinate_z_max_value_minus1 plus 1 indicates the maximum absolute value of the z-axis coordinates of the keypoints.

gfv_coordinate_x_abs[i] indicates the normalized absolute value of the x-axis coordinate of the i-th keypoint.

gfv_coordinate_x_sign _flag[i] specifies the sign of the x-axis coordinate of the i-th keypoint. When gfv_coordinate_x_sign_flag[i] is not present, it is inferred to be equal to 0.

gfv_coordinate_y_abs[i] specifies the normalized absolute value of the y-axis coordinate of the i-th keypoint.

gfv_coordinate_y_sign _flag[i] specifies the sign of the y-axis coordinate of the i-th keypoint. When gfv_coordinate_y_sign_flag[i] is not present, it is inferred to be equal to 0.

gfv_coordinate_z_abs[i] indicates the normalized absolute value of the z-axis coordinate of the i-th keypoint.

gfv_coordinate_z_sign_flag[i] specifies the sign of the z-axis coordinate of the i-th keypoint. When gfv_coordinate_z_sign_flag[i] is not present, it is inferred to be equal to 0.

gfv_coordinate_dx_abs[i] indicates the absolute difference value of the normalized value of the x-axis coordinate of the i-th keypoint.

gfv_coordinate_dx_sign _flag[i] specifies the sign of the difference value of the x-axis coordinate of the i-th keypoint. When gfv_coordinate_dx_sign_flag[i] is not present, it is inferred to be equal to 0.

gfv_coordinate_dy_abs[i] specifies the absolute difference value of the normalized y-axis coordinate of the i-th keypoint.

gfv_coordinate_dy_sign _flag[i] specifies the sign of the difference value of the y-axis coordinate of the i-th keypoint. When gfv_coordinate_yd_sign_flag[i] is not present, it is inferred to be equal to 0.

gfv_coordinate_dz_abs[i] specifies the absolute difference value of the normalized z-axis coordinate of the i-th keypoint.

gfv_coordinate_dz_sign_flag[i] specifies the sign of the difference value of the z-axis coordinate of the i-th keypoint. When gfv_coordinate_dz_sign_flag[i] is not present, it is inferred to be equal to 0.

The variables coordinateDeltaX[i], coordinateDeltaY[i], and coordinateDeltaZ[i], representing the delta x-axis coordinate, delta y-axis coordinate, and delta z-axis coordinate, respectively, of the i-th keypoint, are derived as shown in Table 50 below.

**[Table 50]**

| |
|---|
| $coordinateDeltaX \left[i\right] = \frac{\left(1-2*gfv_coordinate_dx_sign_flag\left[i\right]\right) * gfv_coordinate_dx_abs \left[i\right] * CroppedWidth}{1 ≪ \left(gfv_coordinate_precision_factor_minus1+1\right)}$ |
| $coordinateDeltaY \left[i\right] = \frac{\left(1-2*gfv_coordinate_dy_sign_flag\left[i\right]\right) * gfv_coordinate_dy_abs \left[i\right] * CroppedHeight}{1 ≪ \left(gfv_coordinate_precision_factor_minus1+1\right)}$ |
| $coordinateDeltaZ \left[i\right] = \frac{\left(1-2*coordinate_dz_sign_flag\left[i\right]\right) * gfv_coordinate_dz_abs \left[i\right] * \left(gfv_coordinate_z_max_value_minus1+1\right)}{1 ≪ \left(gfv_coordinate_precision_factor_minus1+1\right)}$ |

The variables coordinateX[i], coordinateY[i], and coordinateZ[i], representing the x-axis coordinate, y-axis coordinate, and z-axis coordinate, respectively, of the i-th keypoint, are derived as shown in Table 51 below when gfv_kp_pred _flag is equal to 0, and as shown in Table 52 below when gfv_kp_pred _flag is equal to 1.

**[Table 51]**

| |
|---|
| $coordinateX \left[i\right] = \frac{\left(1-2*gfv_coordinate_x_sign_flag\left[i\right]\right) * gfv_coordinate_x_abs \left[i\right] * CroppedWidth}{1 ≪ \left(gfv_coordinate_precision_factor_minus1+1\right)}$ |
| $coordinateY \left[i\right] = \frac{\left(1-2*gfv_coordinate_y_sign_flag\left[i\right]\right) * gfv_coordinate_y_abs \left[i\right] * CroppedHeight}{1 ≪ \left(gfv_coordinate_precision_factor_minus1+1\right)}$ |
| $coordinateZ \left[i\right] = \frac{\left(1-2*gfv_coordinate_z_sign_flag\left[i\right]\right) * gfv_coordinate_z_abs \left[i\right] * \left(gfv_coordinate_z_max_value_minus1+1\right)}{1 ≪ \left(gfv_coordinate_precision_factor_minus1+1\right)}$ |

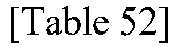

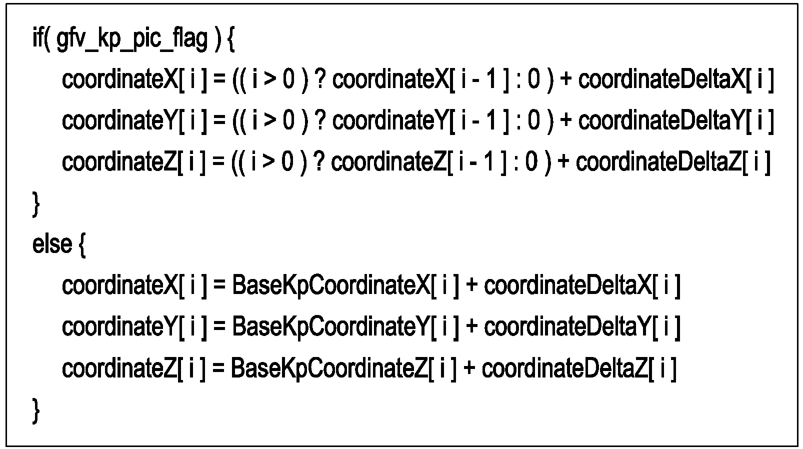

Here, BaseKpCoordinateX[i], BaseKpCoordinateY[i], and BaseKpCoordinateZ[i], representing the x-axis, y-axis, and z-axis coordinates, respectively, of the i-th keypoint for the base picture, are derived as shown in Table 53 below.

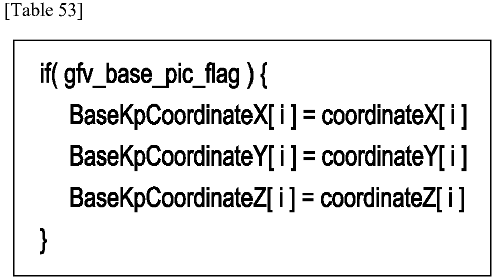

gfv_matrix_present_flag equal to 1 indicates that matrix parameters are present. gfv_matrix_present_flag equal to 0 indicates that matrix parameters are not present.

gfv_matrix_element_precision_factor minus1 plus 1 indicates the length in bits of gfv_matrix_element_dec[i][j][k][m].

gfv_num_matrix_types_minus1 plus 1 indicates the number of matrix types signaled in the SEI message. The value of gfv_matrix_type_num_minus1 shall be in the range of 0 to 26 - 1, inclusive.

gfv_matrix _type_idx[i] indicates the index of the i-th matrix type as specified in Table 54.

**[Table 54]**

| **Value** | **Specification** |
|---|---|
| 0 | Affine translation matrix with the size of 2*2 or 3*3. |
| 1 | Covariance matrix with size of 2*2 or 3*3. |
| 2 | Mouth matrix representing mouth motion. |
| 3 | Eye matrix representing the open-close status and level of eyes. |
| 4 | Head rotation paramters with the size of 2*2 or 3*3 representing the head rotation in 2D space or 3D space. |
| 5 | Head translation matrix with the size of 1*2 or 1*3 representing head translationin 2D space or 3D space. |
| 6 | Head location matrix with size of 1*2 or 1*3 representing the head location in 2D space or 3D space. |
| 7 | Compact feature matrix with the size being specified by gfv_matrix_width_minus1[i] and gfv_matrix_height_minus1[i]. |
| 8...31 | Other matrix that may be used as determined by the application with the size being specified by gfv_matrix_width_minus1[i] and gfv_matrix_height_minus1[i]. |
| 32...63 | Reserved |

NOTE 2. Undefined matrix type is used to indicate a matrix type that is not an affine transformation matrix, covariance matrix, rotation matrix, translation matrix, or compact feature matrix. It may be used by the user to extend the matrix type.

gfv_num_matrices_equal_to_num_kps_flag[i] equal to 1 indicates that the number of matrices of the i-th matrix type is equal to gfv_num _kps_minus1 + 1. gfv_num_matrices_equal_to_num_kps_flag[i] equal to 0 indicates that the number of matrices of the i-th matrix type is not equal to gfv_num_kps_minus1 + 1.

gfv_num_matrices_info[i] provides information for deriving the number of matrices of the i-th matrix type.

gfv_matrix_width_minus1[i] plus 1 indicates the width of the matrix of the i-th matrix type.

gfv_matrix_height_minus1[i] plus 1 indicates the height of the matrix of the i-th matrix type.

gfv_matrix_for_3D_space_flag[i] equal to 1 indicates that the matrix of the i-th matrix type is a matrix defined in three-dimensional space. gfv_matrix _for_3D_space_flag[i] equal to 0 indicates that the matrix of the i-th matrix type is a matrix defined in two-dimensional space.

When gfv_matrix_width_minus1[i] is not present, it is inferred as follows.

When gfv_matrix_type_idx[i] is equal to 0, 1, or 4, and one of coordinate_z_present_flag and gfv_matrix_for_3D_space_flag[i] is present and equal to 1, gfv_matrix _width_minus1[i] is inferred to be equal to 2.

Otherwise, when matrix_type_idx[i] is equal to 0, 1, or 4, and one of coordinate_z_present_flag and gfv_matrix_for_3D_space_flag[i] is present and equal to 0, gfv_matrix_width_minus1[i] is inferred to be equal to 1.

Otherwise (when matrix_type_idx[i] is equal to 5 or 6), gfv_matrix_width_minus1[i] is inferred to be equal to 0.

When gfv_matrix_height_minus1[i] is not present, it is inferred as follows.

When matrix_type_idx is equal to 0, 1, 4, 5, or 6, and one of gfv_coordinate_z_present_ flag and gfv_matrix_for_3D_space_flag[i] is present and equal to 1, gfv_matrix_height_minusl[i] is inferred to be equal to 2.

Otherwise (when gfv_matrix_type_idx is equal to 0, 1, 4, 5, or 6, and one of gfv_coordinate_z_present_flag and gfv_matrix_for_3D_space_flag[i] is equal to 0), gfv_matrix_height_minus1[i] is inferred to be equal to 1.

The variables matrixWidth[i] and matrixHeight[i], representing the width and height, respectively, of the matrix of the i-th matrix type, are derived as shown in Table 55 below.

**[Table 55]**

| |
|---|
| matrixWidth[ i ] = gfv_matrix_width_minus1[ i ] + 1 |
| matrixHeight[ i ] = gfv_matrix_height_minus1[ i ] + 1 |

gfv_num_matrices_minus 1[i] plus 1 indicates the number of matrices of the i-th matrix type. The variable numMatrices[i], representing the number of matrices of the i-th matrix type, is derived as shown in Table 56 below.

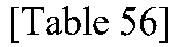

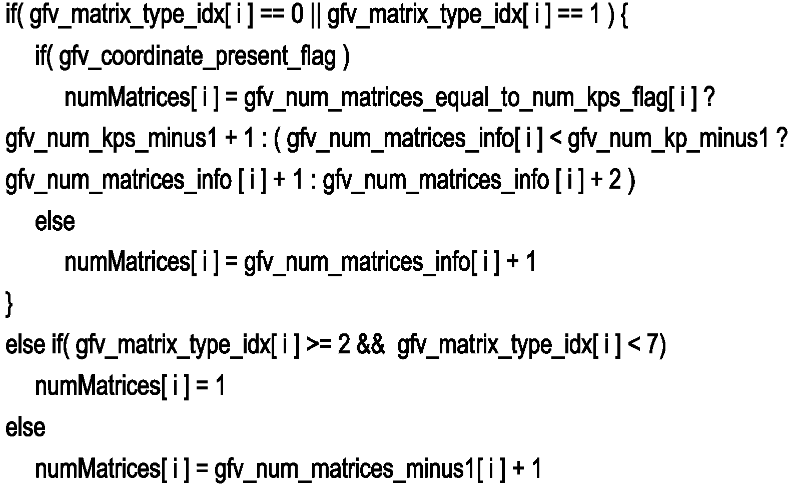

gfv_matrix_element_int[i][j][k][m] indicates the integer part of the matrix element value at position (k, m) of the j-th matrix of the i-th matrix type.

gfv_matrix_element_dec[i] [j][k][m] indicates the fractional part of the matrix element value at position (k, m) of the j-th matrix of the i-th matrix type.

gfv_matrix_element_sign_flag[i][j][k][m] indicates the sign of the matrix element at position (k, m) of the j-th matrix of the i-th matrix type. When gfv_matrix_element_sign_flag[i][j][k][m] is not present, it is inferred to be equal to 0.

matrixElementVal[i] [j] [k] [m], representing the matrix element value at position (k, m) of the j-th matrix of the i-th matrix type, is derived as shown in Table 57 below.

**[Table 57]**

| |
|---|
| $matrix_element_int \left[i\right] \left[j\right] \left[k\right] \left[m\right] + \left.\frac{gfv_matrix_element_dec \left[i\right] \left[j\right] \left[k\right] \left[m\right]}{1 ≪ \left(gfv_matrix_element_precision_factor_minus1+1\right)}\right)$ |

GenerativeNN( ) is a process for generating sample values of an output picture corresponding to a driving picture. It is invoked only when gfc_base_pic_flag is equal to 0.

The inputs to TranslatorNN( ) are:

sigKeyPoint and sigMatrix.

The outputs of TranslatorNN( ) are:

convKeyPoint and convMatrix.

The inputs to GenerativeNN( ) are:

When gfv_base_pic_flag is equal to 0, gfv_drive_pic_fusion_flag is equal to 0, and ChromaFormatIdc is equal to 0: inputBaseY, inputBaseKeyPoint, inputBaseMatrix, inputDriveKeyPoint, inputDriveMatrix.

When gfv_base_pic_flag is equal to 0, gfv_drive_pic_fusion _flag is equal to 0, and ChromaFormatIdc is not equal to 0: inputBaseY, inputBaseCb, inputBaseCr, inputBaseKeyPoint, inputBaseMatrix, inputDriveKeyPoint, inputDriveMatrix.

When gfv_base_pic_flag is equal to 0, gfv_drive_pic_fusion _flag is equal to 1, and ChromaFormatIdc is equal to 0: inputBaseY, inputDriveY, inputBaseKeyPoint, inputBaseMatrix, inputDriveKeyPoint, inputDriveMatrix.

When gfv_base_pic_flag is equal to 0, gfv_drive_pic_fusion _flag is equal to 1, and ChromaFormatIdc is not equal to 0: inputBaseY, inputBaseCb, inputBaseCr, inputDriveY, inputDriveCb, inputDriveCr, inputBaseKeyPoint, inputBaseMatrix, inputDriveKeyPoint, inputDriveMatrix.

The outputs of GenerativeNN( ) are:

Luma sample array genY.

When ChromaFormatIdc is not equal to 0, two chroma sample arrays genCb and genCr.

The following process as shown in Table 58 below is used to generate a video picture.

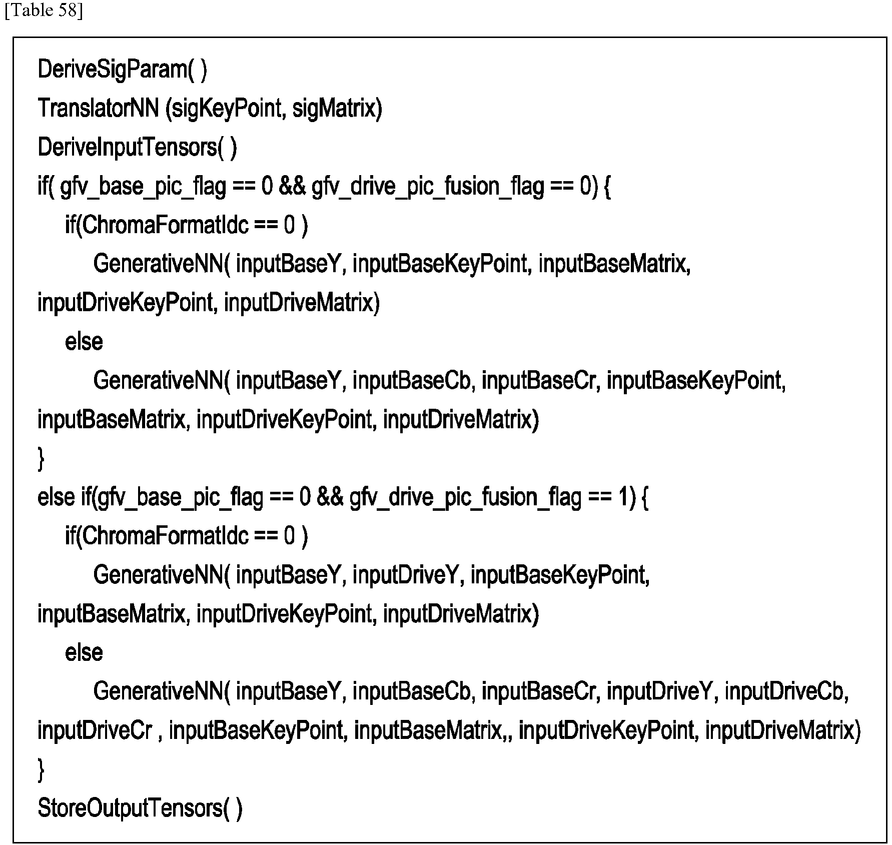

The process DeriveSigParam( ) is specified as follows to derive the inputs to TranslatorNN( ).

The keypoint coordinate array sigKeyPoint and matrix sigMatrix are derived as shown in Table 59 below.

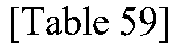

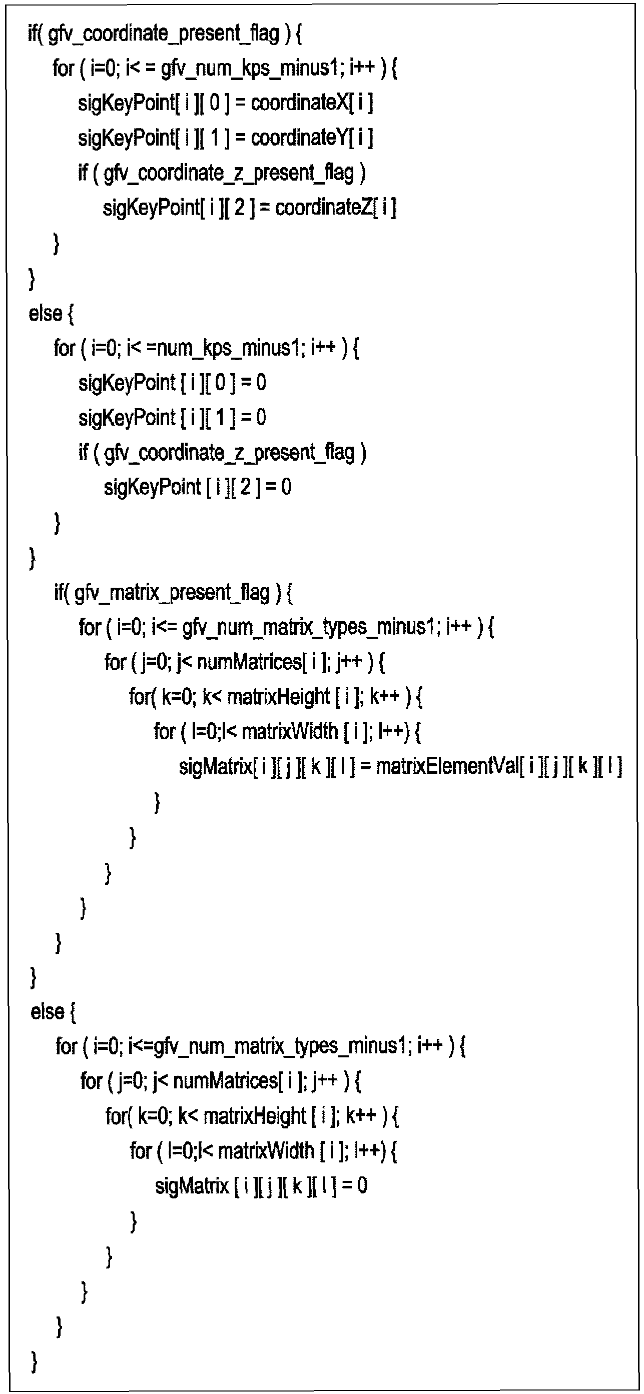

The input values to GenerativeNN( ) are real numbers, and the functions InpY( ) and InpC( ) are specified as shown in Table 60 below.

**[Table 60]**

| |
|---|
| InpY( x ) = x ÷ ( ( 1 << BitDepth _{Y}) - 1 ) |
| InpC( x ) = x ÷ ( ( 1 << BitDepth _{C} ) - 1 ) |

The output values from GenerativeNN( ) are real numbers, and the functions OutY( ) and OutC( ) are specified as shown in Table 61 below.

**[Table 61]**

| |
|---|
| OutY( x ) = Clip3( 0, ( 1 << BitDepth _{Y}) - 1 , x * ( ( 1 << BitDepth _{Y}) - 1 ) |
| OutC( x ) = Clip3( 0, (1 << BitDepth _{C}) - 1 , x * ( (1 << BitDepth_{C}) - 1 ) |

The process DeriveInputTensors( ) is specified as follows to derive the inputs to GenerativeNN( ).

When gfv_base_pic_flag is equal to 1, the BasePicture input tensors inputBaseY, inputBaseCb, and inputBaseCr are derived as shown in Table 62 below.

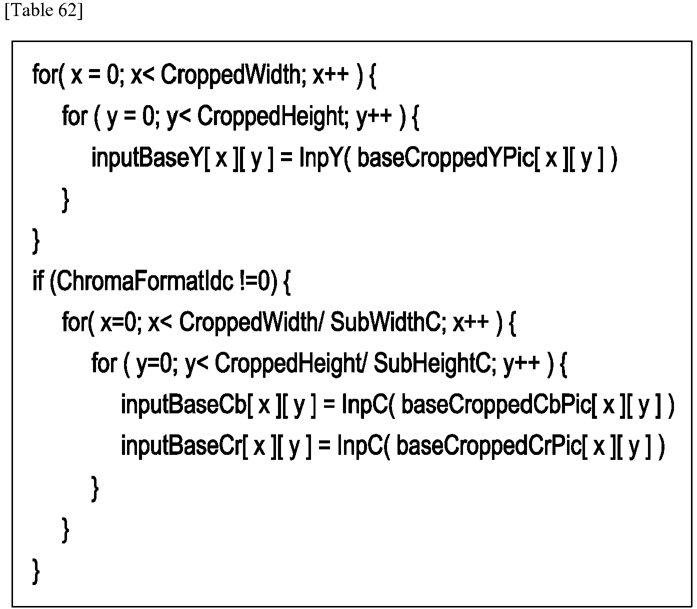

When gfv_drive_pic_fusion_flag is equal to 1, the DrivePicture luma sample array inputDriveY, inputDriveCb, and inputDriveCr are derived as shown in Table 63 below.

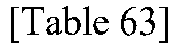

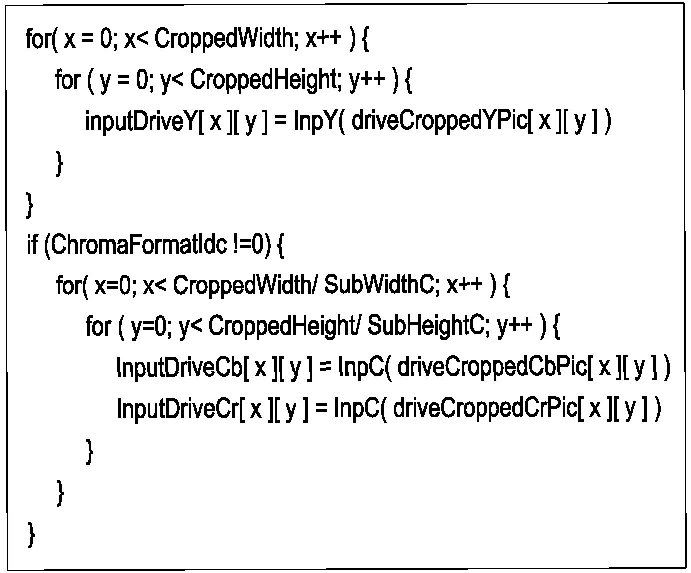

When gfv_base_pic_flag is equal to 0, the keypoint coordinate array inputDriveKeyPoint and matrix inputDriveMatrix for the current picture are derived as shown in Table 64 below.

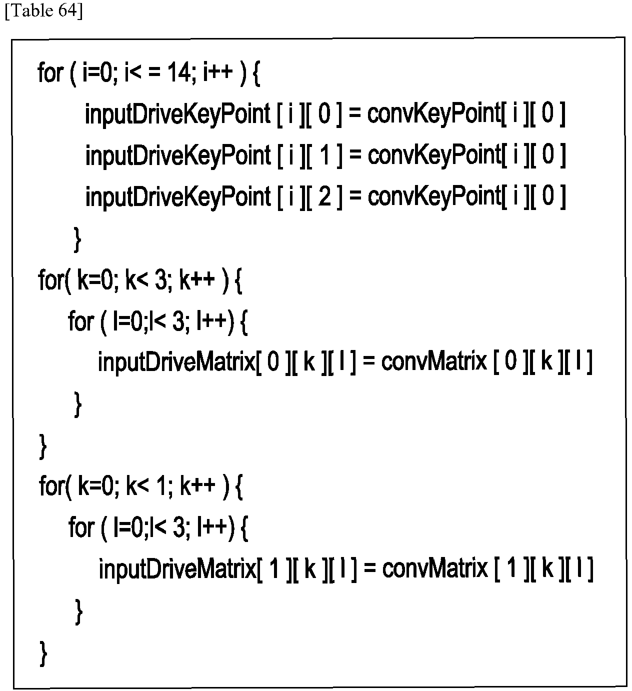

When gfv _base_pic_flag is equal to 1, the keypoint coordinate array inputBaseKeyPoint and matrix inputBaseMatrix for the base picture are derived as shown in Table 65 below.

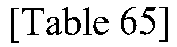

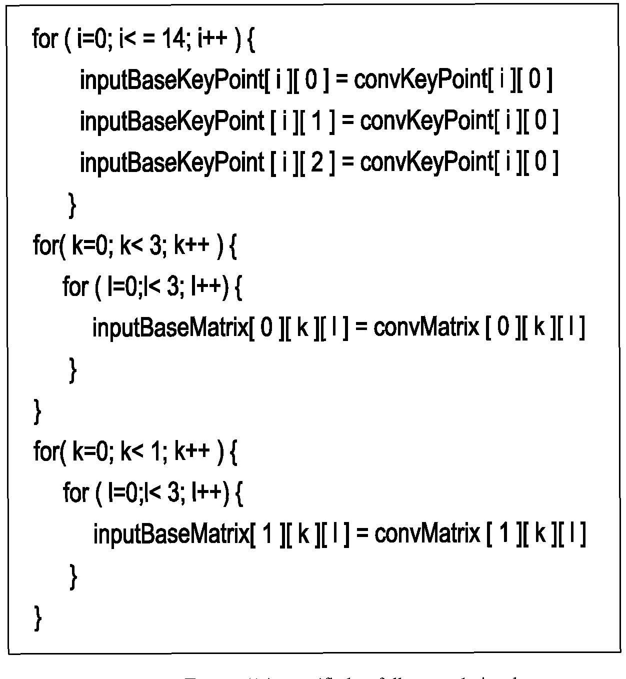

The process StoreOutputTensors( ) is specified as follows to derive the output.

When gfv_base_pic_flag is equal to 0, the output sample arrays outYPic[x][y], outCbPic[x][y], and outCrPic[x][y] are derived as shown in Table 66 below.

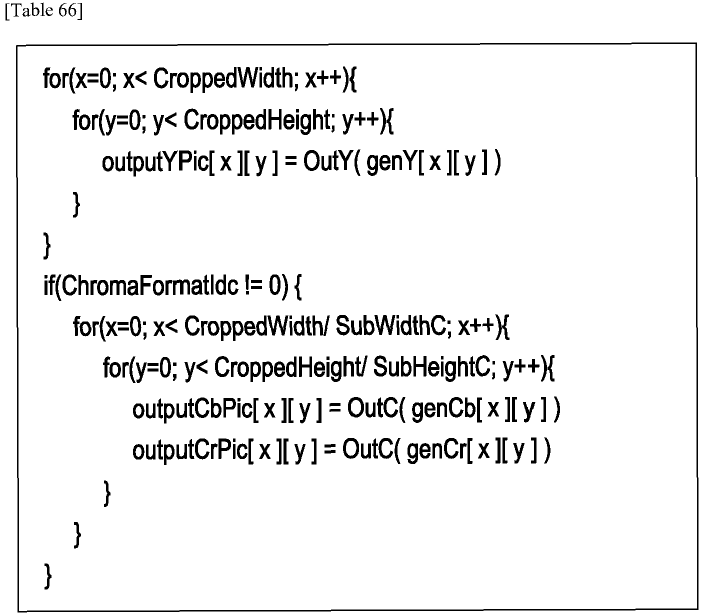

When gfv_base_pic_flag is equal to 1, the output sample arrays outYPic[x][y], outCbPic[x][y], and outCrPic[x][y] are derived as shown in Table 67 below.

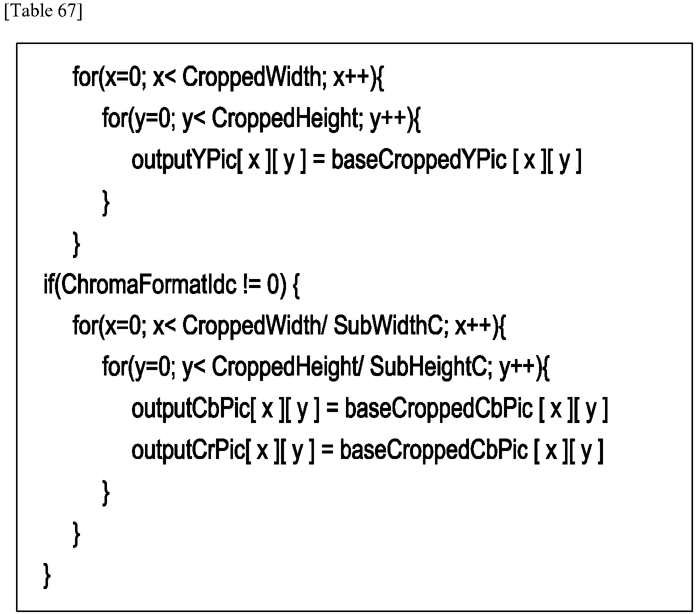

### Fifth Embodiment

Tables 68, 69, and 70 illustrate examples of defining whether personally identifiable information has been transformed or whether the data is suitable for personal identification purposes in the generative face video SEI message syntax.

**[Table 68]**

| | |
|---|---|
| generative_face_video ( payloadSize ) { | **Descriptor** |
| **gfv_id** | ue(v) |
| **gfv_base_pic_flag** /*indicate if current decoded output picture is a base picture*/ | u(1) |
| **gfv_optimized_for_personal_identification_flag** | u(1) |
| **optimized_for_machine_analysis_flag** | u(1) |
| if( gfv_base_pic_flag ) { /*specify TranslatorNN( )*/ | |
| **gfv_nn_base_flag** | u(1) |
| **gfv_nn_mode_idc** | ue(v) |
| if( **gfv_nn_mode_ide** == 1 ) { | |
| while( !byte_aligned( ) ) | |
| **gfv_nn_reserved_zero_bit_a** | u(1) |
| **gfv_nn_tag_uri** | st(v) |
| **gfv_nn_uri** | st(v) |
| } | |
| } else /* current decoded output picture is a driving picture*/ | |
| **gfv_drive_pic_fusion_flag** /*indicate if DrivePicture is input to GenerativeNN( )*/ | ue(v) |
| **gfv_coordinate_present_flag** | u(1) |
| if( gfv_coordinate_present_flag ) { | |
| **gfv_coordinate_precision_factor_minus1** | ue(v) |
| **gfv_num_kp_minus1** | ue(v) |
| **gfv_kp_pred_flag** | u(1) |
| **gfv_coordinate_z_present_flag** | u(1) |
| if(gfv_coordinate_z_present_flag ) | |
| **gfv_coordinate_z_max_value_minus1** | ue(v) |
| for( i = 0; i <= num_kp_minus1; i++ ) { | |
| if(!gfv_kp_pred_flag) { | |
| **gfv_coordinate_x_abs[** i ] | u(v) |
| if( gfv_coordinate_x_abs[ i ] ) | |
| **gfv_coordinate_x_sign_flag[ i ]** | u(1) |
| **gfv_coordinate_y_abs[** i ] | u(v) |
| if( gfv_coordinate_y_abs[ i ] ) | |
| **gfv_coordinate_y_sign_flag[** i ] | u(1) |
| if( gfv_coordinate_z_present_flag ) { | |
| **gfv_coordinate_z_abs**[ i ] | u(v) |
| if( gfv_coordinate_z_abs[ i ] ) | |
| **gfv_coordinate_z_sign_flag**[ i ] | u(1) |
| } | |
| } else { | |
| **gfv_coordinate_dx_abs**[ i ] | u(v) |
| if( gfv_coordinate_dx_abs[ i ]) | |
| **gfv_coordinate_dx_sign_flag**[ i ] | u(1) |
| **gfv_coordinate_dy_abs**[ i ] | u(v) |
| if( gfv_coordinate_dy_abs[ i ] ) | |
| **gfv_coordinate_dy_sign_flag**[ i] | u(1) |
| if( gfv_coordinate_z_present_flag ) { | |
| **gfv_coordinate_dz_abs**[ i ] | u(v) |
| if( gfv_coordinate_dz_abs[ i ] ) | |
| **gfv_coordinate_dz_sign_flag**[ i ] | u(1) |
| } | |
| } | |
| } | |
| } | |
| **gfv_matrix_present_flag** | u(1) |
| if(gfv_matrix_present_flag ) { | |
| **gfv_matrix_element_precision_factor_minus1** | ue(v) |
| **gfv_num_matrix_types_minus1** | ue(v) |
| for( i = 0; i <= num_matrix_typcs_minus1; i++ ) { | |
| **gfv_matrix_type_idx**[ i ] | u(6) |
| gfv_matrix_pii_transformed_flag | |
| **gfv_matrix_transformed_flag[i]** | U(1) |
| if(gfv_matrix_transformed_flag[i] == 1){ | |
| **gfv_matrix_property[i]** | u(2) |
| } | |
| if( gfv_matrix_type_idx[ i ] == 0 ∥ gfv_matrix_type_idx[ i ] = = 1 ) { | |
| if( gfv_coordinate_present_flag ) | |
| **gfv_num_matrices_equal_to_num_kps_flag[** i ] | u(1) |
| if(!gtv_coordinate_present_flag ∥ !gfv_num_matrix_equal_to_num_kps_flag[ i ] ) | |
| **gfv_num_matrices_info**[ i ] | ue(v) |
| }else if( gfv_matrix_type_idx[ i ] = = 2 ∥ gfv_ matrix_type_idx[ i ] = = 3 ∥ gfv_matrix_type_idx[ i ] >= 7){ | |
| if( gfv_matrix_type_idx[ i ] >= 7 ) | |
| **gfv_num_matrices_minus1** [ i ] | ue(v) |
| **gfv_matrix_width_minus1**[ i ] | ue(v) |
| **gfv_matrix_height_minus1**[ i ] | ue(v) |
| }else if( gfv_matrix_type_idx[ i ] >= 4 && gfv_ matrix_type_idx[ i ] <= 6 && !gfv_coordinate_present_flag ){ | |
| **gfv_matrix_for_3D_space_flag**[ i ] | u(1) |
| for( j - 0; j < numMatrices[ i ]; j++ ) | |
| for( k = 0; k < matrixHeight[ i ]; k++ ) | |
| for( m = 0; m <matrixWidth[ i ]; m++ ) { | |
| **gfv_matrix clement**_**int**[ i ][ j ][ k ][ m ] | ue(v) |
| **gfv_matrix_element_dec** [ i ][ j ][ k ][ m ] | u(v) |
| if( gfv_matrix_element_int[ i ][ j ][ k ][ m ] ∥ gfv_ | |
| matrix_element_dec[ i ][ j ][ k ][ m ] ) | |
| **gfv_matrix_element_sign_flag[** i ][ j ][ k ][ m] | u(1) |
| } | |
| | |
| } | |
| } | |
| } | |
| if( gfv_base_pic_flag && !gfv_key_present_flag) | |
| if( gfv_nn_mod_ide == 0 ) { | |
| while( !byte_aligned( ) ) | |
| **gfv_nn_reserved_zero_bit_b** | u(1) |
| for( i = 0; more_data_in_payload( ); i++ ) | |
| **gfv_nn_payload_byte**[ i ] | b(8) |
| } | |
| } | |

**[Table 69]**

| | |
|---|---|
| generative_face_video ( payloadSize ) { | **Descriptor** |
| **gfv_id** | ue(v) |
| **gfv_base_pic_flag** /*indicate if current decoded output picture is a base picture*/ | u(1) |
| **gfv_optimized_for_personal_identification_flag** | u(1) |
| **optimized_for_machine_analysis_flag** | u(1) |
| if( gfv_base_pic_flag ) { /*specify TranslatorNN( )*/ | |
| **gfv_nn_base_flag** | u(1) |
| **gfv_nn_mode_idc** | ue(v) |
| if( gfv_nn_mode_idc == ]) { | |
| while( !bytc_aligned( ) ) | |
| **gfv_nn_reserved_zero_bit_a** | u(1) |
| **gfv_nn_tag_uri** | st(v) |
| **gfv_nn_uri** | st(v) |
| } | |
| } else /* current decoded output picture is a driving picture*/ | |
| gfv_drive_pic_fusion_flag /*indicate if DrivePicture is input to GenerativeNN( )* / | ue(v) |
| **gfv_coordinate_present_flag** | u(1) |
| if( gfv_coordinate_present_flag ) { | |
| **gfv_coordinate_precision_factor_minus1** | ue(v) |
| **gfv_num_kp_minus1** | ue(v) |
| **gfv_kp_pred_flag** | u(1) |
| **gfv_coordinate_z_present_ flag** | u(1) |
| if(gfv_coordinate_z_present_flag ) | |
| **gfv_coordinate_z_max_value_minus1** | ue(v) |
| for( i = 0; i <= num_kp_minus1; i++ ) { | |
| if(!gfv_kp_pred_flag) { | |
| **gfv_coordinate_x_abs[** i ] | u(v) |
| if( gfv_coordinate_x_abs[ i ] ) | |
| **gfv_coordinate_x_sign_flag**[ i ] | u(1) |
| **gfv_coordinate_y_abs**[ i ] | u(v) |
| if( gfv_coordinate_y_abs[ i ] ) | |
| **gfv_coordinate_y_sign_flag**[ i ] | u(1) |
| if( gfv_coordinate_z_present flag ) { | |
| **gfv_coordinate_z_abs**[ i ] | u(v) |
| if( gfv_coordinate_z_abs[ i ] ) | |
| **gfv_coordinate_z_sign_flag**[ i ] | u(1) |
| } | |
| } else { | |
| **gfv_coordinate_dx_abs**[ i ] | u(v) |
| if( gfv_coordinate_dx_abs[ i ] ) | |
| **gfv_coordinate_dx_sign_flag**[ i ] | u(1) |
| **gfv_coordinate_dy_abs**[ i ] | u(v) |
| if( gfv_coordinate_dy_abs[ i ] ) | |
| **gfv_coordinate_dy_sign_flag**[ i ] | u(1) |
| if( gfv_coordinate_z_present_flag ) { | |
| **gfv_coordinate_dz_abs**[ i ] | u(v) |
| if( gfv_coordinate_dz_abs[ i ] ) | |
| **gfv_coordinate_dz_sign_flag**[ i ] | u(l) |
| } | |
| } | |
| } | |
| } | |
| **gfv_matrix_present_flag** | u(1) |
| if(gfv_matrix_present_flag ) { | |
| **gfv_matrix_eclement_precision_factor_minus1** | ue(v) |
| **gfv_num_matrix_types_minus1** | ue(v) |
| for( i = 0; i <= num_matrix_types_minus1; i++ ) { | |
| **gfv_matrix_type_idx**[ i ] | u(6) |
| **gfv_matrix_transformed_flag[i]** | U(1) |
| if( gfv_matrix_type_idx[ i ] = = 0 ∥ gfv_matrix_type_idx[ i ] = = ]) { | |
| if( gfv_coordinate_present_flag ) | |
| **gfv_num_matrices_equal_to_num_kps_flag**[ i ] | u(1) |
| if( !gfv_coordinate_present_flag ∥ !gfv_num_matrix_equal_to_nmn_kps_flag[ i ] ) | |
| **gfv_num_matrices_info**[ i ] | uc(v) |
| }else if( gfv_matrix_type_idx[ i ] = = 2 ∥ gfv_ matrix_type_idx[ i ] = = 3 ∥ gfv_matrix_type_idx[ i ] >- 7 ){ | |
| if( gfv_matrix_type_idx[ i ] >= 7 ) | |
| **gfv_num_matrices_minus1** [ i ] | ue(v) |
| **gfv_matrix_width_minus1**[ i ] | ue(v) |
| **gfv_matrix_height_minus1** [ i ] | ue(v) |
| }else if( gfv_matrix_type_idx[ i } >= 4 && gfv_matrix_ type_idx[ i ] <= 6 && !gfv_coordinate_present_flag ) { | |
| **gfv_matrix for 3D space flag**[ i ] | u(l) |
| for( j = 0; j < numMatrices[ i ]; j++ ) | |
| for( k = 0; k < matrixHeight[ i ]; k++ ) | |
| for( m = 0; m <matrixWidth[ i ]; m++ ) { | |
| **gfv_matrix_element_int**[ i ][ j ][ k ][ m ] | uc(v) |
| **gfv_matrix_element_dec**[ i ][ j ][ k ][ m] | u (v) |
| if( gfv_matrix_element_int[ i] [ j ][ k ][ m ] ∥ gfv_matrix_ element_dec[ i ][ j ][ k ][ m ]) | |
| **gfv_matrix_element_sign_flag**[ i ] [ j ][ k ][ m ] | u(1) |
| } | |
| | |
| } | |
| } | |
| } | |
| if( gfv_base_pic_flag && !gfv key_present flag) | |
| if( gfv_nn_mode_idc = = 0 ) { | |
| while( !byte_aligned() ) | |
| **gfv_nn_reserved_zero_bit_b** | u(1) |
| for( i = 0; more_data_in_payload( ); i++ ) | |
| **gfv_nn_payload_byte**[ i ] | b(8) |
| } | |
| } | |

**[Table 70]**

| | |
|---|---|
| generative_face_video ( payloadSize ) { | **Descriptor** |
| **gfv_id** | ue(v) |
| **gfv_base_pic_flag** /*indicate if current decoded output picture is a base picture*/ | u(1) |
| **gfv_optimized_for_personal_identification_flag** | u(1) |
| **optimizcd for machinc analysis flag** | u(1) |
| if( gfv_base_pic_flag ) { /*specify TranslatorNN( )*/ | |
| **gfv_nn_base_flag** | u(1) |
| **gfv_nn_mode_idc** | ue(v) |
| if( gfv_nn_mode_idc = = ]) { | |
| while( !byte_aligned() ) | |
| **gfv_nn_reserved_zero_bit_a** | u(1) |
| **gfv_nn_tag_uri** | st(v) |
| **gfv_nn_uri** | st(v) |
| } | |
| } else /* current decoded output picture is a driving picture*/ | |
| **gfv_drive_pic_fusion_flag** /*indicate if DrivePicture is input to GenerativeNN( )*/ | uc(v) |
| **gfv_coordinate_present_ flag** | u(1) |
| if( gfv_coordinate_present_flag) { | |
| **gfv_coordinate_precision_factor_minus1** | ue(v) |
| **gfv_num_kp_minus1** | ue(v) |
| **gfv_kp_pred_flag** | u(l) |
| **gfv_coordinate_z_present_flag** | u(1) |
| if(gfv_coordinate_z_present_flag ) | |
| **gfv_coordinate_z_max_value_minus1** | uc(v) |
| for( i = **0;** i <= num_kp_minus1; i++ ) { | |
| if(!gfv_kp_pred_flag) { | |
| **gfv_coordinate_x_abs**[ i ] | u(v) |
| if( gfv_coordinate_x_abs[ i ] ) | |
| **gfv_coordinate_x_sign_flag**[ i ] | u(1) |
| **gfv_coordinate_y_abs**[ i ] | u(v) |
| if( gfv_coordinate_y_abs[ i ] ) | |
| **gfv_coordinate_y_sign_flag**[ i ] | u(1) |
| if( gfv_coordinate_z_present_flag ) { | |
| **gfv_coordinate_z_abs**[ i ] | u(v) |
| if( gfv coordinate_zabs[ i ] ) | |
| **gfv_coordinate_z_sign_flag**[ i ] | u(1) |
| } | |
| } else { | |
| **gfv_coordinate_dx_abs**[ i ] | u(v) |
| if( gfv_coordinate_dx_abs[ i ] ) | |
| **gfv_coordinate_dx_sign_flag**[ i ] | u(1) |
| **gfv_coordinate_dy_abs**[ i ] | u(v) |
| if( gfv_coordinate_dy_abs[ i ] ) | |
| **gfv_coordinate_dy_sign_flag**[ i ] | u(1) |
| if( gfv_coordinate_z_present_flag ) { | |
| **gfv_coordinate_dz_abs**[ i ] | u(v) |
| if( gfv_coordinate_dz abs[ i ] ) | |
| **gfv_coordinate_dz_sign_flag**[ i ] | u(1) |
| } | |
| } | |
| } | |
| } | |
| **gfv_matrix_present_flag** | u(1) |
| if(gfv_matrix_present_flag ) { | |
| **gfv_matrix_element_precision_factor_minus1** | ue(v) |
| **gfv_num_matrix_types_minus1** | ue(v) |
| for( i = 0; i <= num_matrix_types_minus1; i++ ) { | |
| **gfv_matrix_type_idx**[ i ] | u(6) |
| **gfv_matrix_property**[**i]** | u(2) |
| if( gfv_matrix_type_idx[ i ] == 0 ∥ gfv_matrix_type_idx[ i ] = = 1 ) { | |
| if( gfv _coordinate_present_flag ) | |
| **gfv_num_matrices_equal_to_num_kps_flag**[ i ] | u(1) |
| if( !gfv_coordinate_present_flag ∥ !gfv_num_matrix_equal_to_num_kps_flag[ i ] ) | |
| **gfv_num_matrices_info[** i ] | ue(v) |
| }else if( gfv_matrix_type_idx[ i ] = = 2 ∥ gfv_ matrix_type_idx[ i ] = = 3 ∥ gfv_matrix_type_idx[ i ] >= 7 ){ | |
| if( gfv_matrix_type_idx[ i ] >= 7 ) | |
| **gfv_num_matrices_minus1**[ i ] | ue(v) |
| **gfv_matrix_width_minus1**[ i ] | ue(v) |
| **gfv_matrix_height_minus1**[ i ] | ue(v) |
| }else if( gfv_matrix_type_idx[ i ] >= 4 && gfv_ matrix_type_idx[ i ] <= 6 && !gfv_coordinate_present_flag ){ | |
| **gfv_matrix_for_3D_space_flag**[ i ] | u(1) |
| for( j = 0; j < numMatrices[ i ]; j++ ) | |
| for( k = 0; k < matrixHeight[ i ]; k++ ) | |
| for( m = 0; m <matrixWidth[ i ]; m++ ) { | |
| **gfv_matrix_clement**_**int**[ i ][ j ][ k ][ m ] | ue(v) |
| **gfv_matrix_element_dec**[ i ][ j ][ k ][ m ] | u (v) |
| if( gfv_matrix_element_int[ i ][ j ][ k][ m ] ∥ gfv_ matrix_element_dec[ i ][ j ][ k ][ m ] ) | |
| **gfv_matrix_element_sign_flag**[ i ][ j ][ k ][ m ] | u(1) |
| } | |
| | |
| } | |
| } | |
| } | |
| if( gfv_base_pic_flag && !gfv_key_present_flag) | |
| if( gfv_nn_mode_idc == 0 ) { | |
| while( !byte_aligned( ) ) | |
| **gfv_nn_reserved_zero_bit_b** | u(1) |
| for( i = 0; more_data_in_payload( ); i++) | |
| **gfv_nn_payload_byte**[ i ] | b(8) |
| } | |
| } | |

optimized for_machine_analysis_flag equal to 0 indicates that the generated/decoded result may not be optimized (suitable) for machine analysis purposes. Not being suitable means that the machine analysis result may differ from the intended result or may not be accurate. For example, when the shape or color of an object is changed or some information is removed, the result of object recognition may be inaccurate. When equal to 1, it indicates that the generated/decoded result may be suitable for machine analysis purposes. This syntax may be applied not only to GFV but also to other generated/decoded results.

gfv_optimized_for_personal_identification_flag equal to 0 indicates that the result generated/decoded through GFV may not be optimized (suitable) for_personal identification purposes. When equal to 1, it indicates that the result generated/decoded through GFV may be suitable for_personal identification purposes.

gfv_matrix_transformed_flag equal to 1 indicates that the attributes of the information represented by the matrix (e.g., mouth, eyes, hair, etc.) have been transformed (e.g., enhanced, removed, replaced, etc.) differently from the attributes of the input data (e.g., base picture). When equal to 0, it indicates that the attributes of the information represented by the matrix (e.g., mouth, eyes, hair, etc.) are identical to the attributes of the input data (e.g., base picture).

gfv _matrix_property is information indicating the attribute of information of each matrix.

Table 68 illustrates an example of defining gfv_matrix_property when gfv_matrix_transformed_flag is equal to 1. In this case, gfv_matrix_property may be defined as follows.

The attributes defined by gfv _matrix_property may include transformation, removal, enhancement, and the like of information for achieving the purpose of the matrix. When equal to 0, it indicates that the attributes of the information represented by the matrix (e.g., mouth, eyes, hair, etc.) have been transformed differently from the attributes of the input data (e.g., base picture). When equal to 1, it indicates that the attributes of the information represented by the matrix (e.g., mouth, eyes, hair, etc.) have been transformed or partially removed for the purpose of protecting personally identifiable information in the input data (e.g., base picture). The items enumerated above are examples, and information indicating additional attributes of the matrix may further be defined**.** gfv**_**matrix_property[i] indicates the attribute of the matrix represented by gfv**_**matrix_type_idx[i].

Table 69 illustrates an example of defining gfv**_**matrix_transformed_flag independently.

Table 70 illustrates an example of defining gfv _matrix_property independently. In this case, the definition of gfv**_**matrix_property may be as follows.

gfv _matrix_property is information indicating the attributes of information of each matrix. The attributes defined by gfv _matrix_property may include transformation, removal, enhancement, and the like. As an example, when equal to 0, it indicates that the attributes of the information represented by the matrix (e.g., mouth, eyes, hair, etc.) are identical to those of the input data (e.g., base picture). When equal to 1, it indicates that the attributes of the information represented by the matrix (e.g., mouth, eyes, hair, etc.) have been transformed differently from the attributes of the input data (e.g., base picture). When equal to 2, it indicates that the attributes of the information represented by the matrix (e.g., mouth, eyes, hair, etc.) have been transformed or partially removed for the purpose of protecting personally identifiable information in the input data (e.g., base picture). The items enumerated above are examples, and information indicating additional attributes of the matrix may further be defined. gfv**_**matrix_property[i] indicates the attribute of the matrix represented by gfv_matrix_type_idx[i].

gfv**_**matrix_transformed_flag equal to 1 indicates that the attributes of the information represented by the matrix (e.g., mouth, eyes, hair, etc.) have been transformed (e.g., enhanced, removed, replaced, etc.) differently from the attributes of the input data (e.g., base picture). When equal to 0, it indicates that the attributes of the information represented by the matrix (e.g., mouth, eyes, hair, etc.) are identical to the attributes of the input data (e.g., base picture).

The examples above illustrate use cases of gfv_matrix transformed_flag and gfv**_**matrix_property as defined, and other forms of use are also possible. For example, the two pieces of information may be defined together without separate conditions.

The GFV SEI message specifies facial parameters and a face parameter translator neural network, denoted TranslatorNN( ), and a face picture generator neural network, denoted GenerativeNN( ). Here, TranslatorNN( ) may be used to convert facial parameters of various formats signaled by SEI messages into parameters of a fixed format. GenerativeNN( ) may be used to generate output pictures using the format of facial parameters and previously decoded output pictures.

NOTE 1 - Facial parameters may be determined from a source picture prior to encoding. Such source pictures may be referred to as driving pictures.

NOTE 2 - The previously decoded output picture input to GenerativeNN( ) may be a base picture (a decoded output picture providing a reference texture from which a face picture may be generated), and optionally, a picture that may be fused by GenerativeNN( ) to enhance background texture and facial details. When the current picture is not a base picture, the GFV SEI message may be used to generate a face picture based on a previously decoded base picture, facial parameters conveyed by the GFV SEI message, and optionally the currently decoded picture for fusion purposes.

Use of this SEI message requires the definition of the following variables.

Input picture width and height in units of luma samples, denoted as CroppedWidth and CroppedHeight, respectively.

Luma sample array baseCroppedYPic and chroma sample arrays baseCroppedCbPic and baseCroppedCrPic for the decoded output picture corresponding to the source base picture, denoted as BasePicture.

Luma sample array driveCroppedYPic and chroma sample arrays driveCroppedCbPic and driveCroppedCrPic for the decoded output picture corresponding to the source driving picture, denoted as DrivePicture.

Bit depth BitDepthY for the luma sample array of the input picture.

Bit depth BitDepthC for the chroma sample arrays (when present) of the input picture.

Chroma format indicator, denoted as ChromaFormatIdc.

The variables SubWidthC and SubHeightC are derived from ChromaFormatIdc.

gfv_id contains an identification number that may be used to identify facial feature information and to specify a neural network that may be used as GenerativeNN( ). The value of gfv**_**id shall be in the range of 0 to 232 - 2, inclusive. Values of gfv**_**id in the range of 256 to 511 and in the range of 231 to 232 - 2 are reserved for future use by ITU-T | ISO/IEC. A decoder shall ignore a GFV SEI message that contains a gfv_id in the range of 256 to 511 or in the range of 231 to 232 - 2.

NOTE - For example, when more than one face is present in an output picture, different values of gfv_id in different GFV SEI messages may be used to identify different faces.

gfv base_pic flag equal to 1 indicates that the currently decoded output picture corresponds to a base picture. gfv_base_pic_flag equal to 0 indicates that the currently decoded output picture does not correspond to a base picture.

The following constraints apply to the value of gfv_base_pic_flag.

When a GFV SEI message is the first GFV SEI message in decoding order having a particular gfv_id value within the current CLVS, the value of gfv _base_pic_flag shall be equal to 1.

When a GFV SEI message that has a particular gfv_id value has gfv base_pic_flag equal to 0, this SEI message pertains to the current decoded picture and all subsequent decoded pictures of the current layer, in output order, until the end of the current CLVS or up to but excluding the decoded picture that follows the current decoded picture in output order within the current CLVS and is associated with a subsequent GFV SEI message, in decoding order, having gfv base_pic _flag equal to 0 and that particular gfv_id value within the current CLVS, whichever is earlier.

gfv**_**nn_base_flag, gfv_nn_mode_idc, gfv**_**nn_reserved_zero_bit_a, gfv**_**nn_tag_uri, gfv_nn_uri, and gfv_nn_payload_byte[i] specify the neural network that may be used as TranslatorNN( ). gfv**_**nn base_flag, gfv**_**nn_mode_ide, gfv_nn_reserved_zero bit_a, gfv**_**nn_tag_uri, gfv_nn_uri, and gfv**_**nn_payload_byte[i] have the same syntax and semantics as nnpfc_base_flag, nnpfc_mode_ide, nnpfc_reserved_zero_bit_a, nnpfc_tag_uri, nnpfc_uri, and nnpfc_payload_byte[i], respectively.

When present, gfv _drive_pic_fusion flag equal to 1 indicates that the currently decoded picture may be input to GenerativeNN( ). The currently decoded picture corresponds to a driving picture that may be used for fusion. gfv_drive_pic_fusion flag equal to 0 indicates that the currently decoded picture shall not be input to GenerativeNN( ).

NOTE 3 - For example, a value of gfv_drive_pic_fusion_flag equal to 1 may be used to indicate that the currently decoded picture may enhance facial details or handle background changes.

NOTE 4 - Fusion outputs a picture using three inputs: the base picture, the features from the keypoints and/or matrices conveyed in the GFV SEI message, and the currently decoded picture.

NOTE 5 - When the currently decoded picture corresponds to a driving picture, it shall be marked as not intended for output.

optimized_for_machine_analysis_flag equal to 0 indicates that the generated/decoded results may not be optimized (suitable) for machine analysis purposes. Not being suitable means that the machine analysis result may differ from the intended result or may not be accurate. optimized_for_machine _analysis_flag equal to 1 indicates that the generated/decoded result may be suitable for machine analysis purposes. This syntax may be applied not only to GFV but also to other generated/decoded results.

gfv_optimized_for_personal_identification_flag equal to 0 indicates that the result generated/decoded through GFV may not be optimized (suitable) for_personal identification purposes. gfv_not_optimized for_personal_identification_flag equal to 0 indicates that the result generated/decoded through GFV may be suitable for_personal identification purposes.

gfv _matrix_property indicates information about the attributes of each matrix. The attributes defined by gfv_matrix_property include transformation, removal, enhancement, and the like. For example, when equal to 0, it indicates that the attributes of the information represented by the matrix (e.g., mouth, eyes, hair, etc.) are identical to those of the input data (e.g., base picture). When equal to 1, it indicates that the attributes of the information represented by the matrix have been transformed differently from those of the input data. When equal to 2, it indicates that the attributes of the information represented by the matrix (e.g., mouth, eyes, hair, etc.) have been transformed or partially removed for the purpose of protecting personally identifiable information. Information defining the attributes of the matrix may be further specified.

When gfv_matrix transformed_flag is set equal to 1, the semantics of gfv**_**matrix_property defined under this condition may be specified as follows.

gfv _matrix_property indicates information about the attributes of each matrix. The attributes defined by gfv _matrix_property may include transformation, removal, enhancement, and the like. For example, when equal to 0, it indicates that the attributes of the information represented by the matrix have been transformed differently from those of the input data. When equal to 1, it indicates that the attributes of the information represented by the matrix (e.g., mouth, eyes, hair, etc.) have been transformed or partially removed for the purpose of protecting personally identifiable information. Information defining the attributes of the matrix may be further specified.

gfv**_**matrix_transformed_flag equal to 1 indicates that the attributes of the information represented by the matrix (e.g., mouth, eyes, hair, etc.) have been transformed (e.g., enhanced, removed, replaced, etc.) differently from the attributes of the input data (e.g., base picture). gfv_matrix transformed_flag equal to 0 indicates that the attributes of the information represented by the matrix are identical to those of the input data.

gfv_coordinate_present_flag equal to 1 indicates that coordinate information of keypoints is present. gfv_coordinate_present_flag equal to 0 indicates that coordinate information of keypoints is not present.

It is a requirement of bitstream conformance that when gfv_matrix_type_idx[i] is equal to 0 or 1 for all i in the range of 0 to gfv_num_matrix_types_minus1, inclusive, the value of gfv_coordinate_present_ flag shall be equal to 1.

gfv_coordinate_precision_factor_minus1 plus 1 indicates the length in bits of gfv_coordinate_x_abs[i], gfv_coordinate_y_abs[i], and gfv_coordinate_z_abs[i].

gfv**_**num_kps_minus1 plus 1 indicates the number of keypoints. The value of gfv_num_kp_minus1 shall be in the range of 0 to 210 - 1, inclusive.

gfv_kp_pred_flag equal to 1 indicates that the syntax elements gfv_coordinate_dx_abs[i], gfv_coordinate_dy_abs[i], and gfv_coordinate_dz abs[i] are present and that the syntax elements gfv**_**coordinate_dx_sign_flag[i], gfv_coordinate_dy_sign_flag[i], and gfv_coordinate_dz_sign_flag[i] may be present. gfv_kp_pred_flag equal to 0 indicates that gfv_coordinate_x_abs[i], gfv_coordinate_y_abs[i], and gfv_coordinate_z_abs[i] are present and that the syntax elements gfv_coordinate_x_sign_flag[i], gfv_coordinate_y_sign_flag[i], and gfv_coordinate_z_sign_flag[i] may be present.

gfv_coordinate_z_present_flag equal to 1 indicates that z-axis coordinate information of keypoints is present. gfv_coordinate_z_present_flag equal to 0 indicates that z-axis coordinate information of keypoints is not present.

gfv_coordinate_z_max_value_minus1 plus 1 indicates the maximum absolute value of the z-axis coordinates of the keypoints.

gfv_coordinate_x_abs[i] indicates the normalized absolute value of the x-axis coordinate of the i-th keypoint.

gfv_coordinate_x_sign flag[i] specifies the sign of the x-axis coordinate of the i-th keypoint. When gfv_coordinate_x_sign_flag[i] is not present, it is inferred to be equal to 0.

gfv_coordinate_y_abs[i] specifies the normalized absolute value of the y-axis coordinate of the i-th keypoint.

gfv_coordinate_y_sign_flag[i] specifies the sign of the y-axis coordinate of the i-th keypoint. When gfv_coordinate_y sign_flag[i] is not present, it is inferred to be equal to 0.

gfv_coordinate_z_abs[i] indicates the normalized absolute value of the z-axis coordinate of the i-th keypoint.

gfv_coordinate_z_sign_flag[i] specifies the sign of the z-axis coordinate of the i-th keypoint. When gfv_coordinate_z_sign_flag[i] is not present, it is inferred to be equal to 0.

gfv_coordinate_dx_abs[i] indicates the absolute difference value of the normalized value of the x-axis coordinate of the i-th keypoint.

gfv_coordinate_dx_sign_flag[i] specifies the sign of the difference value of the x-axis coordinate of the i-th keypoint. When gfv_coordinate_dx_sign_flag[i] is not present, it is inferred to be equal to 0.

gfv**_**coordinate_dy_abs[i] specifies the absolute difference value of the normalized y-axis coordinate of the i-th keypoint.

gfv_coordinate_dy_sign_flag[i] specifies the sign of the difference value of the y-axis coordinate of the i-th keypoint. When gfv**_**coordinate_yd_sign_flag[i] is not present, it is inferred to be equal to 0.

gfv**_**coordinate_dz_abs[i] specifies the absolute difference value of the normalized z-axis coordinate of the i-th keypoint.

gfv_coordinate_dz_sign_flag[i] specifies the sign of the difference value of the z-axis coordinate of the i-th keypoint. When gfv**_**coordinate_dz_sign_flag[i] is not present, it is inferred to be equal to 0.

The variables coordinateDeltaX[i], coordinateDeltaY[i], and coordinateDeltaZ[i], representing the delta x-axis coordinate, delta y-axis coordinate, and delta z-axis coordinate, respectively, of the i-th keypoint, are derived as shown in Table 71 below.

**[Table 71]**

| |
|---|
| $coordinateDeltaX \left[i\right] = \frac{\left(1-2*gfv_coordinate_dx_sign_flag\left[i\right]\right) * gfv_coordinate_dx_abs \left[i\right] * CroppedWidth}{1 ≪ \left(gfv_coordinate_precision_factor_minus1+1\right)}$ |
| $coordinateDeltaY \left[i\right] = \frac{\left(1-2*gfv_coordinate_dy_sign_flag\left[i\right]\right) * gfv_coordinate_dy_abs \left[i\right] * CroppedHeight}{1 ≪ \left(gfv_coordinate_precision_factor_minus1+1\right)}$ |
| $coordinateDeltaZ \left[i\right] = \frac{\left(1-2*coordinate_dz_sign_flag\left[i\right]\right) * gfv_coordinate_dz_abs \left[i\right] * \left(gfv_coordinate_z_max_value_minus1+1\right)}{1 ≪ \left(gfv_coordinate_precision_factor_minus1+1\right)}$ |

The variables coordinateX[i], coordinateY[i], and coordinateZ[i], representing the x-axis coordinate, y-axis coordinate, and z-axis coordinate, respectively, of the i-th keypoint, are derived as shown in Table 72 below when gfv _kp_pred flag is equal to 0, and as shown in Table 73 below when gfv _kp_pred flag is equal to 1.

**[Table 72]**

| |
|---|
| $coordinateX \left[i\right] = \frac{\left(1-2*gfv_coordinate_x_sign_flag\left[i\right]\right) * gfv_coordinate_x_abs \left[i\right] * CroppedWidth}{1 ≪ \left(gfv_coordinate_precision_factor_minus1+1\right)}$ |
| $coordinateY \left[i\right] = \frac{\left(1-2*gfv_coordinate_y_sign_flag\left[i\right]\right) * gfv_coordinate_y_abs \left[i\right] * CroppedHeight}{1 ≪ \left(gfv_coordinate_precision_factor_minus1+1\right)}$ |
| $coordinateZ \left[i\right] = \frac{\left(1-2*gfv_coordinate_z_sign_flag\left[i\right]\right) * gfv_coordinate_z_abs \left[i\right] * \left(gfv_coordinate_z_max_value_minus1+1\right)}{1 ≪ \left(gfv_coordinate_precision_factor_minus1+1\right)}$ |

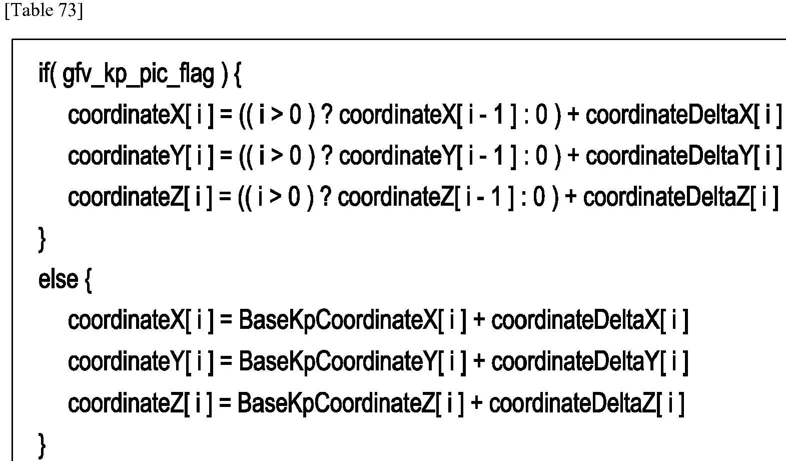

Here, BaseKpCoordinateX[i], BaseKpCoordinateY[i], and BaseKpCoordinateZ[i], representing the x-axis, y-axis, and z-axis coordinates, respectively, of the i-th keypoint of the base picture, are derived as shown in Table 74 below.

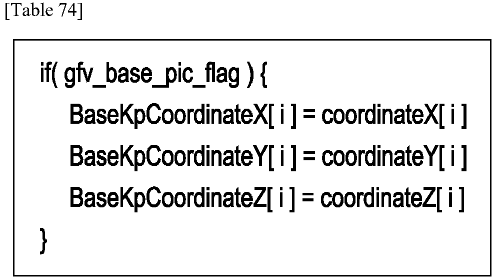

gfv matrix_presentflag equal to 1 indicates that matrix parameters are present. gfv_matrix_present_flag equal to 0 indicates that matrix parameters are not present.

gfv**_**matrix_element_precision_factor_minus1 plus 1 indicates the length in bits of gfv_matrix_element_dec[i][j][k][m].

gfv**_**num_matrix_types_minus1 plus 1 indicates the number of matrix types signaled in the SEI message. The value of gfv**_**matrix_type_num__minus1 shall be in the range of 0 to 26 - 1, inclusive.

gfv_matrix_type_idx[i] indicates the index of the i-th matrix_type as specified in Table 75.

**[Table 75]**

| **Value** | **Specification** |
|---|---|
| 0 | Affine translation matrix with the size of 2*2 or 3*3. |
| 1 | Covariance matrix with size of 2*2 or 3*3. |
| 2 | Mouth matrix representing mouth motion. |
| 3 | Eye matrix representing the open-close status and level of eyes. |
| 4 | Head rotation paramters with the size of 2*2 or 3*3 representing the head rotation in 2D space or 3D space. |
| 5 | [Iead translation matrix with the size of 1*2 or 1*3 representing head translationin 2D space or 3D space. |
| 6 | Head location matrix with size of 1*2 or 1*3 representing the head location in 2D space or 3D space. |
| 7 | Compact feature matrix with the size being specified by gfv_matrix_width_minus1[i] and gfv_matrix_height_minus1[i]. |
| 8...31 | Other matrix that may be used as determined by the application with the size being specified by gfv_matrix width_minus1 \|i\| and gfv**_**matrix_height_minus1 \|i\|. |
| 32...63 | Reserved |

NOTE 2. Undefined matrix type is used to indicate a matrix type that is not an affine transformation matrix, covariance matrix, rotation matrix, translation matrix, or compact feature matrix. It may be used by the user to finalize the matrix type.

gfv_num_matrices_equal_to_num_kps_flag[i] equal to 1 indicates that the number of matrices of the i-th matrix type is equal to gfv**_**num_kps_minus1 + 1. gfv_num_matrices_equal_to_num_kps_flag[i] equal to 0 indicates that the number of matrices of the i-th matrix_type is not equal to gfv_num_kps_minus1 + 1.

gfv_num_matrices_info[i] provides information for deriving the number of matrices of the i-th matrix type.

gfv_matrix_width_minus1[i] plus 1 indicates the width of the matrix of the i-th matrix type.

gfv_matrix_height_minus_1[i] plus 1 indicates the height of the matrix of the i-th matrix type.

gfv**_**matrix_for_3D_space_flag[i] equal to 1 indicates that the matrix of the i-th matrix_type is a matrix defined in three-dimensional space. gfv_matrix_for_3D_space_flag[i] equal to 0 indicates that the matrix of the i-th matrix_type is a matrix defined in two-dimensional space.

When gfv_matrix width_minus1[i] is not present, it is inferred as follows.

When gfv_matrix_type_idx[i] is equal to 0, 1, or 4, and one of coordinate_z_present_flag and gfv**_**matrix_for_3D_space_flag[i] is present and equal to 1, gfv_matrix_width_minus1[i] is inferred to be equal to 2.

Otherwise, when matrix_type_idx[i] is equal to 0, 1, or 4, and one of coordinate_z_present_flag and gfv**_**matrix_for_3D_space_flag[i] is present and equal to 0, gfv_matrix_width_minus1[i] is inferred to be equal to 1.

Otherwise (when matrix_type_idx[i] is equal to 5 or 6), gfv_matrix_width_minus1[i] is inferred to be equal to 0.

When gfv_matrix_height_minus1[i] is not present, it is inferred as follows.

When matrix_type_idx is equal to 0, 1, 4, 5, or 6, and one of gfv_coordinate_z_present_flag and gfv_matrix_for_3D_space_flag[i] is present and equal to 1, gfv_matrix_height_minus1[i] is inferred to be equal to 2.

Otherwise (when gfv**_**matrix_type_idx is equal to 0, 1, 4, 5, or 6, and one of gfv_coordinate_z_present_flag and gfv**_**matrix_for_3D_space_flag[i] is equal to 0), gfv_matrix_height_minus1[i] is inferred to be equal to 1.

The variables matrixWidth[i] and matrixHeight[i], representing the width and height, respectively, of the matrix of the i-th matrix type, are derived as shown in Table 76 below.

**[Table 76]**

| |
|---|
| matrixWidth[ i ] = gfv_matrix_width_minus1[ i ] + 1 |
| matrixHeight[ i ] = gfv_matrix_height_minus1[ i ] + 1 |

gfv_num_matrices_minus 1[i] plus 1 indicates the number of matrices of the i-th matrix type. The variable numMatrices[i], representing the number of matrices of the i-th matrix type, is derived as shown in Table 77 below.

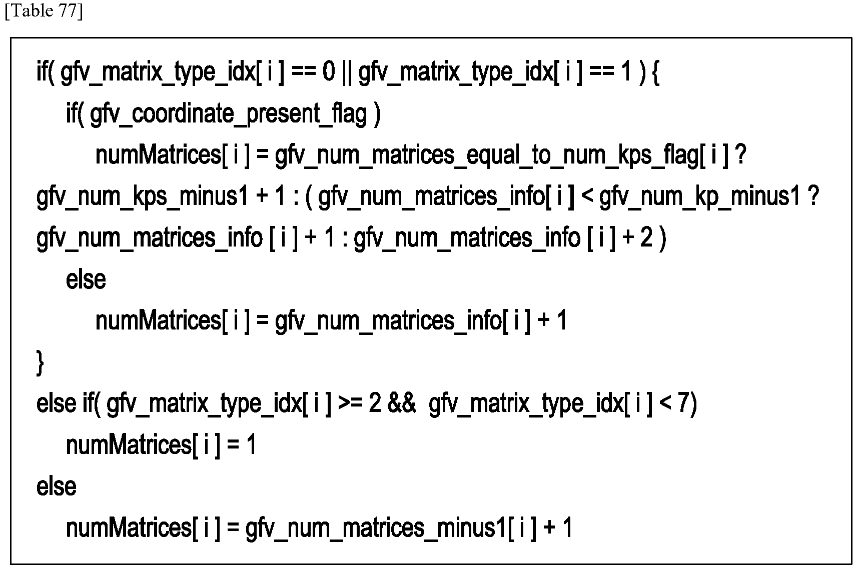

gfv**_**matrix_element_int[i][j][k][m] indicates the integer part of the matrix element value at position (k, m) of the j-th matrix of the i-th matrix type.

gfv**_**matrix_element_dec[i][j][k][m] indicates the fractional part of the matrix element value at position (k, m) of the j-th matrix of the i-th matrix type.

gfv**_**matrix_element_sign_flag[i][j][k][m] indicates the sign of the matrix element at position (k, m) of the j-th matrix of the i-th matrix type. When gfv_matrix_element_sign_flag[i][j] [k][m] is not present, it is inferred to be equal to 0.

matrixElementVal[i] [j] [k] [m], representing the matrix element value at position (k, m) of the j-th matrix of the i-th matrix type, is derived as shown in Table 78 below.

**[Table 78]**

| |
|---|
| $matrix_element_int \left[i\right] \left[j\right] \left[k\right] \left[m\right] + \left.\frac{gfv_matrix_element_dec \left[i\right] \left[j\right] \left[k\right] \left[m\right]}{1 ≪ \left(gfv_matrix_element_precision_factor_minus1+1\right)}\right)$ |

GenerativeNN( ) is a process for generating sample values of an output picture corresponding to a driving picture. It is invoked only when gfc_base_pic_flag is equal to 0.

The inputs to TranslatorNN( ) are:
sigKeyPoint and sigMatrix.

The outputs of TranslatorNN( ) are:
convKeyPoint and convMatrix.

The inputs to GenerativeNN( ) are:
When gfv_base_pic_flag is equal to 0, gfv_drive_pic_fusion_flag is equal to 0, and ChromaFormatIdc is equal to 0: inputBaseY, inputBaseKeyPoint, inputBaseMatrix, inputDriveKeyPoint, inputDriveMatrix.

When gfv_base_pic_flag is equal to 0, gfv**_**drive_pic_fusion_flag is equal to 0, and ChromaFormatIdc is not equal to 0: inputBaseY, inputBaseCb, inputBaseCr, inputBaseKeyPoint, inputBaseMatrix, inputDriveKeyPoint, inputDriveMatrix.

When gfv_base_pic_flag is equal to 0, gfv _drive_pic_fusion flag is equal to 1, and ChromaFormatIdc is equal to 0: inputBaseY, inputDriveY, inputBaseKeyPoint, inputBaseMatrix, inputDriveKeyPoint, inputDriveMatrix.

When gfv_base_pic_flag is equal to 0, gfv_drive_pic_fusion_flag is equal to 1, and ChromaFormatIdc is not equal to 0: inputBaseY, inputBaseCb, inputBaseCr, inputDriveY, inputDriveCb, inputDriveCr, inputBaseKeyPoint, inputBaseMatrix, inputDriveKeyPoint, inputDriveMatrix.

The outputs of GenerativeNN( ) are:
Luma sample array genY.

When ChromaFormatIdc is not equal to 0, two chroma sample arrays genCb and genCr.

The following process as shown in Table 79 below is used to generate a video picture.

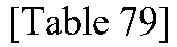

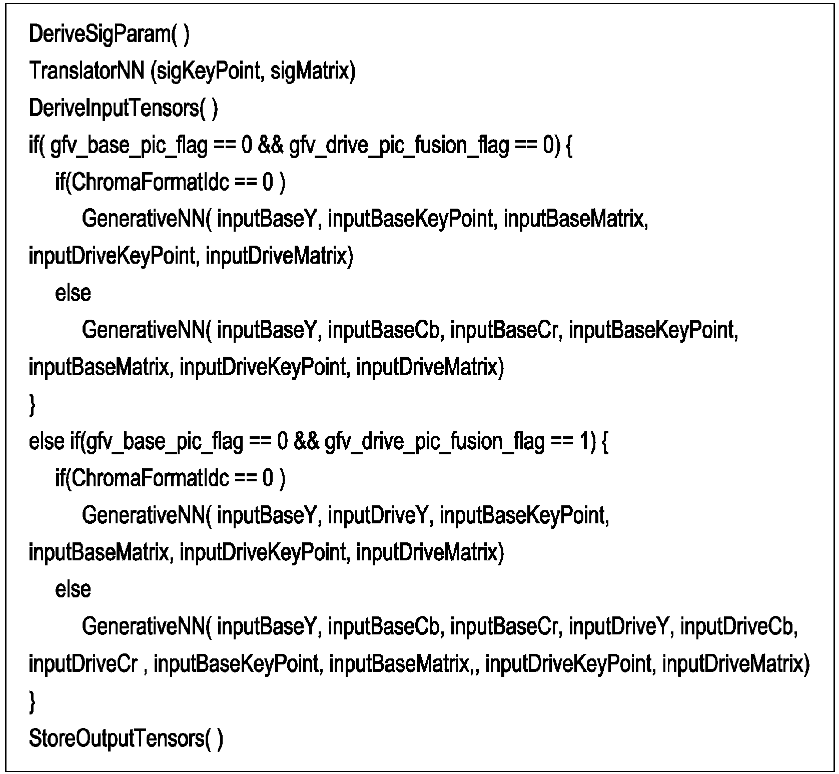

The process DeriveSigParam( ) is specified as follows to derive the inputs to TranslatorNN( ).

The keypoint coordinate array sigKeyPoint and matrix sigMatrix are derived as shown in Table 80 below.

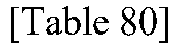

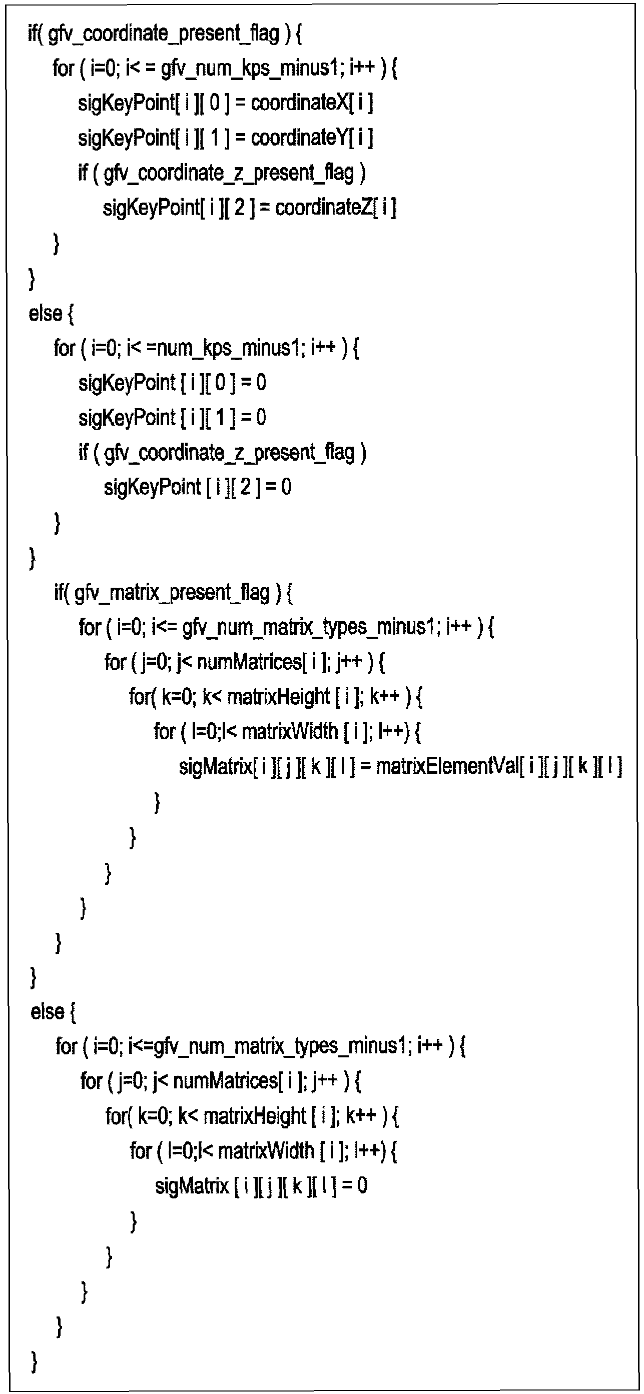

The input values to GenerativeNN( ) are real numbers, and the functions InpY( ) and InpC( ) are specified as shown in Table 81 below.

**[Table 81]**

| |
|---|
| InpY( x) = x ÷ ( ( 1 << BitDepth_{Y}) - 1 ) |
| InpC( x) = x ÷ ( ( 1 << BitDepth_{C} ) -1 ) |

The output values from GenerativeNN( ) are real numbers, and the functions OutY( ) and OutC( ) are specified as shown in Table 82 below.

**[Table 82]**

| |
|---|
| OutY( x) = Clip3( 0, ( 1 << BitDepth_{Y}) - 1 , x ***** ( ( 1 << BitDepth_{Y}) - 1 ) |
| OutC( x) = Clip3( 0, (1 << BitDepth_{C}) - 1 , x * ( (1 << BitDepth_{C}) - 1 ) |

The process DeriveInputTensors( ) is specified as follows to derive the inputs to GenerativeNN( ).

When gfv_base_pic_flag is equal to 1, the BasePicture input tensors inputBaseY, inputBaseCb, and inputBaseCr are derived as shown in Table 83 below.

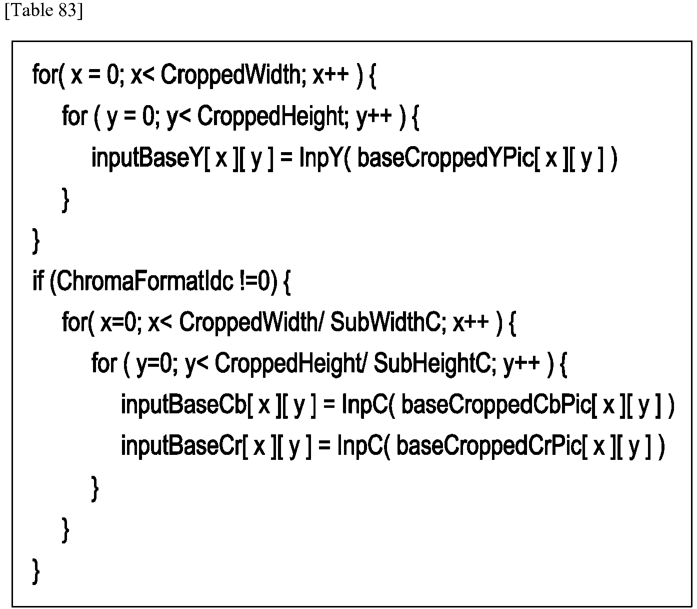

When gfv_drive_pic_fusion_flag is equal to 1, the DrivePicture luma sample array inputDriveY, inputDriveCb, and inputDriveCr are derived as shown in Table 84 below.

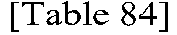

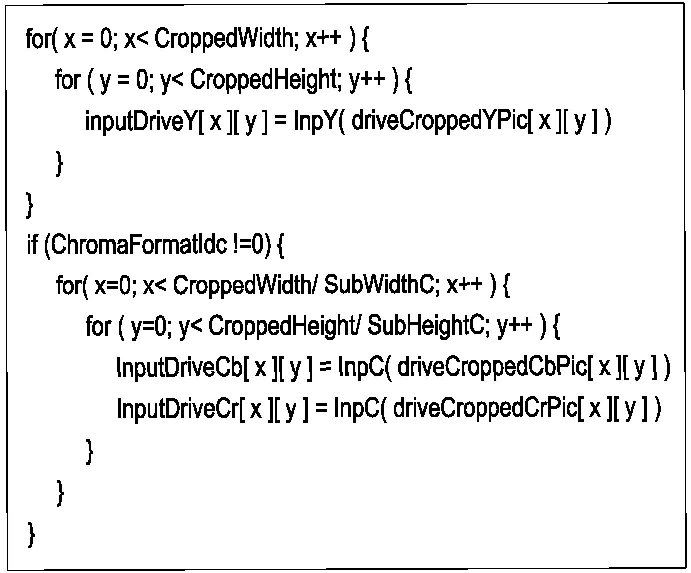

When gfv_base_pic_flag is equal to 0, the keypoint coordinate array inputDriveKeyPoint and matrix inputDriveMatrix for the current picture are derived as shown in Table 85 below.

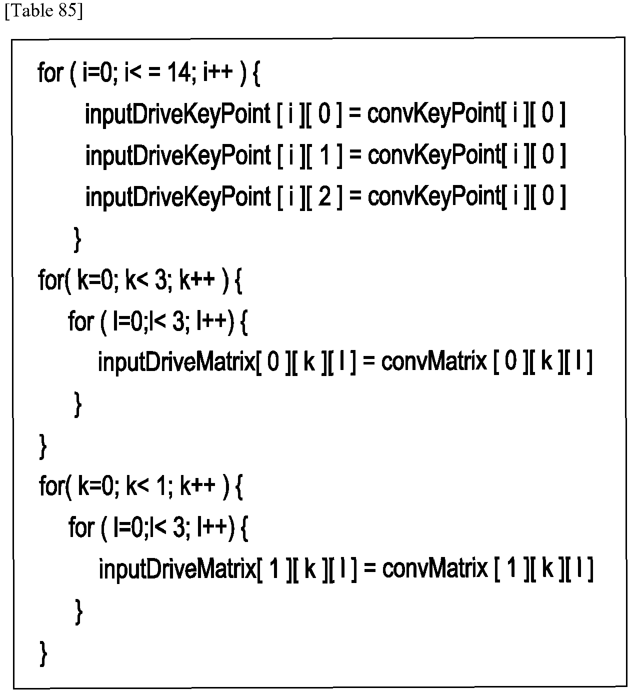

When gfv _base_pic_flag is equal to 1, the keypoint coordinate array inputBaseKeyPoint and matrix inputBaseMatrix for the base picture are derived as shown in Table 86 below.

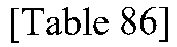

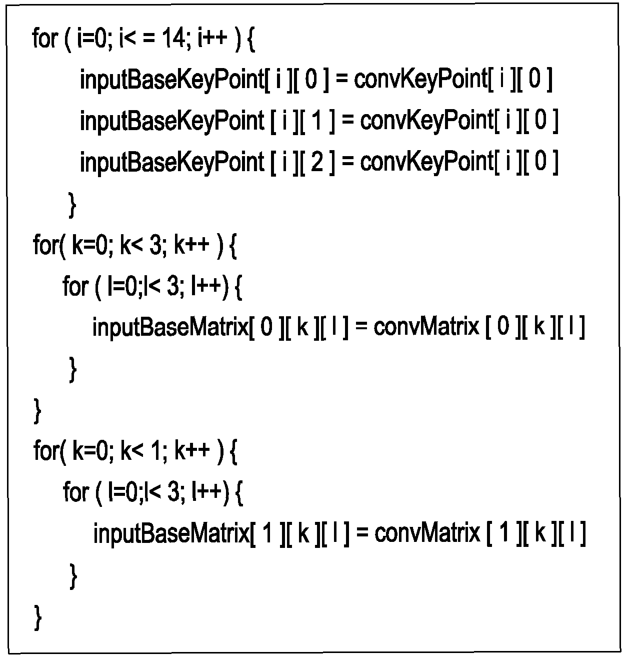

The process StoreOutputTensors( ) is specified as follows to derive the output.

When gfv_base_pic_flag is equal to 0, the output sample arrays outYPic[x][y], outCbPic[x][y], and outCrPic[x][y] are derived as shown in Table 87 below.

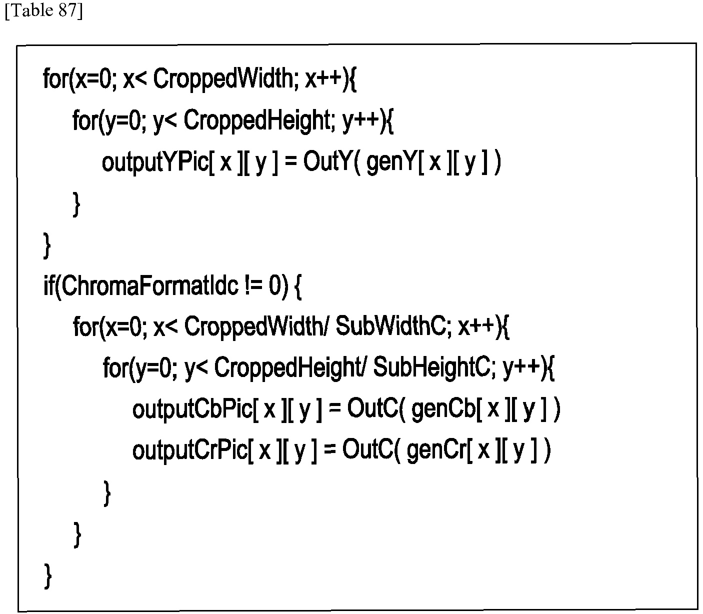

When gfv_base_pic_flag is equal to 1, the output sample arrays outYPic[x][y], outCbPic[x][y], and outCrPic[x][y] are derived as shown in Table 88 below.

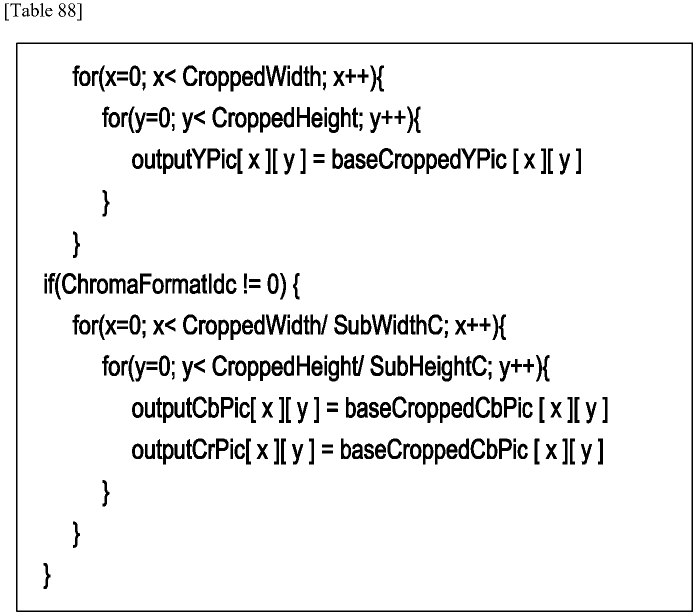

### Sixth Embodiment

Conventional video codecs aim to minimize pixel-level distortion in order to optimize for human viewing. Minimizing pixel-level distortion may not be optimal for machine analysis, since machine analysis relies on features rather than pixel-level details. Features represent information about various aspects of input data such as edges, textures, shapes, or high-level semantic information, and features may also be the output of a neural network representing specific features of an input picture. Research on feature-based optimization for machine analysis has been reported as follows.

Feature-based RDO. This method optimizes rate-distortion by computing distortion using extracted features. To extract features, a pre-trained model may be used or a machine perception aware metric model may be defined through training.

Feature-based preprocessing. This method minimizes the loss of important features and reduces unnecessary information for machine analysis. This makes compression more appropriate and can reduce the bitrate without adversely affecting machine analysis.

The encoder optimization information SEI message is used to indicate whether video has been optimized for human viewing or machine analysis and which types of optimization have been applied in preprocessing or encoding. An encoder may apply feature-based optimization to improve the quality of regions having important features over regions having fewer or no important features in a decoded picture. The presence of important features may vary depending on the feature extraction method. The feature extraction method may be defined based on the type and goal of the task that affects both human and machine perception. Accordingly, it may be useful to provide bitstream information about feature-based optimization in coded video.

eoi_cancel flag equal to 1 indicates that the persistence of the encoder optimization information SEI message included in any previous PU in output order is cancelled. eoi_cancel_flag equal to 0 indicates that information on optimization provided in preprocessing or encoding follows.

eoi_persistence_flag specifies the persistence of the optimization information applied in this SEI message. eoi_persistence flag equal to 0 specifies that the optimization information applies for the current picture only. eoi_persistence _flag equal to 1 specifies that the optimization information applies for the current picture and all subsequent pictures of the current layer in output order until one or more of the following conditions are true.

A new CLVS of the current layer begins.

The bitstream ends.

A picture in the current layer in an AU associated with a content protection information SEI message is output that follows the current picture in output order.

eoi_for_human_viewing_flag equal to 1 specifies that purposes for the applied optimization include human viewing. eoi_for_human_viewing_flag equal to 0 specifies that purposes for the applied optimization do not include human viewing.

eoi_for_machine_analysis_flag equal to 1 specifies that purposes for the applied optimization include machine analysis. eoi_for_machine_analysis_flag equal to 0 specifies that purposes for the applied optimization may or may not include machine analysis.

eoi_type indicates the types of optimization method as specified in Table 89 below.

**[Table 89]**

| **bitMask** | **Interpretation** |
|---|---|
| 0x01 | Object-based optimization; the pictures for which this SEI message persists have been pre-processed or encoded so that detected objects in the pictures are optimized with respect to other parts of the pictures for the indicated optimization purposes |
| 0x02 | Temporal resampling optimization |
| 0x04 | Spatial resampling optimization |
| 0x08 | Temporal quality optimization in a manner that quality fluctuates temporally |
| 0x10 | Spatial quality optimization; the pictures for which this SEI message persists have been pre-processed or encoded to reduce unnecessary information or improve the quality of necessary information.(e.g to reduce the amount of noise and remove speckles at the picture-level) |
| 0x20 | Feature based optimization; The pictures for which this SEI message persists have been pre-processed or encoded based on the quality of features. (Features may be the outputs of layers that make up a neural network. features may represent attributes such as edges or saliency maps in a picture. Features are extracted from the input data to capture specific characteristics or patterns that are relevant to the task at hand.) |
| 0x40 | Pixel based optimization; The pictures for which this SEI message persists have been pre-processed or encoded based on the pixel quality(e.g., to reduce pixel-level distortion.) |

Here, when (eoi_type & bitMask) is not equal to 0, it indicates that the optimization type with the bitMask value in Table 89 has been applied. When eoi_type is greater than 0 and (eoi_type & bitMask) is equal to 0, the optimization type with the bitMask value has not been applied. When eoi_type is equal to 0, optimization as determined by the application has been used.

The variables EoiObjectBasedFlag, EoiTemporalResamplingFlag, EoiSpatialResamplingFlag, EoiTemporalQualityFlag, EoiSpatialQualityFlag, EoiPixelBasedFlag, and EoiFeatureBasedFlag, specifying whether eoi_type indicates the type of the optimization to include object-based optimization, temporal resampling optimization, spatial resampling optimization, temporal quality optimization, spatial quality optimization, pixel-based optimization, and feature-based optimization, respectively, may be derived as shown in Table 90 below.

**[Table 90]**

| |
|---|
| EoiObjectBasedFlag = ( ( eoi_type & 0x01 ) > 0 ) ? 1 : 0 |
| EoiTemporalResamplingFlag = ( ( eoi_type & 0x02 ) > 0 ) ? 1 : 0 |
| EoiSpatialResamplingFlag = ( ( eoi_type & 0x04 ) > 0 ) ? 1 : 0 |
| EoiTemporalQualityFlag = ( ( eoi_type & 0x08 ) > 0 ) ? 1 : 0 |
| EoiSpatialQualityFlag = ( ( eoi_type & 0x10) > 0 ) ? 1 : 0 |
| EoiFeatureBasedFlag = ( ( eoi_type & 0x20 ) > 0 ) ? 1 : 0 |
| EoiPixelBasedFlag = ( ( eoi_type & 0x40 ) > 0 ) ? 1 : 0 |

Pixel-based optimization, feature-based optimization, and PPI (privacy protection information of the second embodiment) may be individually defined in eoi_type. In this case, the bitmask for each piece of information may be configured as 0x20 for feature-based optimization, 0x40 for pixel-based optimization, and 0x80 for PPI (Table 91), or as 0x20 for PPI, 0x40 for feature-based optimization, and 0x80 for pixel-based optimization (Table 92). It is important to note that the bitmask values presented here are merely one example and that any bitmask value may be utilized.

**[Table 91]**

| |
|---|
| EoiFeatureBasedFlag = ( ( eoi_type & 0x20 ) > 0 ) ? 1 : 0 |
| EoiPixelBasedFlag = ( ( eoi_type & 0x40 ) > 0 ) ? 1 : 0 |
| optimizationForPIIProtectionFlag = ((eoi_type & 0x80 ) > 0 ) ? 1 : 0 |

**[Table 92]**

| |
|---|
| optimizationForPIIProtectionFlag = ((eoi_type & 0x20 ) > 0 ) ? 1 : 0 |
| EoiFeatureBasedFlag = ( ( eoi_type & 0x40 ) > 0 ) ? 1 : 0 |
| EoiPixelBasedFlag = ( ( eoi_type & 0x80 ) > 0 ) ? 1 : 0 |

NOTE - For example, when certain highest temporal sublayers have been encoded with such coarse quantization that human viewers perceive the quality fluctuation as annoying but machine task performance is not compromised, eoi_for_human_viewing_flag and eoi_for_machine_analysis_flag may be set equal to 0 and 1, respectively, and eoi_type may be set to a value that causes EoiTemporalQualityFlag to be equal to 1.

When eoi_persistence_flag is equal to 0, it is a requirement of bitstream conformance that EoiTemporalResamplingFlag shall be equal to 0 and EoiTemporalQualityFlag shall be equal to 0.

eoi_object_based_idc, when present, indicates the type of object-based optimization as specified in Table 93 below.

**[Table 93]**

| **bitMask** | **Interpretation** |
|---|---|
| 0x01 | Areas outside the detected objects have been blurred prior to encoding. |
| 0x02 | Areas outside the detected objects have been encoded with coarser transform-domain quantization than the quantization used for the detected objects. |
| 0x04 | Areas outside the detected objects have been overwritten. For example, an encoding system can overwrite areas outside the detected objects with a constant sample value. |

Here, (eoi object_based_idc & bitMask) not equal to 0 indicates that the object-based optimization type associated with the bitMask value in Table 93 has been applied. When eoi_object_based_idc is greater than 0 and (eoi_object_based_idc & bitMask) is equal to 0, the object-based optimization type associated with the bitMask value has not been applied. When eoi_object_based_idc is equal to 0, an application-defined type of object-based optimization has been applied. The value of eoi_object_based_idc shall be in the range of 0 to 7, inclusive, in bitstreams conforming to this Specification. Values of 8 to 65,535, inclusive, for eoi_object_based _idc are reserved for future use by ITU-T | ISO/IEC and shall not be present in bitstreams conforming to this Specification. When the value of eoi_object_based _idc is in the range of 8 to 65,535, inclusive, decoders conforming to this Specification shall ignore eoi_object_based_idc.

eoi_temporal_resampling_type_flag equal to 0 specifies that the temporal resampling optimization is a subsampling operation. eoi_temporal _resampling_type_flag equal to 1 specifies that the temporal resampling optimization is an upsampling operation.

eoi_num_int_pics greater than 0 indicates that the count of pictures that the encoding system excluded between each pair of coded pictures in output order (when eoi_temporal_resampling_type_flag is equal to 0) or added between each pair of source pictures for encoding (when eoi_temporal_resampling_type_flag is equal to 1) within the persistence of this SEI message is constant. When eoi_temporal_resampling_type_flag is equal to 0 and eoi_num_int_pics is greater than 0, eoi_num_int_pics specifies the count of pictures that the encoding system excluded between each pair of coded pictures in output order. When eoi_temporal _resampling_type_flag is equal to 1 and eoi_num_int_pics is greater than 0, eoi_num_int_pics specifies the count of pictures that the encoding system added between each pair of source pictures for encoding.

eoi_num_int_pics equal to 0 indicates that the count of pictures that the encoding system excluded between each pair of coded pictures in output order (when eoi_temporal_resampling_type_flag is equal to 0) or added between each pair of source pictures for encoding (when eoi_temporal _resampling_type_flag is equal to 1) within this SEI message is unknown or varying.

The value of eoi_num_int_pics shall be in the range of 0 to 63, inclusive.

eoi_object_based_idc, when present, indicates the type of object-based optimization as specified in Table 93. Here, (eoi object_based _idc & bitMask) not equal to 0 indicates that the object-based optimization type associated with the bitMask value in Table 93 has been applied.

eoi_feature_optimization _type_idc may be defined to identify a single optimization method as shown in Table 94, or it may be defined to identify multiple optimization methods through a bitmask as shown in Table 95.

**[Table 94]**

| **coi_feature_optimization_type_ide** | **Interpretation** |
|---|---|
| 000 | Feature-based RDO. This method optimizes ratio-distortion by calculating distortion using extracted features. |
| 001 | Feature-based pre-processing. This method minimizes loss of important features and reduces unnecessary information for machine analysis. |
| 010 | Feature-based QP adaptation/rate control. |

**[Table 95]**

| **bitMask** | **Interpretation** |
|---|---|
| 0x01 | Feature-based RDO. This method optimizes ratio-distortion by calculating distortion using extracted features. |
| 0x02 | Feature-based pre-processing. This method minimizes loss of important features and reduces unnecessary information for machine analysis. |
| 0x04 | Feature-based QP adaptation/rate control. |

eoi_feature_optimization _type_ide, when present, indicates the type of feature-based optimization as specified in Table 94.

eoi_feature_optimization _type_ide, when present, indicates the type of feature-based optimization as specified in Table 95. Here, (eoi_feature_optimization _type_ide & bitMask) not equal to 0 indicates that the feature-based optimization associated with the bitMask value in Table 95 has been applied.

eoi_partial feature_use_flag equal to 0 indicates that all features have been used for optimization. eoi_partial feature_use_flag equal to 1 indicates that only some features have been used for optimization.

Table 96 illustrates an example of encoder optimization information SEI message syntax.

**[Table 96]**

| | |
|---|---|
| encoder_optimization_info(payloadSize ) { | **Descriptor** |
| **eoi_cancel_flag** | u(1) |
| if( !eoi_cancel_flag ) { | |
| **eoi_persistence_flag** | u(1) |
| **eoi_for_human_viewing_flag** | u(1) |
| **eoi_for_machine_analysis_flag** | u(1) |
| **eoi_type** | u(16) |
| if( EoiObjectBasedFlag ){ | |
| **eoi_object_based_idc** | ue(v) |
| } | |
| if( EoiTemporalResamplingFlag ) { | |
| **eoi_temporal_resampling_type_flag** | u(1) |
| **eoi_num_int_pics** | ue(v) |
| } | |
| if(EoiFeatureBasedFlag){ | |
| **eoi_feature_optimization_type_idc** | u(3) |
| **eoi_partial_feature_use_flag** | u(1) |
| } | |
| } | |
| } | |

### Seventh Embodiment

In order to determine whether data or content (e.g., video/image, etc.) may be used, it may be necessary to verify not only privacy protection but also information such as copyright and license. This is to protect the rights of data and content owners and to reduce the legal risk of data and content users. Content protection information (CPI) may be defined as the information for this purpose.

Table 97 illustrates an example of content protection information SEI message syntax.

**[Table 97]**

| | |
|---|---|
| content_protection_info(payloadSize ) { | **Descriptor** |
| **cpi_cancel_flag** | u(1) |
| if( !cpi_cancel_flag){ | |
| **cpi_persistence_flag** | u(1) |
| **cpi_copyright_protection_flag** | u(1) |
| **epi_privacy_protection_flag** | u(1) |
| if( cpi_copyright_protectdion_flag ) | |
| **cpi_copyright_information** | st(v) |
| if( cpi_privacy_protectdion_flag ) { | |
| **cpi_protected_info_idc** | u(4) |
| **cpi_privacy_protection_type** | u(8) |
| } | |
| } | |
| } | |

cpi__cancel_flag equal to 1 indicates that the persistence of all previous content protection information SEI messages applied to the current layer is cancelled. When cpi_ _cancel_flag is equal to 0, the content protection information persists and the method and scope of content protection are defined in accordance with the information that follows.

cpi_persistence_flag specifies the persistence of the content protection SEI message for the current layer. When cpi_persistence_flag is equal to 0, the content protection information applies only to the currently decoded image. When cpi_persistence_flag is equal to 1, the content protection information SEI message applies to the currently decoded image and persists in output order for all subsequent images of the current layer until one or more of the following conditions are true.

A new CLVS of the current layer begins.

The bitstream ends.

A picture in the current layer in an AU associated with a content protection information SEI message is output that follows the current picture in output order.

cpi_copyright_information defines copyright information associated with pictures within the persistence scope defined by cpi_cancel_flag and cpi_persistence_flag.

The general content of cpi_information may include a "Copyright" string or "^{©}" symbol, information identifying the copyright holder such as an individual or company name, the year of content creation, and usage/licensing statements such as "All rights reserved." It may also include the name or format of common license types such as "Public Domain," "CC-0," "PDDL," "CC-BY," "CDLA-Permissive-1.0," "ODC-BY," "CC-BY-SA," "CDLA-Sharing-1.0," "ODC-ODbL," "CC BY-NC," "CC BY-ND," "CC BY-NC-SA," and "CC BY-NC-ND," as well as descriptions of usage rights. It may further include content concerning usage rights and responsibilities such as "For academic use only," "For non-commercial use only," "Commercial use permitted," and "Free to use, but the user bears responsibility for its use." Since the content of copyright and license information may change from time to time, it may be defined in an unstructured format.

cpi_copyright_protection _flag equal to 1 indicates that cpi_copyright_information has been defined. When equal to 0, it indicates that cpicopyright_information has not been defined.

cpi_privacy_protection_flag equal to 1 indicates that cpi_protected_info_idc and cpi_privacy_protection_type have been defined. When equal to 0, it indicates that cpi_protected_info_ide and cpi_privacy_protection_typehave not been defined.

privacy_protection _typeis information for expressing the attributes of the applied privacy protection.

**[Table 98]**

| cpiprivacy _protection_type | Description |
|---|---|
| 000 | Blurring: Makes information in personal information areas blurry. |
| 001 | Replacing: Changes the form of personal information so it is identified as different from the original (transformed into a form without privacy infringement issues). |
| 010 | Masking: Covers personal information areas. |
| 011 | Information Insertion and Transformation (e.g., adversarial attack) |
| 100 | Anonymization: Transformed so that individual identification is impossible. |

The example in Table 98 represents the applied method in lookup table format. In the example of Table 98, the value of privacy_protection_typemay be used to identify whether the applied method is blurring, masking, replacing, or the like.

**[Table 99]**

| bitMask | Interpretation |
|---|---|
| 0x01 | Blurring: Makes information in personal information areas blurry. |
| 0x02 | Replacing: Changes the form of personal information so it is identified as different from the original (transformed into a form without privacy infringement issues). |
| 0x04 | Masking: Covers personal information areas. |
| 0x08 | Information Insertion and Transformation (e.g., adversarial attack) |
| 0x10 | Anonymization: Transformed so that individual identification is impossible. |

Table 99 represents the method information defined in Table 98 as a result of a bitwise AND of privacy_protection _type and a bitmask. Table 100 illustrates an example thereof.

**[Table 100]**

| |
|---|
| blurring_Flag = ((privacy_protection_type& 0x01 ) > 0 ) ? 1 : 0 |
| replacing_Flag = ((privacy_protection_type & 0x02 ) > 0 ) ? 1 : 0 |
| masking_Flag = ((privacy_protection_type & 0x04 ) > 0 ) ? 1 : 0 |
| adversarial_attack_Flag = ((privacy_protection_type & 0x08 ) > 0 ) ? 1 : 0 |
| anonymization_Flag = ((privacy_protection_type & 0x10 ) > 0 ) ? 1 : 0 |

In this case, it is possible to express a plurality of attributes. blurring_Flag, replacing_Flag, masking _Flag, adversarial_attack_Flag, and anonymization_Flag are information indicating whether the privacy protection methods of blurring, replacing, masking, adversarial attack, and anonymization attributes, respectively, have been applied, where a value of 1 means that the corresponding method has been applied and a value of 0 means that the corresponding method has not been applied.

**[Table 101]**

| **cpi_privacy_protection_type** | Description |
|---|---|
| 00 | Pseudonymized data: Indicates that the data type has been converted into pseudonymized information for privacy protection. |
| 01 | Anonymized data: Indicates that the data type has been converted into anonymized information for privacy protection. |
| 10 | Data from which PII (personally identifiable information) has been removed. |
| 11 | identified data: Indicates that personal identifiable information may be present. |

The example in Table 101 expresses attribute information of data that has been changed due to the applied privacy protection. In some cases, information on the change in privacy attributes of data as a result of applying privacy protection may be needed rather than information about the applied privacy protection method itself. Table 101 illustrates examples of expressing cases where the privacy attribute of data has been pseudonymized, de-identified, or removed as a result of applying privacy protection.

**[Table 102]**

| bitMask | Interpretation |
|---|---|
| 0x01 | Pseudonymized data: Indicates that the data type has been converted into pseudonymized information for privacy protection. |
| 0x02 | Anonymized data: Indicates that the data type has been converted into anonymized information for privacy protection. |
| 0x04 | Data from which PII (personally identifiable information) has been removed. |
| 0x08 | Identified data: Indicates that personal identifiable information may be present. |

Table 102 represents the method information defined in Table 101 as a result of a bitwise AND of privacy_protection _typeand a bitmask. Table 103 illustrates an example thereof.

**[Table 103]**

| |
|---|
| Pseudonymized_data_Flag = ((privacy_protection_type& 0x01 ) > 0 ) ? 1 : 0 |
| anonymized_data_Flag = ((privacy_protection_type & 0x02 ) > 0 ) ? 1 : 0 |
| Removed_PII_flag = ((privacy_protection_type & 0x04 ) > 0 ) ? 1 : 0 |
| Identified_data_flag = ((privacy_protection_type & 0x08 ) > 0 ) ? 1 : 0 |

Pseudonymized_data_Flag, anonymized_data_Flag, Removed_PII_flag, and Identified _data_flag are information indicating whether the privacy attribute of the data has been changed to pseudonymized data, anonymized data, data with PII removed, or identified data, respectively, as a result of applying a privacy protection method. A value of 1 means that the data has been changed to the corresponding attribute, and a value of 0 means that the data has not been changed to the corresponding attribute.

The privacy protection methods defined in Tables 98, 99, 101, and 102 are examples, and it is self-evident that other methods may also be defined.

Protected_info_idc represents information for identifying the type of protected information.

**[Table 104]**

| **cpi_protected_info_idc** | Description |
|---|---|
| 00 | Protects information such as faces that allow for the identification of a person. |
| 01 | Protects information such as license plates that allow for the identification of means of transportation like vehicles. |
| 10 | Protects information such as business names, or characters and drawings on signs from which a location can be inferred. |
| 11 | Information such as characters and drawings of products or objects from which an item can be inferred. |

In Table 104, a Protected_info _idc value of 00 means that information such as faces that can identify a person has been protected. A Protected_info_idc value of 01 means that information such as license plates that can identify a vehicle or other means of transportation has been protected. A Protected _info_idc value of 10 means that information such as the text or images on signs or storefronts from which a location can be inferred has been protected. A Protected _info_idc value of 11 means that information such as the text or images on products or objects from which a specific object can be inferred has been protected. It is self-evident that additional types of information to be protected may be further defined.

**[Table 105]**

| bitMask | Interpretation |
|---|---|
| 0x01 | Protects information such as faces that allow for the identification of a person. |
| 0x02 | Protects information such as license plates that allow for the identification of means of transportation like vehicles. |
| 0x04 | Protects information such as business names, or characters and drawings on signs from which a location can be inferred. |
| 0x08 | Information such as characters and drawings of products or objects from which an item can be inferred. |

Table 105 illustrates an example of a method for identifying a plurality of types of protected information through a bitmask. In this case, the values of Protected _info_idc may be defined differently from those in Table 104.

In Table 106, Protected_personal_identifiable_data_Flag, Protected_vehicle_identifiable_data_Flag, Protected_location__identifiabledata_Flag, and Protected object_identifiable_data_Flag indicate that information such as faces that can identify a person has been protected, that information such as license plates that can identify a vehicle or other means of transportation has been protected, that information such as the text or images on signs or storefronts from which a location can be inferred has been protected, and that information such as the text or images on products or objects from which a specific object can be inferred has been protected, respectively. A value of 1 means that protection has been applied to the corresponding information, and a value of 0 means that protection has not been applied to the corresponding information.

**[Table 106]**

| |
|---|
| Protected_personal_identifiable_data_Flag = ((Protected_info_idc& 0x01 ) > 0 ) ? 1 : 0 |
| Protected_vehicle_identifiable_data_Flag = ((Protected_info_idc & 0x02 ) > 0 ) ? 1 : 0 |
| Protected_location_identifiable_data_Flag = ((Protected_info_idc & 0x04 ) > 0 ) ? 1 : 0 |
| Protected_object_identifiable_data_Flag = ((Protected_info_idc & 0x08 ) > 0 ) ? 1 : 0 |

### Eighth Embodiment

In order to determine whether data or content (e.g., video/image, etc.) may be used, it may be necessary to verify not only privacy protection but also information such as copyright and license. This is to protect the rights of data and content owners and to reduce the legal risk of data and content users. Content protection information (CPI) may be defined as the information for this purpose.

Tables 107, 108, 109, and 110 illustrate examples of content protection information SEI message syntaxes.

**[Table 107]**

| | |
|---|---|
| content_protection_info(payloadSize ) { | **Descriptor** |
| **cpi_cancel_flag** | u(1) |
| if( !cpi_cancel_flag){ | |
| **cpi_persistence_flag** | u(1) |
| **cpi_copyright_protection_flag** | u(1) |
| **cpi_privacy_protection_flag** | u(1) |
| if( cpi_copyright_protectdion_flag){ | |
| **cpi_copyright_information** | st(v) |
| **cpi_license_information_flag** | |
| if(cpi_license_information_flag ) | |
| **cpi_license_information** | st(v) |
| } | |
| if( cpi_privacy_protectdion_flag ) { | |
| **cpi_protected_info_idc** | u(4) |
| **cpi_privacy_protection_type** | u(8) |
| } | |
| } | |
| } | |

**[Table 108]**

| | |
|---|---|
| content_protection_info(payloadSize ) { | **Descriptor** |
| **cpi_cancel_flag** | u(1) |
| if( !cpi_cancel_flag){ | |
| **cpi_persistence_flag** | u(1) |
| **cpi_copyright_protection_flag** | u(1) |
| **cpi_privacy_protection_flag** | u(1) |
| if( cpi_copyright_protectdion_flag){ | |
| **cpi_copyright_information** | st(v) |
| **cpi_license_information_flag** | |
| if(cpi_license_information_flag) | |
| **cpi**_**license_information**_**idc** | u(5) |
| } | |
| if( cpi_privacy_protectdion_flag ) { | |
| **cpi_protected_info_idc** | u(4) |
| **cpi_privacy_protection_type** | u(8) |
| } | |
| } | |
| } | |

**[Table 109]**

| | |
|---|---|
| content_protection_info(payloadSize ) { | **Descriptor** |
| **cpi_cancel_flag** | u(1) |
| if( !cpi_cancel_flag ) { | |
| **cpi_persistence_flag** | u(1) |
| **cpi_copyright_information** | st(v) |
| **cpi_license_information** | st(v) |
| } | |
| } | |

**[Table 110]**

| | |
|---|---|
| content_protection_info(payloadSize ) { | **Descriptor** |
| **cpi_cancel_flag** | u(1) |
| if( !cpi_cancel_flag){ | |
| **cpi_persistence_flag** | u(1) |
| **cpi_copyright_information** | st(v) |
| **cpi_license_information_idc** | st(v) |
| } | |
| } | |

cpi_cancel_flag equal to 1 indicates that the persistence of all previous content protection information SEI messages applied to the current layer is cancelled. When cpi_ _cancel_flag is equal to 0, the content protection information persists and the method and scope of content protection are defined in accordance with the information that follows.

cpi_persistence_flag specifies the persistence of the content protection SEI message for the current layer. When cpi_persistence_flag is equal to 0, the content protection information applies only to the currently decoded image. When cpi_persistence_flag is equal to 1, the content protection information SEI message applies to the currently decoded image and persists in output order for all subsequent images of the current layer until one or more of the following conditions are true.

A new CLVS of the current layer begins.

The bitstream ends.

A picture in the current layer in an AU associated with a content protection information SEI message is output that follows the current picture in output order.

cpi_copyright_information defines copyright information associated with pictures within the persistence scope defined by cpi_cancel_flag and cpi_persistence_flag.

The general content of cpi_information may include a "Copyright" string or "^{©}" symbol, information identifying the copyright holder such as an individual or company name, the year of content creation, and usage/licensing statements such as "All rights reserved."

cpi **license_information** _flag equal to 1 indicates that cpi **license_information** or cpi **license_information** _idc has been defined. When equal to 0, it indicates that cpi **license_information** has not been defined.

cpi_**license_**information indicates the permitted scope of use and license for pictures within the persistence scope defined by cpi_cancel_flag and cpi_persistence_flag. It may also include the name or format of common license types such as "Public Domain," "CC-0," "PDDL," "CC-BY," "CDLA-Permissive-1.0," "ODC-BY," "CC-BY-SA," "CDLA-Sharing-1.0," "ODC-ODbL," "CC BY-NC," "CC BY-ND," "CC BY-NC-SA," and "CC BY-NC-ND," as well as descriptions of usage rights. It may further include content concerning usage rights and responsibilities such as "For academic use only," "For non-commercial use only," "Commercial use permitted," and "Free to use, but the user bears responsibility for its use." Since the content of copyright and license information may change from time to time, it may be defined in an unstructured format (e.g., as a sentence).

cpi **license_information** _idc is information for identifying the permitted scope of use and license for pictures within the persistence scope defined by cpi_cancel_flag and cpi_persistence_flag. Table 111 illustrates an example thereof, and other rights not listed as exceptions may also be included.

**[Table 111]**

| cpi_protected_info_idc | Description |
|---|---|
| 0001 | Public Domain |
| 0010 | CC-0 |
| 0011 | PDDL. |
| 0100 | CC-BY |
| 0101 | CDLA-Permissive-1.0 |
| 0110 | "ODC-BY |
| 0111 | CC-BY-SA |
| 1000 | CDLA-Sharing-1.0 |
| 1001 | ODC-ODbL |
| 1010 | CC BY-NC |
| 1011 | CC BY-ND |
| 1100 | CC BY-NC-SA |
| 1101 | CC BY-NC-ND |

For example, content concerning usage rights and responsibilities such as "For academic use only," "For non-commercial use only," "Commercial use permitted," and "Free to use, but the user bears responsibility for its use" may also be included.

cpi_copyright_protection _flag equal to 1 indicates that cpi**_**copyright_information has been defined. When equal to 0, it indicates that cpi_copyright_information has not been defined.

cpi_privacy_protection _flag equal to 1 indicates that cpi_protectedinfo _idc and cpi_privacy_protectiontype have been defined. When equal to 0, it indicates that cpi_protected_info_ide and cpi_privacy_protection_typehave not been defined.

privacy_protection _typeis information for expressing the attributes of the applied privacy protection.

**[Table 112]**

| cpi_privacy_protection_type | Description |
|---|---|
| 000 | Blurring: Makes information in personal information areas blurry. |
| 001 | Replacing: Changes the form of personal information so it is identified as something different from the original (transformed into a form without personal information infringement issues). |
| 010 | Masking: Covers personal information areas. |
| 011 | Information Insertion and Transformation (e.g., adversarial attack) |
| 100 | Anonymization: Transformed so that individual identification is impossible. |

The example in Table 112 represents the applied method in lookup table format. In the example of Table 112, the value of privacy_protection_typemay be used to identify whether the applied method is blurring, masking, replacing, or the like.

**[Table 113]**

| bitMask | Interpretation |
|---|---|
| 0x01 | Blurring: Makes information in personal information areas blurry. |
| 0x02 | Replacing: Changes the form of personal information so it is identified as something different from the original (transformed into a form without personal information infringement issues). |
| 0x04 | Masking: Covers personal information areas. |
| 0x08 | Information Insertion and Transformation (e.g., adversarial attack) |
| 0x10 | Anonymization: Transformed so that individual identification is impossible. |

Table 113 represents the method information defined in Table 112 as a result of a bitwise AND of privacy_protection_typeand a bitmask. Table 114 illustrates an example thereof.

**[Table 114]**

| |
|---|
| blurring_Flag = ((privacy_protection_type& 0x01 ) > 0 ) ? 1 : 0 |
| replacing_Flag = ((privacy_protection_type & 0x02 ) > 0 ) ? 1 : 0 |
| masking_Flag = ((privacy_protection_type & 0x04 ) > 0 ) ? 1 : 0 |
| adversarial_attack_Flag = ((privacy_protection_type & 0x08 ) > 0 ) ? 1 : 0 |
| anonymization_Flag = ((privacy_protection_type & 0x10 ) > 0 ) ? 1 : 0 |

In this case, it is possible to express a plurality of attributes. blurring_Flag, replacing _Flag, masking _Flag, adversarial_attack_Flag, and anonymization_Flag are information indicating whether the privacy protection methods of blurring, replacing, masking, adversarial attack, and anonymization attributes, respectively, have been applied, where a value of 1 means that the corresponding method has been applied and a value of 0 means that the corresponding method has not been applied.

**[Table 115]**

| **epi_privacy_protection_type** | Description |
|---|---|
| 00 | Pseudonymized data: Indicates that the data type has been converted into pseudonymized information for personal information protection. |
| 01 | Anonymized data: Indicates that the _datatype has been converted into de-identified information for personal information protection. |
| 10 | Data from which PII (personally identifiable information) has been removed. |
| 11 | Identified data: Indicates that personal identifiable information may be present. |

The example in Table 115 expresses attribute information of data that has been changed due to the applied privacy protection. In some cases, information on the change in privacy attributes of data as a result of applying privacy protection may be needed rather than information about the applied privacy protection method itself. Table 115 illustrates examples of expressing cases where the privacy attribute of data has been pseudonymized, de-identified, or removed as a result of applying privacy protection.

**[Table 116]**

| bitMask | Interpretation |
|---|---|
| 0x01 | Pseudonymized data: Indicates that the data type has been converted into pseudonymized **information** for personal information protection. |
| 0x02 | Anonymized data: Indicates that the data type has been converted into de-identified information for personal information protection. |
| 0x04 | Data from which PII (personally identifiable information) has been removed. |
| 0x08 | Identified data: Indicates that personal _identifiableinformation may be present. |

Table 116 represents the method information defined in Table 115 as a result of a bitwise AND of privacy_protection _typeand a bitmask. Table 117 illustrates an example thereof.

**[Table 117]**

| |
|---|
| Pseudonymized_data_Flag = ((privacy_protection_type& 0x01 ) > 0 ) ? 1 : 0 |
| anonymized_data_Flag = ((privacy_protection_type & 0x02 ) > 0 ) ? 1 : 0 |
| Removed_PII_flag = ((privacy_protection_type & 0x04 ) > 0 ) ? 1 : 0 |
| Identified_data_flag = ((privacy_protection_type & 0x08 ) > 0 ) ? 1 : 0 |

Pseudonymized_data_Flag, anonymized _data_Flag, Removed_PII_flag, and Identified _data_flag are information indicating whether the privacy attribute of the data has been changed to pseudonymized data, anonymized data, data with PII removed, or identified data, respectively, as a result of applying a privacy protection method. A value of 1 means that the data has been changed to the corresponding attribute, and a value of 0 means that the data has not been changed to the corresponding attribute.

The privacy protection methods defined in Tables 112, 113, 115, and 116 are examples, and it is self-evident that other methods may also be defined.

Protected _info_idc represents information for identifying the type of protected information.

**[Table 118]**

| **cpi_protected info_idc** | Description |
|---|---|
| 00 | Protects information such as faces that allow for the identification of a person. |
| 01 | Protects information such as license plates that allow for the identification of means of transportation like vehicles. |
| 10 | Protects information such as business names, or characters and drawings on signs from which a location can be inferred. |
| 11 | Information such as characters and drawings of products or objects from which an item can be inferred. |

In Table 118, a Protected_info _idc value of 00 means that information such as faces that can identify a person has been protected. A Protected _info_idc value of 01 means that information such as license plates that can identify a vehicle or other means of transportation has been protected. A Protected _info_idc value of 10 means that information such as the text or images on signs or storefronts from which a location can be inferred has been protected. A Protected _info_idc value of 11 means that information such as the text or images on products or objects from which a specific object can be inferred has been protected. It is self-evident that additional types of information to be protected may be further defined.

**[Table 119]**

| bitMask | Interpretation |
|---|---|
| 0x01 | Protects information such as faces that allow for the identification of a person. |
| 0x02 | Protects information such as license plates that allow for the identification of means of transportation like vehicles. |
| 0x04 | Protects information such as business names, or characters and drawings on signs from which a location can be inferred. |
| 0x08 | Information such as characters and drawings of products or objects from which an item can be inferred. |

Table 119 illustrates an example of a method for identifying a plurality of types of protected information through a bitmask. In this case, the values of Protected _info_idc may be defined differently from those in Table 118.

In Table 120, Protected_personal_identifiable_data_Flag, Protected_vehicle_identifiable_data_Flag, Protected_location__identifiabledata_Flag, and Protected object_identifiable_data_Flag indicate that information such as faces that can identify a person has been protected, that information such as license plates that can identify a vehicle or other means of transportation has been protected, that information such as the text or images on signs or storefronts from which a location can be inferred has been protected, and that information such as the text or images on products or objects from which a specific object can be inferred has been protected, respectively. A value of 1 means that protection has been applied to the corresponding information, and a value of 0 means that protection has not been applied to the corresponding information.

**[Table 120]**

| |
|---|
| Protected_personal_identifiable_data_Flag = ((Protected_info_idc& 0x01 ) > 0 ) ? 1 : 0 |
| Protected_vehicle_identifiable_data_Flag = ((Protected_info_idc & 0x02 ) > 0 ) ? 1 : 0 |
| Protected_location_identifiable_data_Flag = ((Protected_info_idc & 0x04 ) > 0 ) ? 1 : 0 |
| Protected_object_identifiable_data_Flag = ((Protected_info_idc & 0x08 ) > 0 ) ? 1 : 0 |

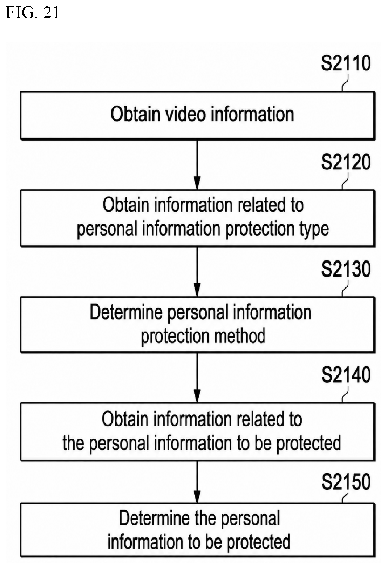

FIG. 21 is a diagram illustrating a decoding method according to an embodiment of the present disclosure.

The operations illustrated in FIG. 21 do not constitute essential components of the decoding method according to an embodiment, and at least some of the operations illustrated in FIG. 21 may be omitted or other operations not illustrated in FIG. 21 may be added.

The terms or names described in FIG. 21 (e.g., names of syntax elements or variables) are merely examples and do not limit the names of the corresponding syntax elements or variables. The technical features of the present disclosure are not limited to the terms described in FIG. 21. For example, the image information described in FIG. 21 may include various information according to the embodiments described in the present disclosure and may include information described in at least one of Tables 1 to 120.

The operations illustrated in FIG. 21 may be performed by a decoding apparatus including a memory and a processor electrically connected to the memory, and may be performed by, for example, the processor.

The decoding apparatus may obtain image information (S2110).

As one example, the processor of the decoding apparatus may obtain image information including privacy protection-related information.

The privacy protection-related information may take various forms or names, or may include information of various forms or names.

For example, the privacy protection-related information may be privacy_protection_info( ) or privacy_protection_cancel_flag included in privacy_protection_info( ). privacy_protection_info( ) may be defined within an encoded video/image bitstream, and the definition position may be at multiple locations within the bitstream as needed. privacy_protection_cancel_flag equal to 1 may indicate that the persistence of a previously applied privacy protection method is cancelled. When equal to 0, it indicates that the privacy protection method and scope identified by privacy_protection_persistence_flag and privacy_protection_typemay be applied.

As another example, the privacy protection-related information may be encoder_optimization _info( ) or optimization _typeor eoi_type included in encoder_optimization_info( ). encoder_optimization _info( ) defines the encoding optimization purpose, attributes, and scope of application, and privacy protection-related information may be defined as one of the optimization methods defined in encoder optimization_info( ). In addition, optimization _**type**or eoi_type indicates the attributes of the optimization method, and optimizationtype or eoi_type may indicate a plurality of optimization methods through a bitmask. For example, as privacy protection-related information, optimizationtype or eoi_type may indicate privacy protection optimization attributes.

The decoding apparatus may obtain privacy protection type information (S2120).

As one example, the processor of the decoding apparatus may obtain privacy protection type information indicating a privacy protection method, based on the privacy protection-related information.

The privacy protection type information may take various forms or names, or may include information of various forms or names.

For example, the privacy protection type information may be privacy_protection_typeincluded in privacy_protection_info( ). privacy_protection_typemay be information for expressing the attributes (or method) of the applied privacy protection. privacy_protection_typemay be in lookup table format or may indicate a privacy protection type by a bitwise AND with a bitmask.

As another example, the privacy protection type information may be privacy_protection_typeor eoi_privacy_protection_method_idc included in encoder_optimization _info( ). privacy_protection_typeor eoi_privacy_protection _method_idc may be information for expressing the attributes (or method) of the applied privacy protection. privacy_protection_typeor eoi_privacy_protection _method_idc may be in lookup table format or may indicate a privacy protection type by a bitwise AND with a bitmask.

The processor of the decoding apparatus may obtain privacy protection type information based on the privacy protection-related information.

For example, the privacy protection-related information may be privacy_protection__cancel_flag included in privacy_protection_info( ), and privacy protection type information may be obtained depending on the value of privacy_protection _cancel_flag. When the value of privacy_protection _cancel_flag is 0, privacy protection type information may be obtained, and when the value of privacy_protection_cancel_flag is 1, privacy protection type information may not be obtained.

As another example, the privacy protection-related information may be optimization _typeor eoi_type included in encoder optimization_info( ). Privacy protection type information may be obtained depending on the value of optimization _type or eoi_type. When the bitwise AND of the value of optimization type or eoi_type and the bitmask (e.g., 0x20) is equal to 1, privacy protection type information may be obtained, and when the bitwise AND of the value of optimization _typeor eoi_type and the bitmask (e.g., 0x20) is equal to 0, privacy protection type information may not be obtained.

The decoding apparatus may determine the privacy protection type (or method) (S2130).

As one example, the processor of the decoding apparatus may determine the privacy protection type (or method) based on the privacy protection type information.

The type (or method) of privacy protection may include blurring, which makes information in the personal information area unclear; replacing, which modifies the form of personal information so that it is identified as something different from the original; and masking, which masks the personal information area.

For example, the privacy protection type information may be privacy_protection_typeincluded in privacy_protection_info( ). privacy_protection_typemay be applied in lookup table format, and the privacy protection type, which is one of blurring, replacing, and masking, may be determined through the value of privacy_protection_type. In addition, privacy_protection_typemay indicate a privacy protection type by a bitwise AND with a bitmask, and the privacy protection type including at least one of blurring, replacing, and masking may be determined through the bitwise AND of the value of privacy_protection_typeand the bitmask.

As another example, the privacy protection type information may be privacy_protection_typeor eoi_privacy_protection _method_idc included in encoder_optimization _info( ). The privacy protection type, which is one of blurring, replacing, and masking, may be determined through the value of privacy_protection_typeor eoi_privacy_protection _method_idc. In addition, the privacy protection type including at least one of blurring, replacing, and masking may be determined through the bitwise AND of the value of privacy_protection_typeor eoi_privacy_protection _method_idc and the bitmask.

The decoding apparatus may obtain information on the subject to be protected (S2140).

As one example, the processor of the decoding apparatus may obtain information on the subject to be protected, which indicates protected personal information, based on the privacy protection-related information.

The information on the subject to be protected may take various forms or names, or may include information of various forms or names.

For example, the information on the subject to be protected may be Protected _info_idc included in privacy_protection_info( ). Protected _info_idc may indicate the attributes of data changed by privacy protection. Protected_info_idc may be in lookup table format or may indicate the information on the subject to be protected by a bitwise AND with a bitmask.

As another example, the information on the subject to be protected may be Protected _info_idc or eoi_privacy_info_**type** included in encoder_optimization_info( ). Protected _info_idc or eoi_privacy _info_**type**may indicate the attributes of data changed by privacy protection. Protected_info _idc or eoi_privacy _info_**type**may be in lookup table format or may indicate the information on the subject to be protected by a bitwise AND with a bitmask.

The processor of the decoding apparatus may obtain information on the subject to be protected based on the privacy protection-related information.

For example, the privacy protection-related information may be privacy_protection__cancel_flag included in privacy_protection_info( ), and information on the subject to be protected may be obtained depending on the value of privacy_protection _cancel_flag. When the value of privacy_protection _cancel_flag is 0, information on the subject to be protected may be obtained, and when the value of privacy_protection_cancel_flag is 1, information on the subject to be protected may not be obtained.

As another example, the privacy protection-related information may be optimization _typeor eoi_type included in encoder_optimization _info( ). Information on the subject to be protected may be obtained depending on the value of optimization _typeor eoi _type. When the bitwise AND of the value of optimization _typeor eoi_type and the bitmask (e.g., 0x20) is equal to 1, information on the subject to be protected may be obtained, and when the bitwise AND of the value of optimization _typeor eoi_type and the bitmask (e.g., 0x20) is equal to 0, information on the subject to be protected may not be obtained.

The decoding apparatus may determine the protected personal information (S2150).

As one example, the processor of the decoding apparatus may determine the protected personal information based on the information on the subject to be protected.

The protected personal information may include information that can identify a person (personal identification information), information that can identify a vehicle (vehicle identification information), or information that can identify a location (location identification information).

For example, the information on the subject to be protected may be Protected _info_idc included in privacy_protection_info( ). Protected _info_idc may be applied in lookup table format, and the protected personal information, which is one of personal identification information, vehicle identification information, or location identification information, may be determined through the value of Protected _info_idc. In addition, Protected _info_idc may indicate protected personal information by a bitwise AND with a bitmask, and the protected personal information including at least one of personal identification information, vehicle identification information, or location identification information may be determined through the bitwise AND of the value of Protected _info_idc and the bitmask.

As another example, the information on the subject to be protected may be Protected _info_idc or eoi_privacy_info_**type** included in encoder_optimization _info( ). The protected personal information, which is one of personal identification information, vehicle identification information, or location identification information, may be determined through the value of Protected_info_idc or eoi_privacy _info_type. In addition, the protected personal information including at least one of personal identification information, vehicle identification information, or location identification information may be determined through the bitwise AND of the value of Protected _info_idc or eoi_privacy _info_**type**and the bitmask.

As described above, the decoding apparatus may determine the method of protecting personal information included in a picture and the information that is protected. Here, the method of protecting personal information and the protected information may be used for the use and management of pictures.

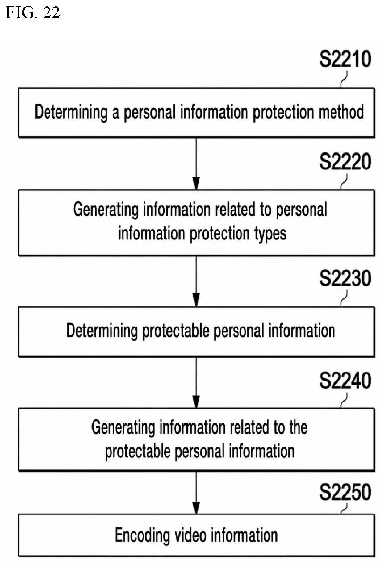

FIG. 22 is a diagram illustrating an encoding method according to an embodiment of the present disclosure.

The operations illustrated in FIG. 22 do not constitute essential components of the encoding method according to an embodiment, and at least some of the operations illustrated in FIG. 22 may be omitted or other operations not illustrated in FIG. 22 may be added.

The terms or names described in FIG. 22 (e.g., names of syntax elements or variables) are merely examples and do not limit the names of the corresponding syntax elements or variables. The technical features of the present disclosure are not limited to the terms described in FIG. 22. For example, the image information described in FIG. 22 may include various information according to the embodiments described in the present disclosure and may include information described in at least one of Tables 1 to 120.

The operations illustrated in FIG. 22 may be performed by a decoding apparatus including a memory and a processor electrically connected to the memory, and may be performed by, for example, the processor.

The encoding apparatus may determine the privacy protection type (or method) (S2210).

As one example, the encoding apparatus may determine the privacy protection type (or method) and apply privacy protection to a picture according to the privacy protection type (or method).

The type (or method) of privacy protection may include blurring, which makes information in the personal information area unclear; replacing, which modifies the form of personal information so that it is identified as something different from the original; and masking, which masks the personal information area.

The encoding apparatus may generate privacy protection type information (S2220).

As one example, the encoding apparatus may generate privacy protection type information based on the applied privacy protection type (or method).

The privacy protection type information may take various forms or names, or may include information of various forms or names. The privacy protection type information may be generated depending on whether the applied privacy protection type (or method) is blurring, replacing, or masking.

For example, the privacy protection type information may be privacy_protection_typeincluded in privacy_protection_info( ). privacy_protectiontype may be generated in lookup table format such that the privacy protection type, which is one of blurring, replacing, and masking, is determined through the value of privacy_protection_type. In addition, privacy_protection_typemay be generated such that the privacy protection type including at least one of blurring, replacing, and masking is determined through the bitwise AND of the value of privacy_protection_typeand the bitmask.

As another example, the privacy protection type information may be privacy_protection_typeor eoi_privacy_protection_method _idc included in encoder_optimization _info( ). privacy_protection_typeor eoi_privacy_protection_method _idc may be generated in lookup table format such that the privacy protection type, which is one of blurring, replacing, and masking, is determined through the value of privacy_protection_typeor eoi_privacy_protection_method _idc. privacy_protection_typeor eoi_privacy_protection _method_idc may be generated such that the privacy protection type including at least one of blurring, replacing, and masking is determined through the bitwise AND of the value of privacy_protection_typeor eoi_privacy_protection_method _idc and the bitmask.

The decoding apparatus may determine the protected personal information (S2230).

As one example, the encoding apparatus may determine the protected personal information and apply privacy protection to the protected personal information of a picture.

The protected personal information may include information that can identify a person (personal identification information), information that can identify a vehicle (vehicle identification information), or information that can identify a location (location identification information).

The encoding apparatus may generate information on the subject to be protected (S2240).

As one example, the encoding apparatus may generate information on the subject to be protected based on the personal information protected by privacy protection.

The information on the subject to be protected may take various forms or names, or may include information of various forms or names. The information on the subject to be protected may be generated depending on whether the information protected by privacy protection is personal identification information, vehicle identification information, or location identification information.

For example, the information on the subject to be protected may be Protected _info_idc included in privacy_protection_info( ). Protected _info_idc may be generated in lookup table format such that the protected personal information, which is one of personal identification information, vehicle identification information, or location identification information, is determined through the value of Protected _info_idc. In addition, Protected _info_idc may be generated such that the protected personal information including at least one of personal identification information, vehicle identification information, or location identification information is determined through the bitwise AND of the value of Protected _info_idc and the bitmask.

As another example, the information on the subject to be protected may be Protected _info_idc or eoi_privacy_info_**type** included in encoder optimization_info( ). Protected _info_idc or eoi_privacy _info_typemay be generated in lookup table format such that the protected personal information, which is one of personal identification information, vehicle identification information, or location identification information, is determined through the value of Protected _info_idc or eoi_privacy _info_type. Protected_info_idc or eoi_privacy _info_**type**may be generated such that the protected personal information including at least one of personal identification information, vehicle identification information, or location identification information is determined through the bitwise AND of the value of Protected _info_idc or eoi_privacy _info_**type**and the bitmask.

The encoding apparatus may encode image information (S2250).

As one example, the processor of the encoding apparatus may generate privacy protection-related information based on privacy protection type information and/or information on the subject to be protected, and may encode image information including the privacy protection type information, the information on the subject to be protected, and/or the privacy protection-related information.

The privacy protection-related information may take various forms or names, or may include information of various forms or names.

For example, the privacy protection-related information may be privacy_protection _info( ) or privacy_protection_cancel_flag included in privacy_protection_info( ). privacy_protection_info( ) may be defined within an encoded video/image bitstream, and the definition position may be at multiple locations within the bitstream as needed. privacy_protection _cancel_flag may be generated such that when equal to 1 it indicates that the persistence of a previously applied privacy protection method is cancelled and when equal to 0 it indicates that the privacy protection method and scope identified by privacy_protection_persistence_flag and privacy_protection_typemay be applied.

As another example, the privacy protection-related information may be encoder_optimization _info( ) or optimization _typeor eoi_type included in encoder_optimization _info( ). encoder_optimization _info( ) defines the encoding optimization purpose, attributes, and scope of application, and privacy protection-related information may be defined as one of the optimization methods defined in encoder_optimization _info( ). In addition, as privacy protection-related information, optimization _typeor eoi_type may be generated to be capable of indicating a plurality of optimization methods through a bitmask.

The image information may be converted into a bitstream and transmitted or transferred from the encoding apparatus to the decoding apparatus.

The processor of the transmission apparatus that transmits the bitstream may encode image information including privacy protection type information, information on the subject to be protected, and privacy protection-related information. The transmitter of the transmission apparatus may transmit data including the bitstream of the image information. Here, a privacy protection method including at least one of blurring, masking, and replacing may be determined, and privacy protection type information indicating the privacy protection method may be generated based on the privacy protection method. Protected personal information including at least one of information that can identify a person, information that can identify a vehicle, and information that can identify a location may be determined, and information on the subject to be protected indicating the protected personal information may be generated based on the protected personal information. In addition, privacy protection-related information may be generated based on the privacy protection type information and the information on the subject to be protected.

In the present disclosure, as one example, all names of the syntax elements described above are arbitrarily designated for clarity of explanation and do not limit the names of the corresponding syntax elements. In addition, each syntax element may also be referred to as information. In addition, syntax elements may be obtained from a bitstream but may also be derived by other syntax elements, and this is also included in the embodiments of the present disclosure.

In addition, a bitstream generated by an image encoding method may also be stored in a non-transitory computer-readable recording medium.

In addition, as another example, a bitstream generated by an image encoding method may be transmitted to another apparatus (e.g., an image decoding apparatus, etc.). In this case, the method of transmitting the bitstream may include a process of transmitting the bitstream.

The exemplary methods of the present disclosure are expressed as a series of operations for clarity of explanation, but this is not intended to limit the order in which the steps are performed, and if necessary, each step may be performed simultaneously or in a different order. In order to implement the method according to the present disclosure, additionally other steps may be included in addition to the steps illustrated, the remaining steps may be included excluding some steps, or additional other steps may be included excluding some steps.

In the present disclosure, an image encoding apparatus or an image decoding apparatus that performs a certain operation (step) may perform an operation (step) of checking the conditions or circumstances under which the corresponding operation (step) is to be performed. For example, when it is described that a certain operation is performed when a certain condition is satisfied, the image encoding apparatus or image decoding apparatus may perform an operation of checking whether the certain condition is satisfied, and then perform the certain operation.

The various embodiments of the present disclosure are not intended to enumerate all possible combinations but are intended to describe representative aspects of the present disclosure, and the matters described in the various embodiments may be applied independently or in combination of two or more.

The embodiments described in the present disclosure may be implemented and performed on a processor, microprocessor, controller, or chip. For example, the functional units illustrated in each drawing may be implemented and performed on a computer, processor, microprocessor, controller, or chip. In this case, information for implementation (e.g., information on instructions) or algorithms may be stored in a digital storage medium.

In addition, the decoder (decoding apparatus) and encoder (encoding apparatus) to which the embodiment(s) of the present disclosure are applied may be included in multimedia broadcast transmission/reception apparatuses, mobile communication terminals, home cinema video apparatuses, digital cinema video apparatuses, surveillance cameras, video conversation apparatuses, real-time communication apparatuses such as video communication apparatuses, mobile streaming apparatuses, storage media, camcorders, video-on-demand (VoD) service providing apparatuses, over-the-top (OTT) video apparatuses, Internet streaming service providing apparatuses, three-dimensional (3D) video apparatuses, virtual reality (VR) apparatuses, augmented reality (AR) apparatuses, video phone video apparatuses, vehicle terminals (e.g., vehicle (including autonomous vehicle) terminals, robot terminals, aircraft terminals, ship terminals, etc.), and medical video apparatuses, and may be used to process video signals or data signals. For example, OTT video apparatuses may include game consoles, Blu-ray players, Internet-connected TVs, home theater systems, smartphones, tablet PCs, digital video recorders (DVRs), and the like.

In addition, the processing methods to which the embodiment(s) of the present disclosure are applied may be produced in the form of a program executed by a computer and may be stored in a computer-readable recording medium. Multimedia data having a data structure according to the embodiment(s) of the present disclosure may also be stored in a computer-readable recording medium. The computer-readable recording medium includes all types of storage devices and distributed storage devices in which computer-readable data is stored. The computer-readable recording medium may include, for example, Blu-ray discs (BD), universal serial bus (USB), ROM, PROM, EPROM, EEPROM, RAM, CD-ROM, magnetic tape, floppy disks, and optical data storage devices. In addition, the computer-readable recording medium includes media implemented in the form of carrier waves (e.g., transmission over the Internet). In addition, a bitstream generated by an encoding method may be stored in a computer-readable recording medium or transmitted through a wired or wireless communication network.

In addition, the embodiment(s) of the present disclosure may be implemented as a computer program product using program code, and the program code may be executed on a computer according to the embodiment(s) of the present disclosure. The program code may be stored on a computer-readable carrier.

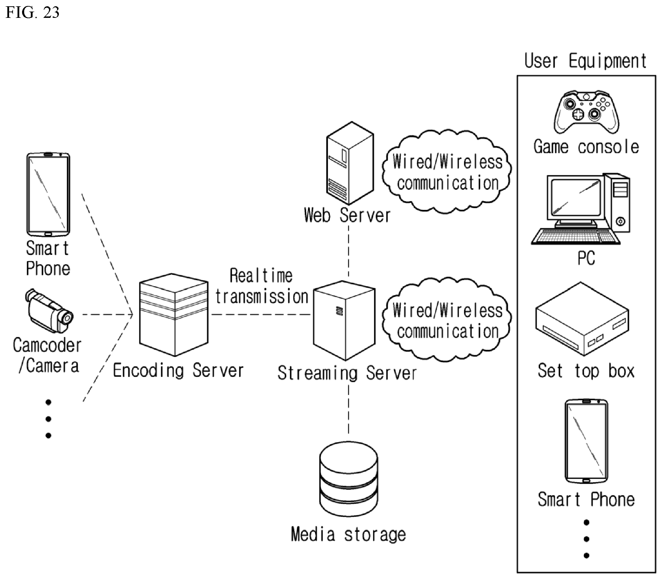

FIG. 23 is a diagram showing an example of a content streaming system to which embodiments of the present disclosure may be applied.

Referring to FIG. 23, the content streaming system to which an embodiment of the present disclosure is applied may broadly include an encoding server, a streaming server, a web server, a media storage, a user device, and a multimedia input device.

An encoding server compresses content input from multimedia input devices such as a smartphone, camera, or camcorder into digital data, generating a bitstream and transmitting it to a streaming server. As another example, when multimedia input devices such as a smartphone, camera, or camcorder directly generate a bitstream, an encoding server may be omitted.

A bitstream may be generated by an image encoding method and/or an image encoding apparatus to which an embodiment of the present disclosure is applied, and a streaming server may temporarily store a bitstream during the process of transmitting or receiving a bitstream.

A streaming server may transmit multimedia data to a user device based on a user request through a web server, and a web server may serve as an intermediary that informs a user of available service. When a user requests a desired service from a web server, a web server may send it to a streaming server, and a streaming server may transmit multimedia data to a user. In this case, a content streaming system may include a separate control server, and in this case, a control server may function to control a command/a response between devices within a content streaming system.

A streaming server may receive a content from a media storage and/or an encoding server. For example, when receiving a content from an encoding server, a content may be received in real time. In this case, to provide a seamless streaming service, a streaming server may store a bitstream for a certain period of time.

Examples of a user device may include a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (i.e., a smartwatch, a smart glass, a head-mounted display (HMD)), a digital TV, a desktop computer, a digital signage, etc.

Each server within a content streaming system may be operated as a distributed server, in which case data received by each server may be processed in a distributed manner.

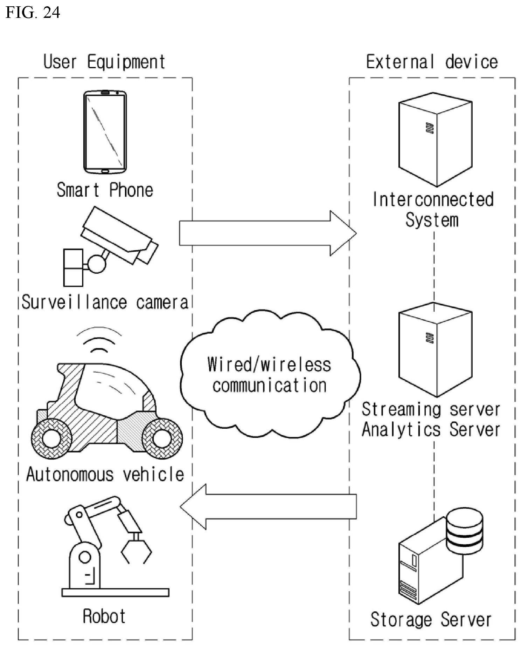

FIG. 24 is a diagram showing another example of a content streaming system to which embodiments of the present disclosure may be applied.

Referring to FIG. 24, in an embodiment such as VCM, a task may be performed by a user terminal or a task may be performed by an external device (e.g., a streaming server, an analysis server, etc.) according to the performance of a device, a user's request, the characteristics of a task to be performed, etc. In this way, in order to transmit information necessary for performing a task to an external device, a user terminal may generate directly or through an encoding server a bitstream including information necessary for performing a task (e.g., information such as a task, a neural network and/or usage).

An analysis server may perform a task requested by a user after decoding encoded information transmitted from a user terminal (or, from an encoding server). An analysis server may transmit a result obtained by performing a task to a user terminal again or to another linked service server (e.g., a web server). For example, an analysis server may transmit a result obtained by performing a task for determining a fire to a firefighting-related server. An analysis server may include a separate control server, in which case a control server may play a role in controlling a command/a response between each device associated with an analysis server and a server. In addition, an analysis server may request desired information from a web server based on information about a task that a user device wants to perform and a task that a user device may perform. When an analysis server requests a desired service from a web server, a web server may transmit it to an analysis server, and an analysis server may transmit data therefor to a user terminal. In this case, the control server of a content streaming system may play a role in controlling a command/a response between each device within a streaming system.

### [Industrial Applicability]

An embodiment according to the present disclosure may be used to encode/decode a feature/a feature map.

## Claims

1. A method of decoding image information, the method comprising:
obtaining image information including privacy protection-related information;
obtaining, based on the privacy protection-related information, privacy protection type information indicating a privacy protection method;
determining, based on the privacy protection type information, a privacy protection method including at least one of blurring, masking, or replacing;
obtaining, based on the privacy protection-related information, information on a subject to be protected indicating protected personal information; and
determining, based on the information on the subject to be protected, protected personal information including at least one of information that can identify a person, information that can identify a vehicle, or information that can identify a location.

2. The method of claim 1, wherein
obtaining the privacy protection type information based on the privacy protection-related information comprises obtaining the privacy protection type information based on a bitwise AND of a value of the privacy protection-related information and a predetermined first bitmask, and
obtaining the information on the subject to be protected based on the privacy protection-related information comprises obtaining the information on the subject to be protected based on a bitwise AND of the value of the privacy protection-related information and the first bitmask.

3. The method of claim 1, wherein
the privacy protection-related information includes a privacy protection flag,
obtaining the privacy protection type information based on the privacy protection-related information comprises obtaining the privacy protection type information based on a value of the privacy protection flag, and
obtaining the information on the subject to be protected based on the privacy protection-related information comprises obtaining the information on the subject to be protected based on the value of the privacy protection flag.

4. The method of claim 1, wherein determining the privacy protection method based on the privacy protection type information comprises determining the privacy protection method as at least one of blurring, masking, or replacing, based on a bitwise AND of a value of the privacy protection type information and a predetermined second bitmask.

5. The method of claim 1, wherein determining the protected personal information based on the information on the subject to be protected comprises determining the protected personal information as at least one of the information that can identify a person, the information that can identify a vehicle, or the information that can identify a location, based on a bitwise AND of a value of the information on the subject to be protected and a predetermined third bitmask.

6. The method of claim 1, further comprising:
obtaining copyright information indicating copyright information relating to a picture; and
obtaining license information indicating a permitted scope of use of the picture.

7. The method of claim 5, wherein the permitted scope of use includes at least one of academic use, non-commercial use, commercial use, and free use.

8. A method of encoding image information, the method comprising:
determining a privacy protection method including at least one of blurring, masking, or replacing;
generating privacy protection type information indicating the privacy protection method based on the privacy protection method;
determining protected personal information including at least one of information that can identify a person, information that can identify a vehicle, or information that can identify a location;
generating, based on the protected personal information, information on a subject to be protected indicating the protected personal information;
generating privacy protection-related information based on the privacy protection type information and the information on the subject to be protected; and
encoding image information including the privacy protection type information, the information on the subject to be protected, and the privacy protection-related information.

9. A method of transmitting a bitstream of image information, the method comprising:
encoding the image information including privacy protection type information, information on a subject to be protected, and privacy protection-related information; and
transmitting data including the bitstream of the image information,
wherein a privacy protection method including at least one of blurring, masking, or replacing is determined, and the privacy protection type information indicating the privacy protection method is generated based on the privacy protection method,
wherein protected personal information including at least one of information that can identify a person, information that can identify a vehicle, or information that can identify a location is determined, and the information on the subject to be protected indicating the protected personal information is generated based on the protected personal information, and
wherein the privacy protection-related information is generated based on the privacy protection type information and the information on the subject to be protected.
